(19) Europäisches Patentamt
European Patent Office
Office européen des brevets

(11) EP 4 667 535 A1

(12) **EUROPEAN PATENT APPLICATION**

(43) Date of publication:
**24.12.2025 Bulletin 2025/52**

(21) Application number: **24182481.2**

(22) Date of filing: **17.06.2024**

(51) International Patent Classification (IPC):
***C09B 23/01*** *(2006.01)* ***C09B 23/10*** *(2006.01)*
***G02F 1/361*** *(2006.01)*

(52) Cooperative Patent Classification (CPC):
**C09B 23/0066; C09B 23/0033; C09B 23/10; C09B 69/008; G02F 1/3611; G02F 1/3613; G02F 1/3615**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **SilOriX GmbH**
  **76131 Karlsruhe (DE)**
- **Karlsruher Institut für Technologie**
  **76131 Karlsruhe (DE)**

(72) Inventor:
- **The inventors have waived their right to be thus mentioned.**

(74) Representative: **Eisenführ Speiser**
**Patentanwälte Rechtsanwälte PartGmbB**
**Gollierstraße 4**
**80339 München (DE)**

(54) **NONLINEAR OPTICAL DYES WITH IMPROVED STABILITY**

(57) The present invention primarily relates to a compound of formula (I) as defined herein and to a mixture comprising or consisting of one or more compound(s) of formula (I) as defined herein and optionally one or more host material(s). Moreover, the present invention relates to the compounds of formula (II) to (VIII) as defined herein and to further specific compounds as defined herein. The present invention also relates to an electro-optic film and an electro-optic modulator-device as defined herein and to a method for manufacturing an electro-optic modulator-device comprising or consisting of the steps as defined herein. Lastly, the present invention relates to the use of a compound of formula (I) or of a mixture as defined herein or of an electro-optic film as defined herein or of an electro-optic modulator-device as defined or as manufactured herein in a field selected from the group consisting of nonlinear optics, Mach-Zehnder modulators, silicon organic hybrid electro-optic modulators, materials for devices or arrangements for the control of the intensity, color, phase, polarization or direction of light arriving from an independent light source, preferably switching, gating, or modulating, photonic communication networks, optical data transmission, preferably in 6G applications, phased array radars, satellite and fiber telecommunications, cable television (CATV), optical gyroscopes for application in aerial and missile guidance, electronic counter measure (ECM) systems, backplane interconnects for high-speed computation, ultra-quick analog-to-digital conversion, land mine detection, radio frequency photonics, programmable photonics, cryo-communications, quantum computing, spatial light modulation, and all-optical (light-switching-light) signal processing.

EP 4 667 535 A1

## Description

The present invention primarily relates to a compound of formula (I) as defined herein and to a mixture comprising or consisting of one or more compound(s) of formula (I) as defined herein and optionally one or more host material(s). Moreover, the present invention relates to the compounds of formula (II) to (VIII) as defined herein and to further specific compounds as defined herein. The present invention also relates to an electro-optic film and an electro-optic modulator-device as defined herein and to a method for manufacturing an electro-optic modulator-device comprising or consisting of the steps as defined herein. Lastly, the present invention relates to the use of a compound of formula (I) or of a mixture as defined herein, or of an electro-optic film as defined herein, or of an electro-optic modulator-device as defined or as manufactured herein, in a field selected from the group consisting of nonlinear optics, Mach-Zehnder modulators, silicon organic hybrid electro-optic modulators, materials for devices or arrangements for the control of the intensity, color, phase, polarization or direction of light arriving from an independent light source, preferably switching, gating, or modulating, photonic communication networks, optical data transmission, preferably in 6G applications, phased array radars, satellite and fiber telecommunications, cable television (CATV), optical gyroscopes for application in aerial and missile guidance, electronic counter measure (ECM) systems, backplane interconnects for high-speed computation, ultra-quick analog-to-digital conversion, land mine detection, radio frequency photonics, programmable photonics, cryo-communications, quantum computing, spatial light modulation, and all-optical (light-switching-light) signal processing.

Further aspects of the present invention will arise from the description below, in particular from the examples, as well as from the attached patent claims.

As described in US 6,067,186 by L. Dalton et al., many different materials have been proposed for use in electro-optic devices in the past. Electro-optic materials contain highly polarizable electrons. When an electric field is applied to these materials, the electron polarization changes significantly resulting in an increase in index of refraction and a decrease in the velocity of light passing through the materials. This electric field-dependent material index of refraction can be used to impose electric signals onto optical signals, to switch optical signals in a local area network, or to steer a beam of light.

For an organic dye to be useful for processing into a hardened polymeric electro-optic material, the chromophore of the dye should possess large molecular optical nonlinearity, should exhibit a small optical absorption coefficient (optical loss) at the intended operating wavelength, and the dye should possess sufficient chemical and thermal stability. Once a dye of appropriate optical nonlinearity, optical absorption, and stability has been identified, the material can be processed into a hardened polymeric material containing acentrically aligned chromophores. The hardened material can then be translated, e.g. by reactive ion etching or photolithography, into buried channel waveguide structures which can be integrated with appropriate drive electronics and silica fiber transmission lines (cf. L. Dalton et al., Chemistry of Materials 1995, 7(6), 1060). To better withstand processing conditions (the deposition of metal electrodes) and operational conditions, chromophore-containing polymer materials can be hardened subsequent to electric field poling to withstand temperatures of 90 °C or more.

The CLD chromophore shown in **Scheme 1** below has been discovered in 2000 as an organic nonlinear optical chromophore by the research group of L. Dalton.

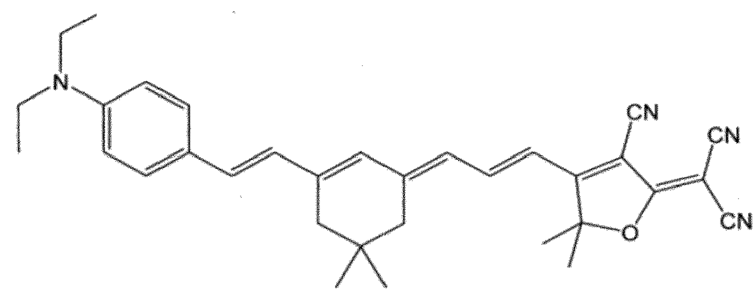

**Scheme 1:** CLD chromophore

It is described in US 6,067,186 as a material that does not suffer from the same limitations as the previously used inorganic materials such as lithium niobate. Lithium niobate has a high dielectric constant which results in a velocity mismatch of electric and optical waves propagating in the material. This mismatch necessitates a short interaction length, making the reduction of drive voltage by increasing device length unfeasible, and limits the bandwidth of the device.

The first significant improvement of organic nonlinear optical chromophores has been patented by Lockheed Martin in US 7,084,283, which discloses a CFs-substituted tricyanofurane (TCF) acceptor group.

Most nonlinear optical dyes form molecular glasses in the solid state and do not crystallize. Thus, an important

property of the materials is the glass transition temperature ($T_g$), which defines the temperature after which the viscosity of the glass decreases with increasing temperature and hence signifies a kinetic transition point at which the dyes become mobile in the amorphous solid. The $T_g$ determines the temperature at which the material can be poled and it determines the persistence of the poled state, i.e. the non-centrosymmetric arrangement of the chromophores, with regard to thermal stress. To efficiently maintain the poled state of the material at an operating temperature of 85°C or above, a $T_g$ of 150°C or higher is generally preferred. In CLD-derived dyes (cf. **Scheme 1** above), the accessible $T_g$ is limited by a thermal decomposition of such dyes, which is typically takes place in the range of 180 to 240°C. A means to increase $T_g$ described in the prior art is e.g. the attachment of bulky and rigid groups, such as adamantyl groups, to the chromophores. Lightwave Logic Inc., for instance, have disclosed CLD-type dyes substituted with adamantyl groups at different sites in US 2021/0405504 A1.

Moreover, a significant improvement of the poling efficiency was achieved by introducing 2-tert-butyldiphenyl-siloxy-ethyl groups at the nitrogen of the phenylamine donor side of CLD-type chromophores (cf. J. Mater. Chem., 2012, 22, 16390). This bulky siloxy group is employed, for example, in NLM Photonics' standard, the JRD1 dye, as shown in Scheme 2 below.

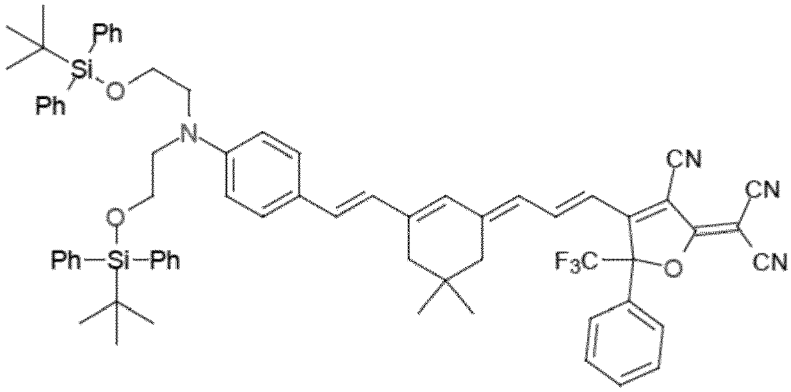

**Scheme 2:** JRD1 dye

However, to date, the remaining issue of the stability of nonlinear optical dyes with regard to degradation by oxygen under illumination has never been solved. Since it is very difficult and costly to exclude oxygen during the production process of electro-optic modulators, oxygen stability of the dyes is an important requirement for the long-term stability of these devices.

US 7,902,322 B2 discloses nonlinear optical chromophores with stabilizing substituents that comprise a substituent center atom directly bonded to at least three aryl groups and electro-optic devices, which show improved thermal and temporal stability, i.e. higher $T_g$ values. US 6,616,865 B1 with the title *"Sterically stabilized second-order nonlinear optical chromophores with improved stability and devices incorporating the same"* refers to a stabilization of polyene chromophores with regard to cis-trans-isomerization. The negative influence of oxygen is pointed out, but the problem is solved in this publication by hermetically packaging the electro-optic device in a container filled with inert gas.

Therefore, it was an object of the present invention to provide nonlinear optical dyes with improved stability towards oxygen degradation under illumination.

Further objects underlying the present invention follow from the description below and the present patent claims.

According to a first aspect of the present invention, the stated object is achieved by a compound, preferably a nonlinear optical dye, of formula (I)

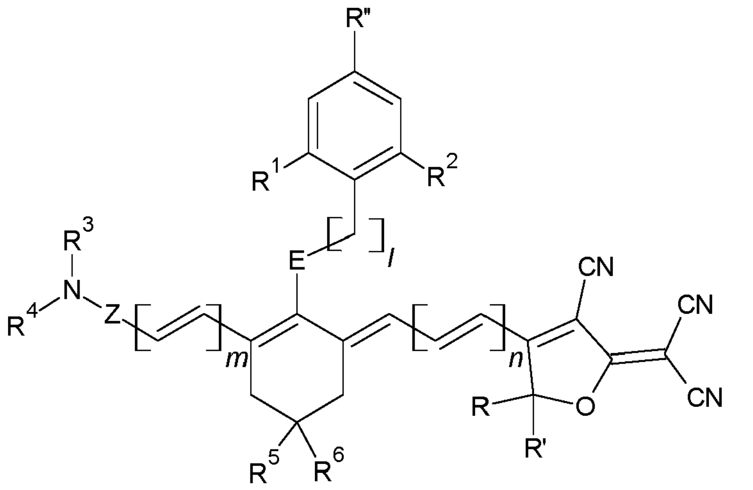

(I),

wherein

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is selected from the group consisting of H and linear C1-C4 alkyl residues, preferably R" is H or a methyl residue, more preferably R" is H.

R' and $R^2$ are independently selected from the group consisting of linear, cyclic and branched C1-C10 alkyl residues, and additionally, if l = 1, then one or both of $R^1$ and $R^2$ can be H,

$R^3$ and $R^4$ are independently selected from the group consisting of

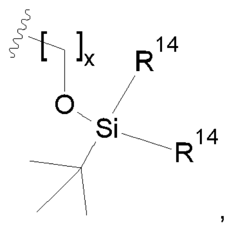

,

wherein x is 2 to 6, preferably x is 2, 3, 4, 5 or 6, more preferably is 2, and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

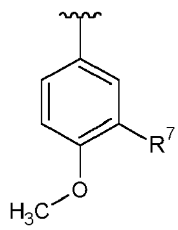

,

and

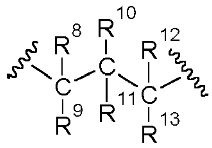

forming a 6-membered ring structure by also being connected to a carbon atom of Z that is vicinal to the carbon atom that is part of the N-Z-bond,

wherein $R^7$ is selected from the group consisting of linear, cyclic and branched C5-C10 alkyl residues,

$R^8$ to $R^{13}$ are independently selected from the group consisting of H and linear and branched C1-C4 alkyl residues, preferably $R^8$ to $R^{13}$ are independently selected from the group consisting of H and methyl,

$R^5$ and $R^6$ are independently selected from the group consisting of H, methyl, and tert-butyl, or both of $R^5$ and $R^6$ are part of a fluorene moiety,

l is 0 or 1,

m is 0, 1, or 2,

n is 0, 1, or 2,

$$m + n \leq 3,$$

E represents one or more heteroatom(s),

Z is selected from the group consisting of substituted or non-substituted phenyl, thienyl, and bithienyl, preferably Z is a (non-substituted) phenyl ring, and

optionally wherein one or more of the hydrogens of the compound of formula (I) is/are replaced by deuterium.

As mentioned above, it is very difficult and costly to exclude oxygen during the production process of electro-optical modulators, especially on a large industrial production scale. Therefore, (high) oxygen stability of the nonlinear optical dyes used in the modulators is a requirement for improved long-term stability of these devices. It was surprisingly found during the studies underlying the present invention that the compounds of formula (I) according to the present invention display excellent stability against degradation by oxygen during illumination. It was found that $R^1$ and $R^2$ can act as protective groups for the polyene chain and considerably decrease the reactivity of the compounds of formula (I) with oxygen during illumination, thus reducing the oxygen degradation rate. If l is 1, then even one or both of $R^1$ and $R^2$ of the compound of formula (I) can be H. In the prior art, to the contrary, the polyene chain of the chromophore is not sterically protected and thus oxygen can attack the polyene chain (cf. also sections 14 and 15 of the examples further below).

Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl.

According to a preferred embodiment of the compound of formula (I), $R^1$ and $R^2$ are the same. More preferably, both of $R^1$ and $R^2$ are methyl or isopropyl.

The $R^{14}$ residues of the compound of formula (I) according to the invention can be the same or different, preferably are the same. Preferably, all $R^{14}$ residues are either methyl or phenyl.

Within the framework of the present text, the terms "cyclic alkyl residues" and "cycloalkyl residues" include *inter alia* monocyclic, bridged monocyclic, bicyclic, and bridged bicyclic cyclic alkyl / cycloalkyl residues.

According to a preferred embodiment, when both of $R^5$ and $R^6$ are part of a fluorene moiety, the compound of formula (I) has the following structure (I')

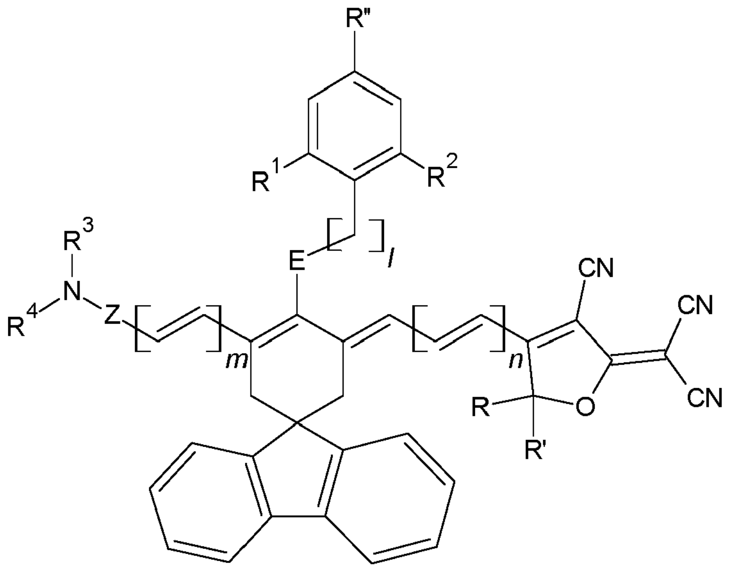

(I')

with the definitions of R, R', R", R', $R^2$, $R^3$, $R^4$, E, Z, l, m, and n being the same as defined herein for the compound of formula (I). The compound of formula (I') is a specific embodiment of the compound of formula (I).

According to a preferred embodiment, the compound of formula (I) is a compound of formula (Ia)

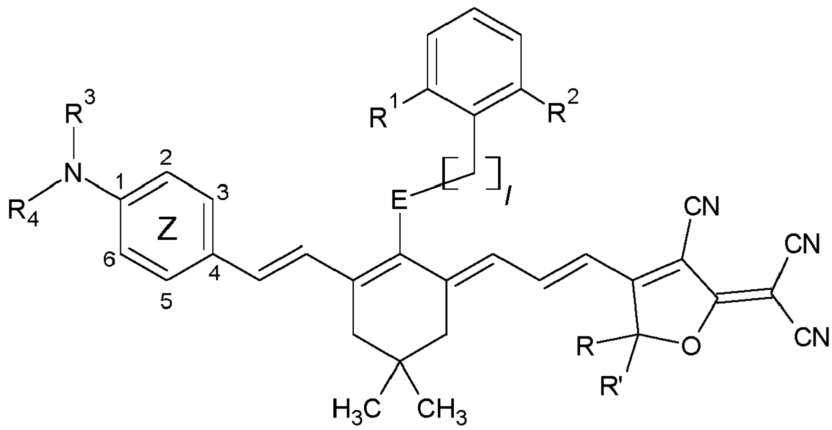

(Ia)

wherein

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

$R^1$ and $R^2$ are independently selected from the group consisting of linear, cyclic and branched C1-C10 alkyl residues, and additionally, if l = 1, then one or both of $R^1$ and $R^2$ can be H,

$R^3$ and $R^4$ are independently selected from the group consisting of

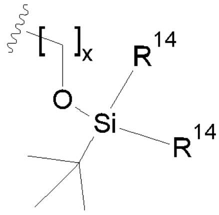

,

wherein x is 2 to 6, preferably x is 2, 3, 4, 5 or 6, more preferably x is 2, and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

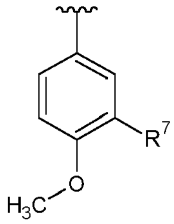

,

and

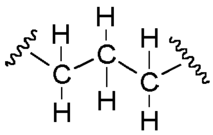

forming a 6-membered ring structure by also being connected to position 2 or 6 of phenyl ring Z,

wherein $R^7$ is selected from the group consisting of linear, cyclic and branched C5-C10 alkyl residues,

I is0 or1, and

E represents one or more heteroatom(s), and

optionally one or both of the positions 3 and 5 of phenyl ring Z can be substituted with residues independently selected from the group consisting of C1-C8 linear and branched alkyl, C1-C12 linear and branched alkoxy, an arylalkoxy residue, a trialkylsilyloxyalkoxy residue, an aryldialkylsilyloxyalkoxy residue, and an alkyldiarylsilyloxyalkoxy residue.

The compound of formula (Ia) represents a preferred embodiment of the compound of formula (I), i.e. also is a compound of formula (I).

Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl.

According to a preferred embodiment of the compound of formula (Ia), $R^1$ and $R^2$ are the same. More preferably, both of $R^1$ and $R^2$ are methyl or isopropyl.

The $R^{14}$ residues of the compound of formula (Ia) according to the invention can be the same or different, preferably are the same. Preferably, all $R^{14}$ residues are either methyl or phenyl.

Preferably, the C1-C8 branched alkyl residue, if present in one or both of the positions 3 and 5 of phenyl ring Z of the compound of formula (Ia), is branched at the 2$^{nd}$ carbon atom from the phenyl bond.

According to another preferred embodiment of the compound of formula (I) according to the invention

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 1,

E is S, and

$R^3$ and $R^4$ both are

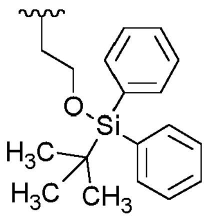

,

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 1,

E is O, and

$R^3$ and $R^4$ both are

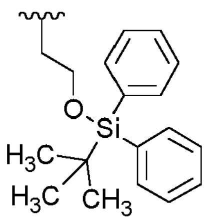

,

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are H,

I is 1,

E is S, and

$R^3$ and $R^4$ both are

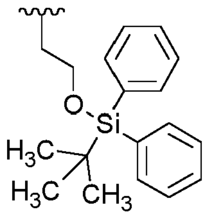

,

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 0,

E is S, and

$R^3$ and $R^4$ both are

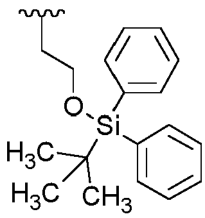

,

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are methyl,

I is 0,

E is S, and

$R^3$ and $R^4$ both are

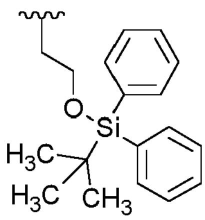

,

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 0,

E is S,

$R^3$ is

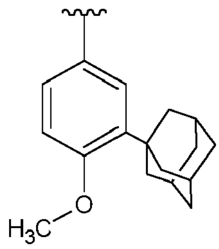

,

and

$R^4$ is

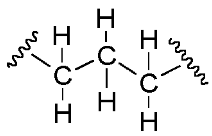

forming a 6-membered ring structure by also being connected to a carbon atom of Z that is vicinal to the carbon atom that is part of the N-Z-bond, or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are methyl,

I is 0,

E is S,

$R^3$ is

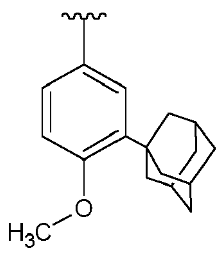

,

and

$R^4$ is

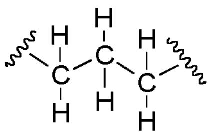

forming a 6-membered ring structure by also being connected to a carbon atom of Z that is vicinal to the carbon atom that is part of the N-Z-bond, or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 0,

E is S,

$R^3$ is

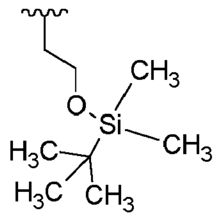

,

and

$R^4$ is

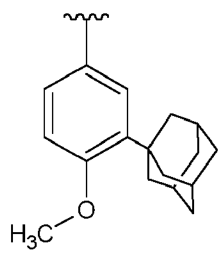

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are isopropyl,

I is 0,

E is S,

$R^3$ is

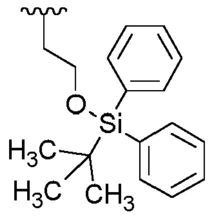

,

and

$R^4$ is

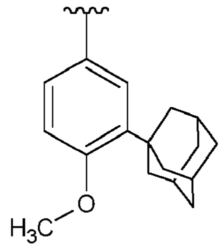

or

R is selected from the group consisting of phenyl, biphenyl, 4-cyanophenyl and 4-(tert-butyl)cyclohexyl,

R' is $CF_3$ or $CH_3$, and additionally, if R is 4-(tert-butyl)cyclohexyl), then R' can be phenyl,

R" is H,

R' and $R^2$ both are methyl,

I is 0,

E is S,

$R^3$ is

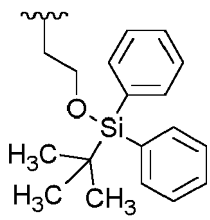

,

and

$R^4$ is

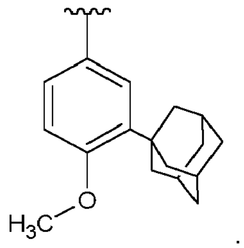

According to a preferred embodiment of the compound of formula (I) according to the present invention, $R^5$ and $R^6$ either both are methyl or both are part of a fluorene moiety.

According to a particularly preferred embodiment, the compound of formula (I) is a compound selected from the group consisting of

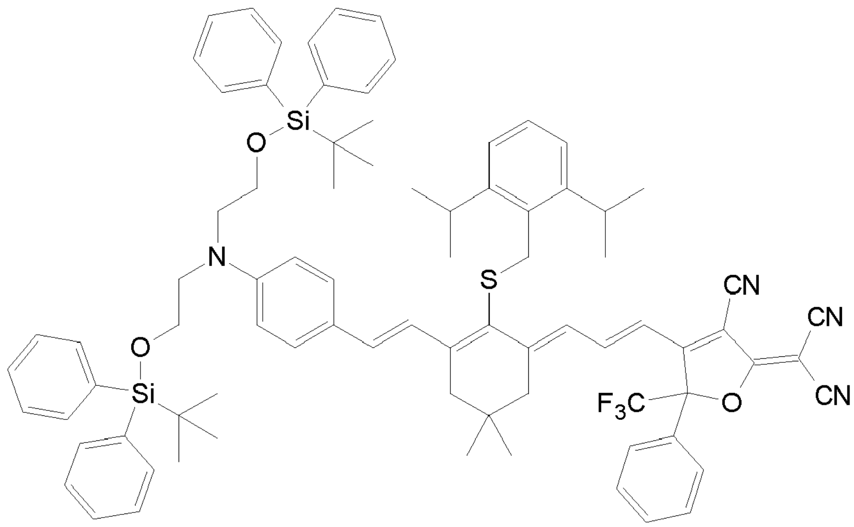

(I-1)

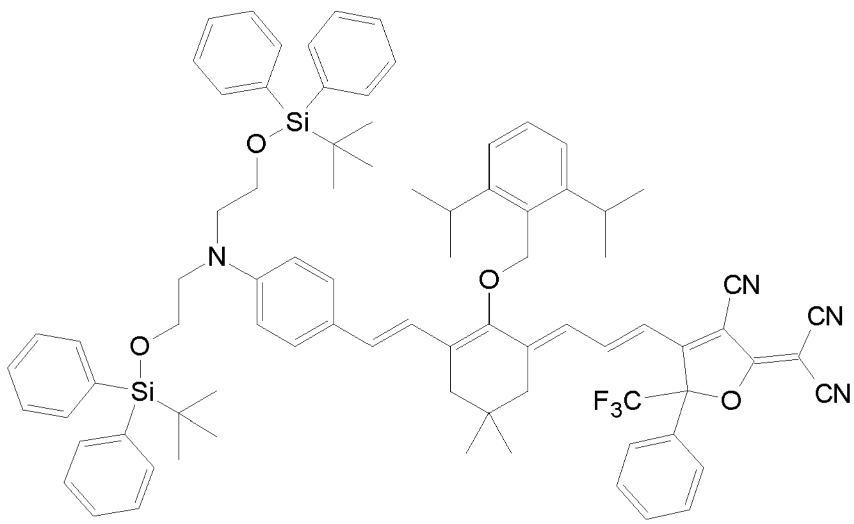

(I-2)

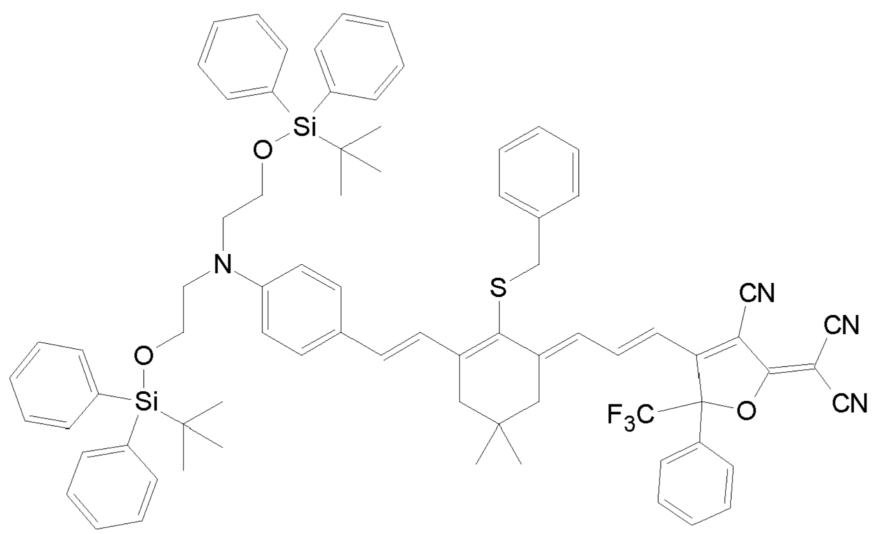

(I-3)

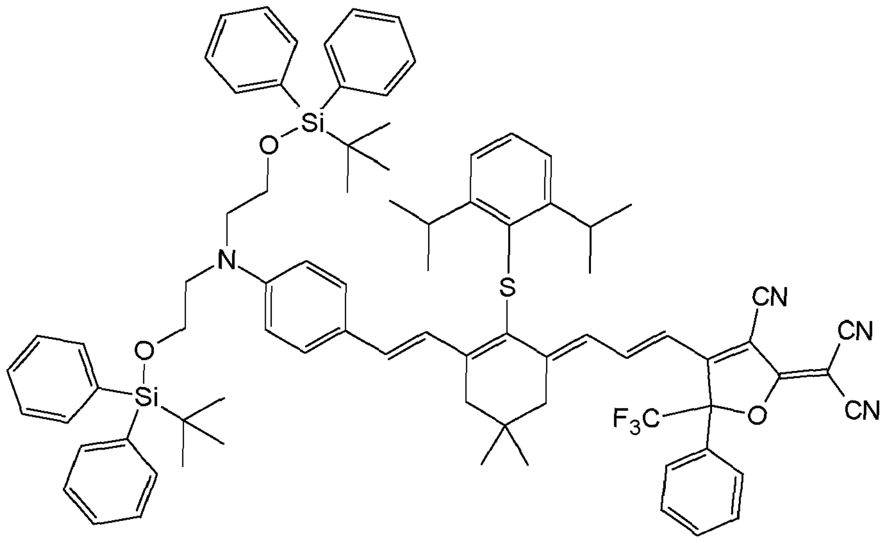

(I-4)

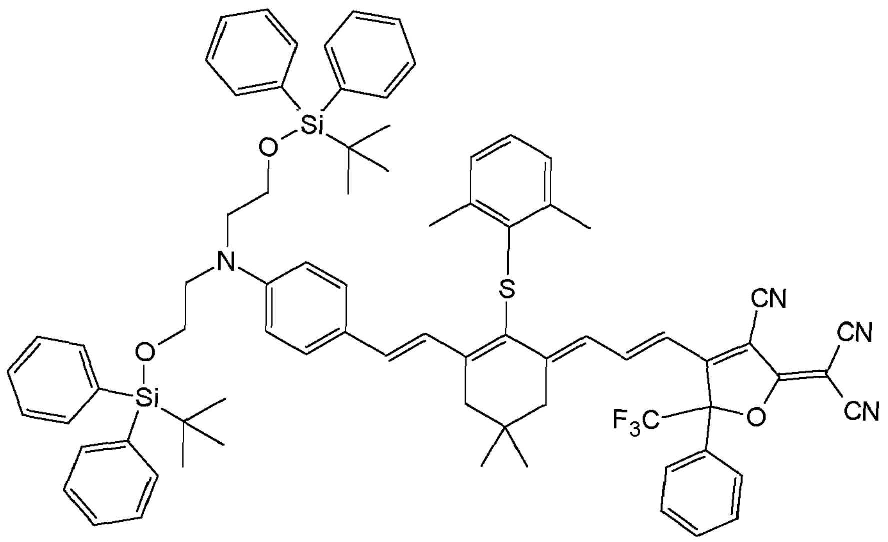

(I-5)

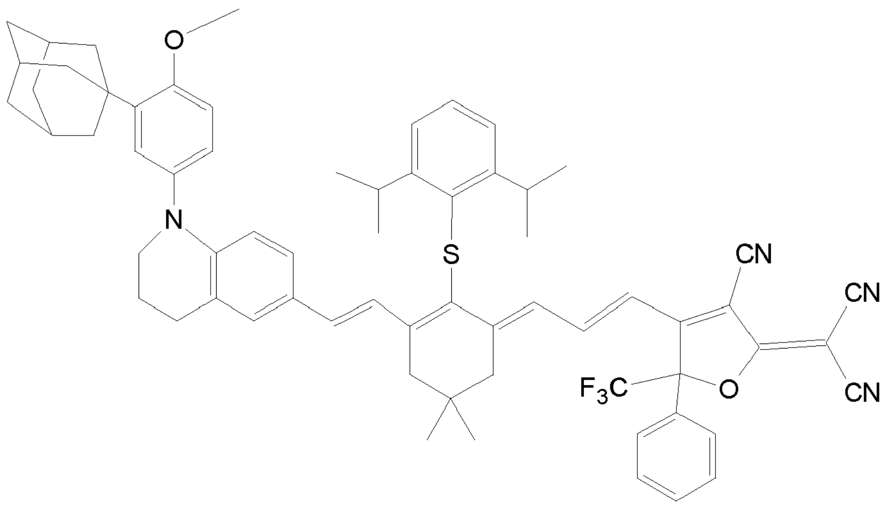

(I-6)

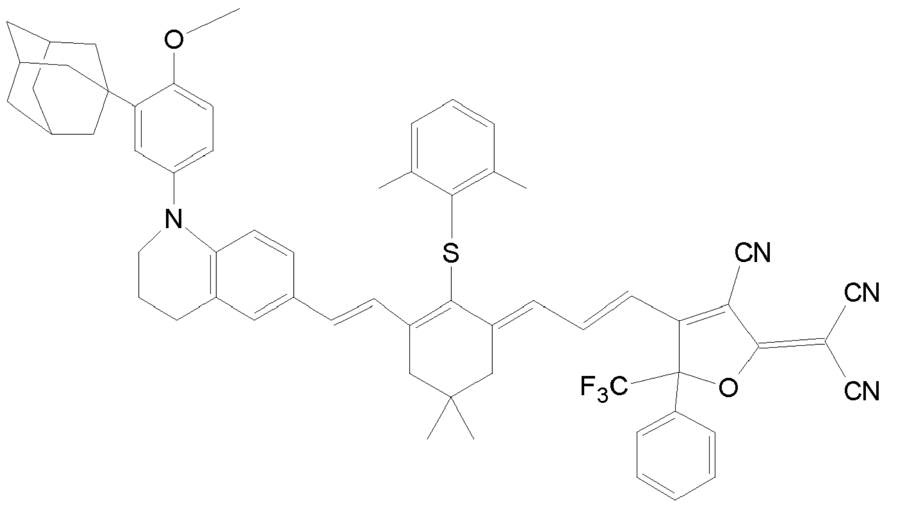

(I-7)

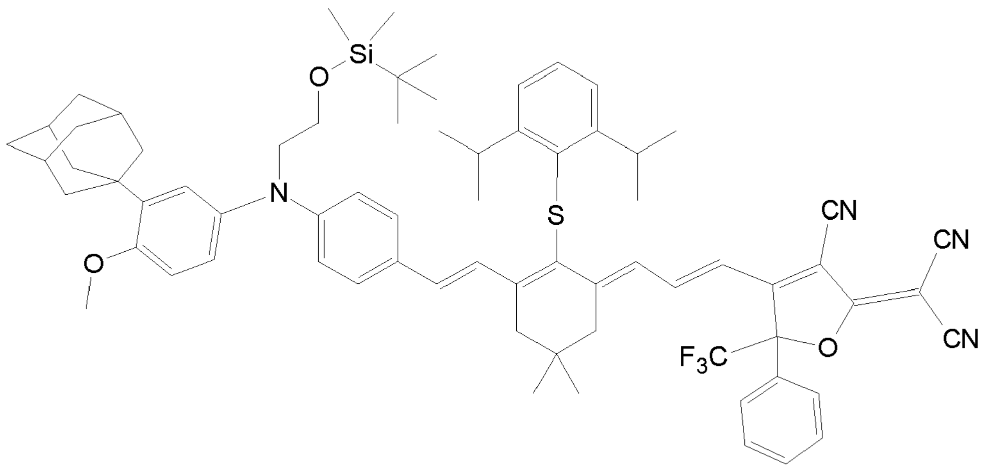

(I-8)

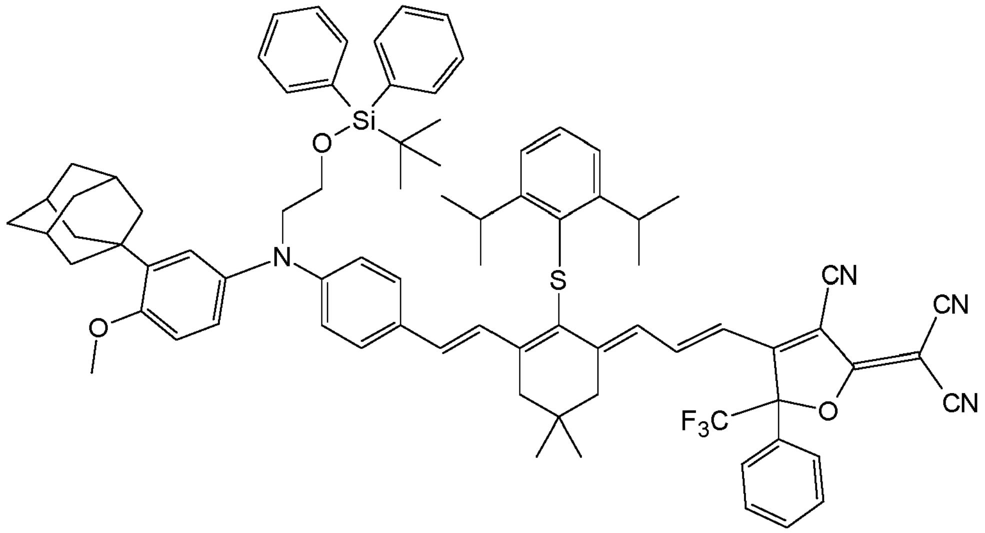

(I-9)

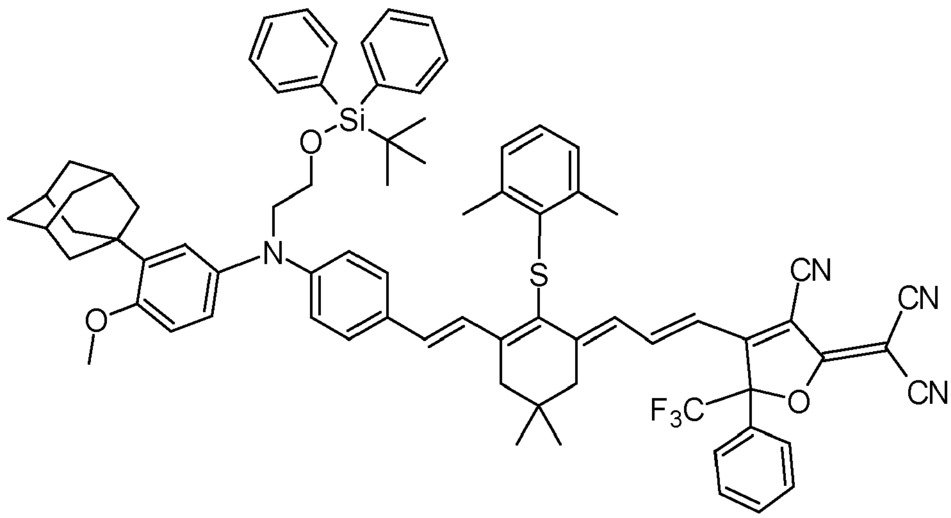

(I-10)

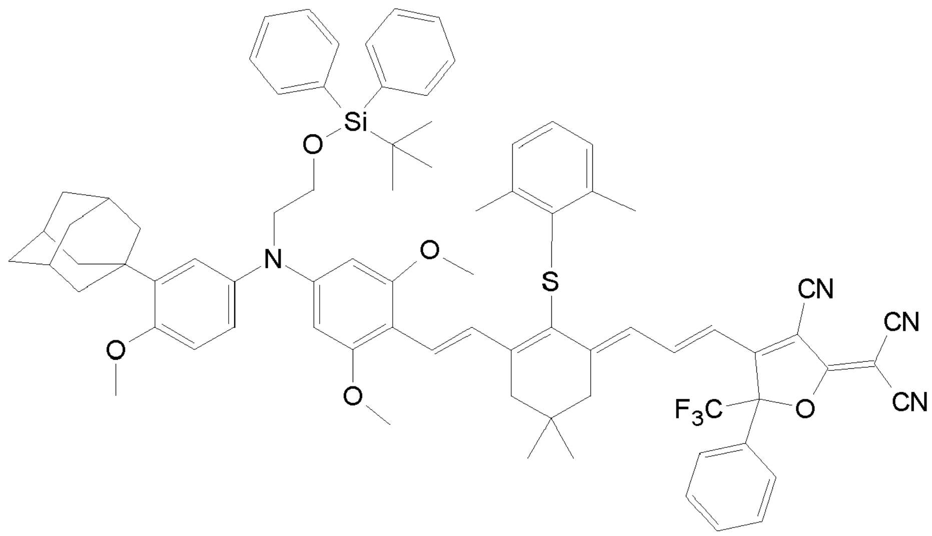

(I-11)

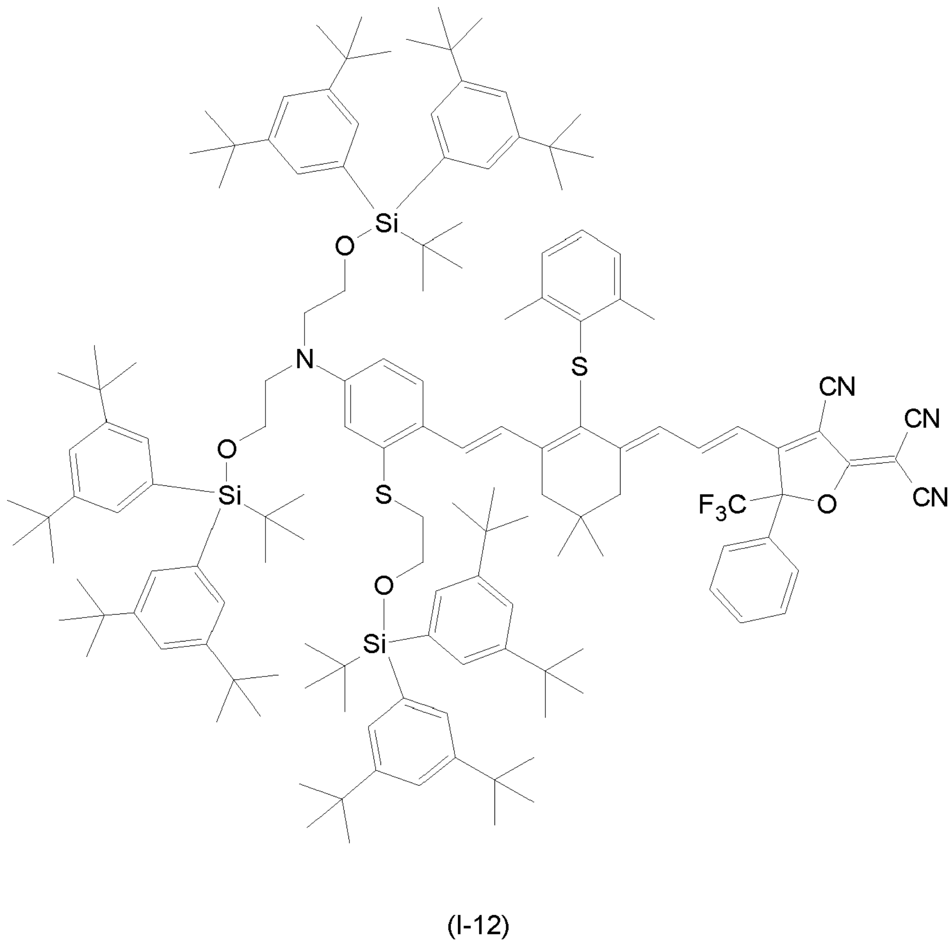

(I-12)

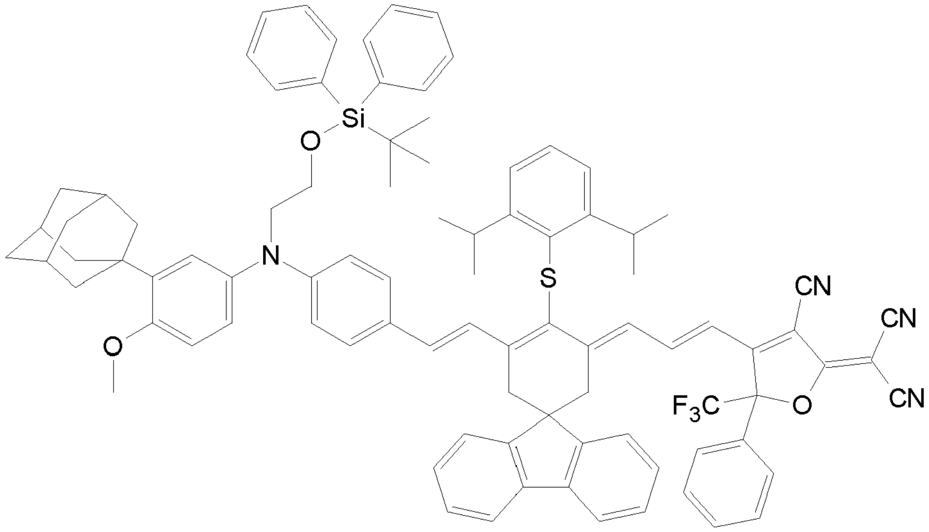

(I-13)

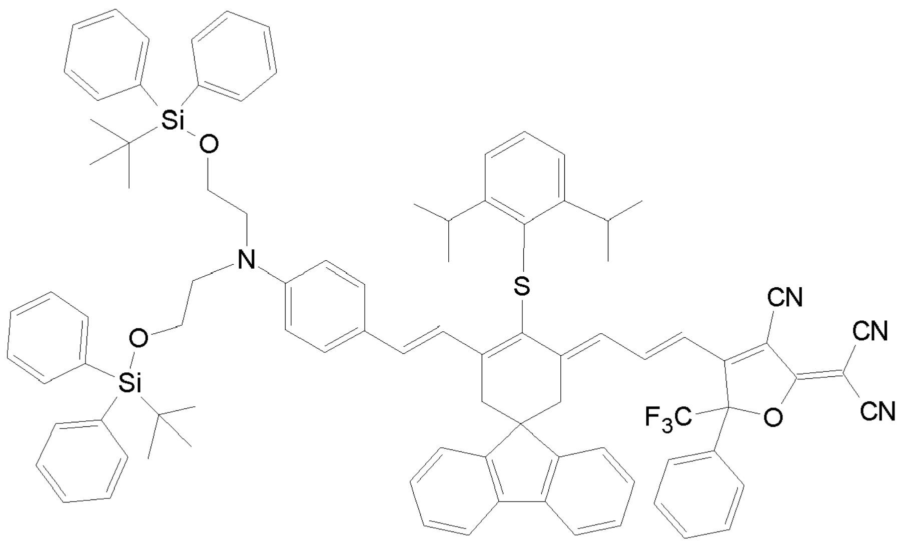

(I-14)

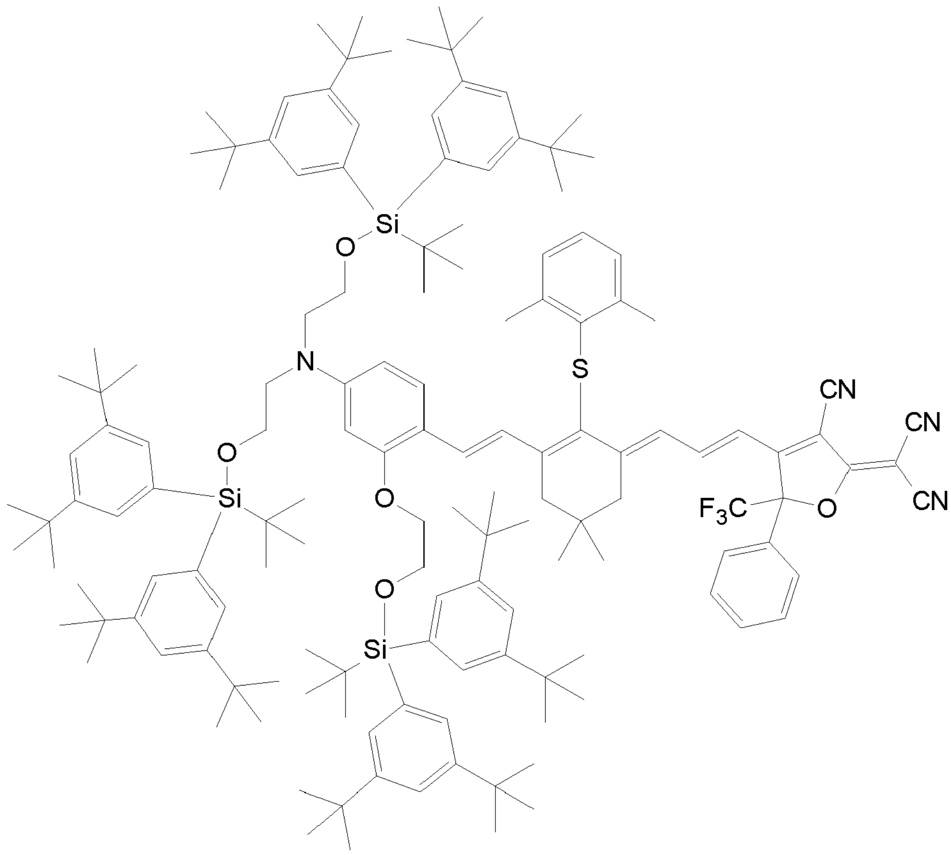

(I-15)

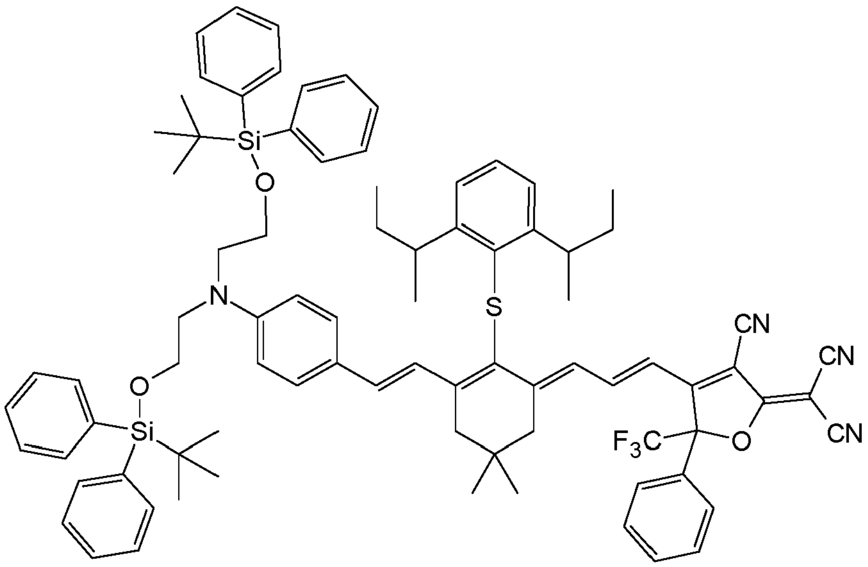

(I-16)

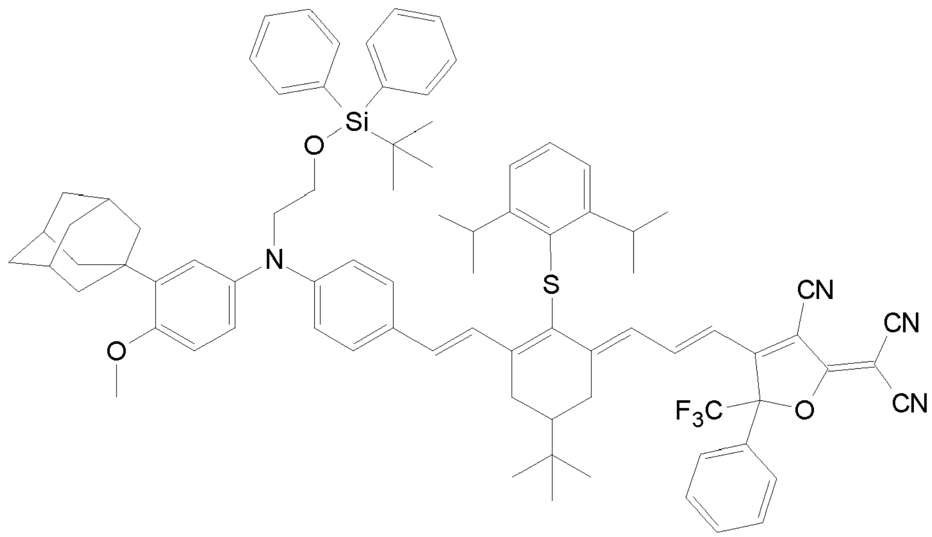

(I-17)

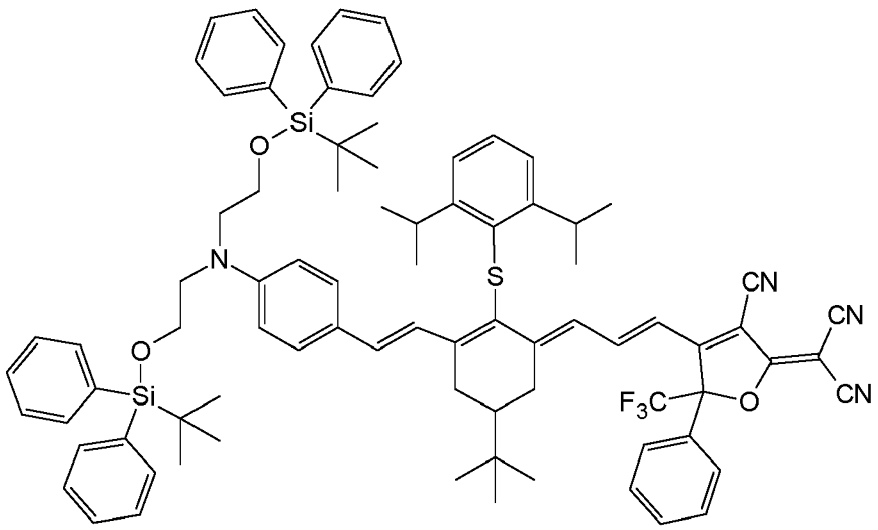

(I-18)

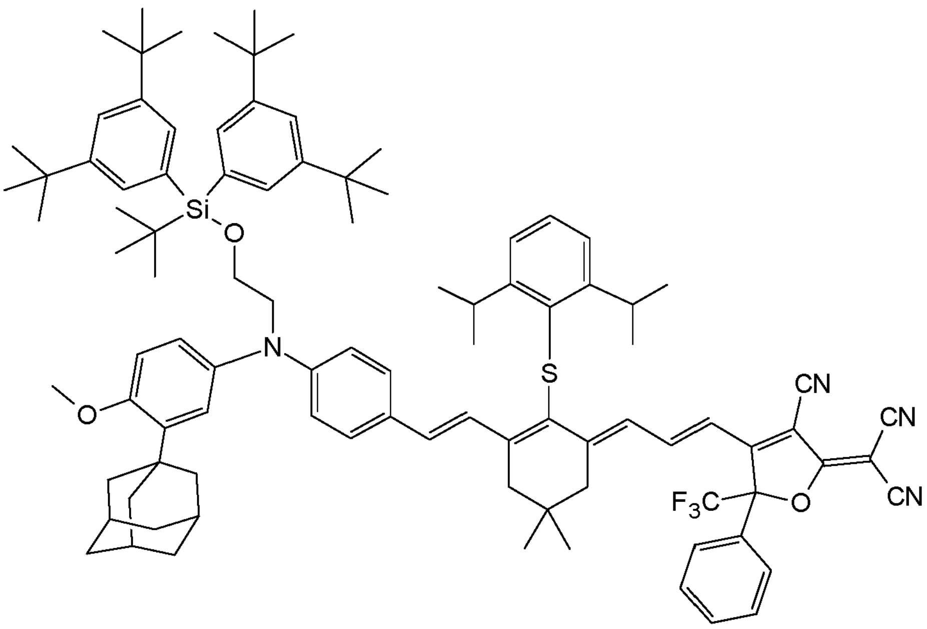

(I-19)

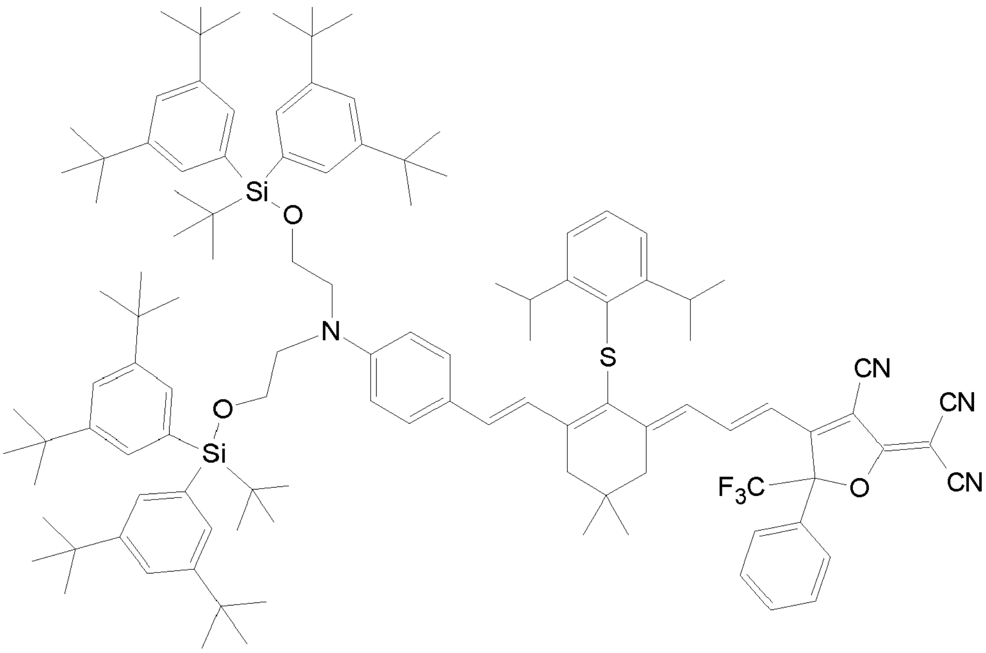

(I-20)

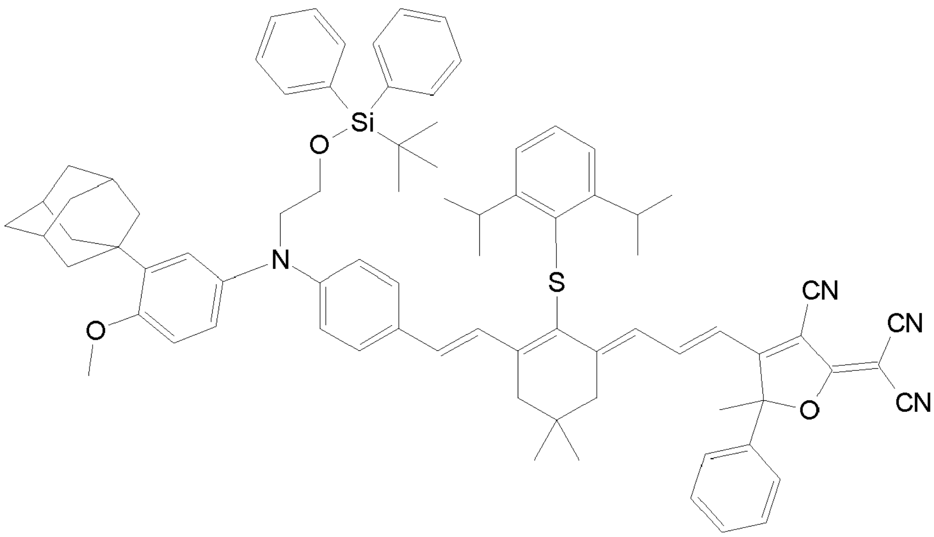

(I-21)

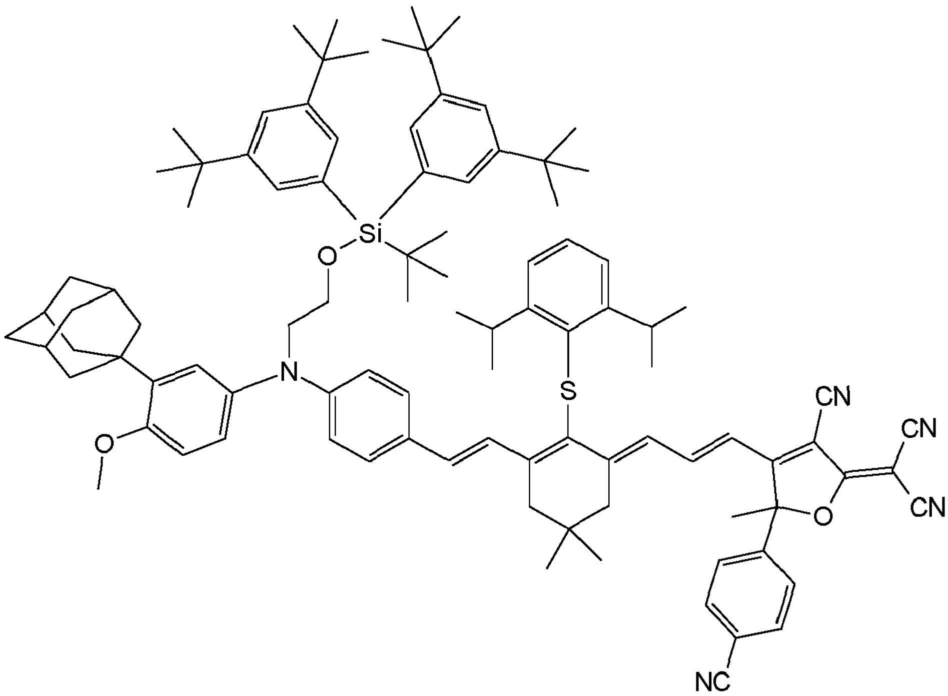

(I-22)

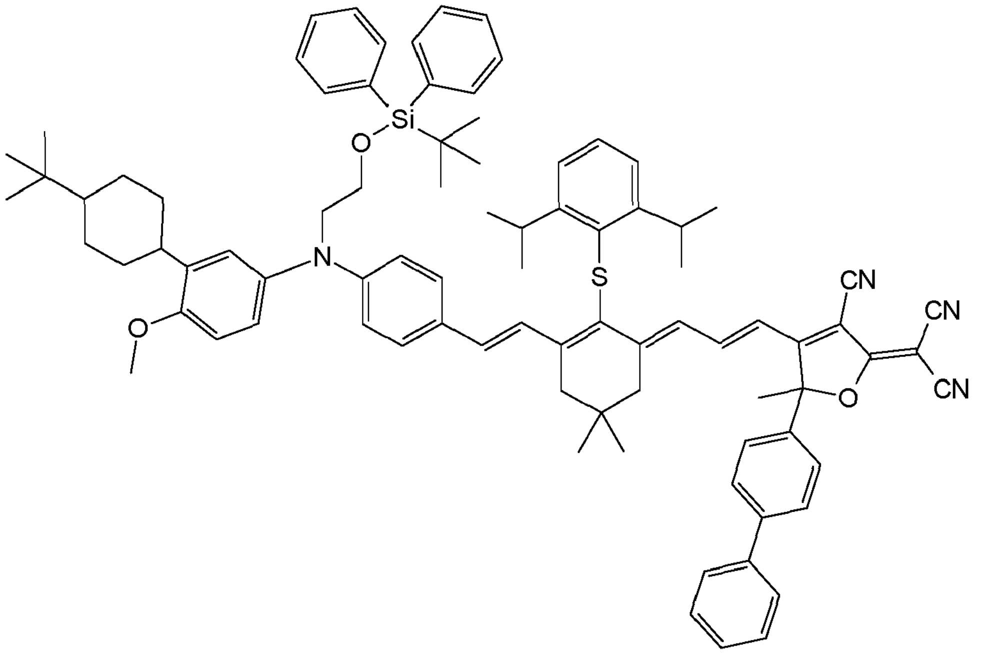

(I-23)

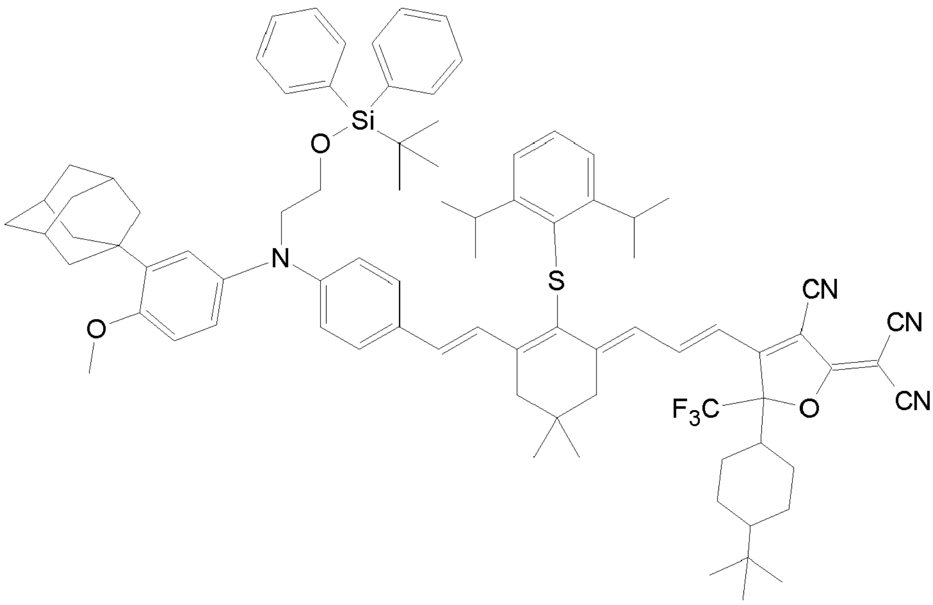

(I-24)

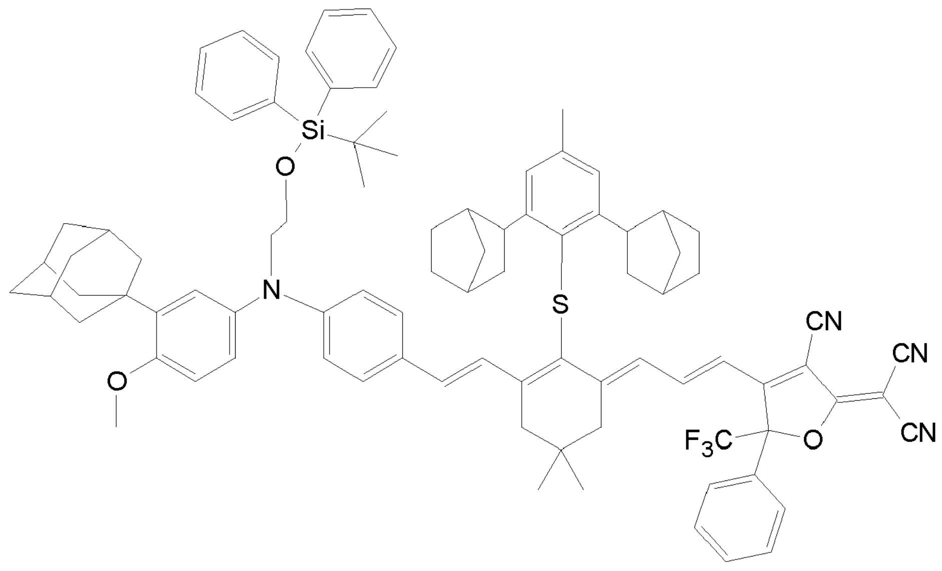

(I-25)

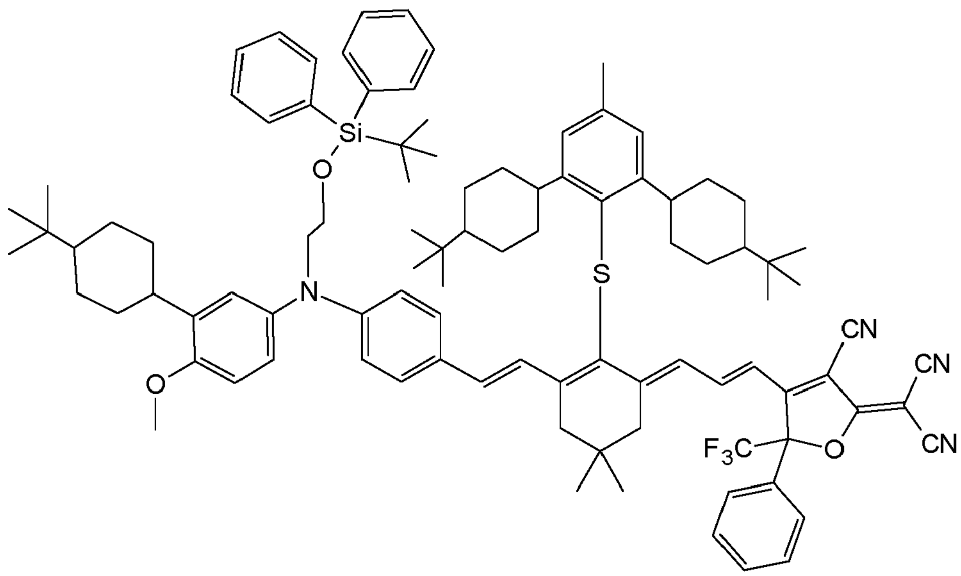

(I-26)

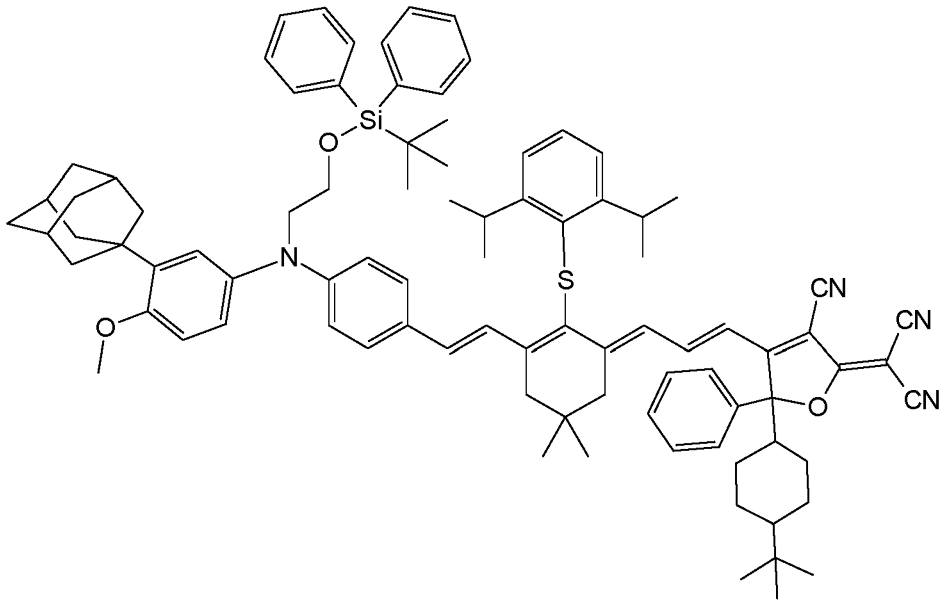

(I-27).

According to a preferred embodiment of the compound of formula (I), $R^7$, if present, is adamantyl or 4-tert-butylcyclohexyl, preferably is

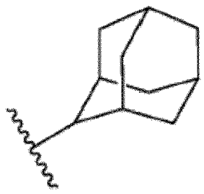

or

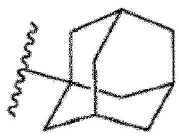

,

most preferably is

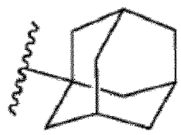

.

According to another preferred embodiment of the compound of formula (I), E is selected from the group consisting of O, S, SO, and $SO_2$, preferably E is S or O, most preferably E is S (O representing oxygen and S representing sulphur).

A second aspect of the present invention relates to a mixture comprising or consisting of

one, two, three, four, five or more compound(s) of formula (I) according to the invention

and optionally

one, two, three, four, five or more host material(s), preferably polymer(s).

According to a preferred embodiment, the mixture according to the invention comprises or consists of one, two, three, four, five or more compound(s) of formula (I) according to the invention, preferably consists of two, three, four, five or more compound(s) of formula (I) according to the invention.

According to another preferred embodiment, the mixture according to the invention comprises or consists of one,

two, three, four, five or more compound(s) of formula (I) according to the invention and one, two, three, four, five or more host material(s), preferably polymer(s), preferably comprises or consists of two or more compound(s) of formula (I) according to the invention and one, two, three, four, five or more host material(s), preferably polymer(s).

According to another preferred embodiment, the mixture according to the invention additionally comprises one, two, three, four, five or more nonlinear optical dye(s) that are different from the compound of formula (I) according to the invention.

According to a preferred embodiment of the present invention, the mixture comprises one, two, three, four, five or more host material(s), into which the one, two, three, four, five or more compound(s) of formula (I) as defined herein are incorporated. In the context of the present invention, polymers are preferred host materials.

Preferably, the one, two, three, four, five or more host material(s), preferably polymer(s), are not electrically conductive.

Preferably, the host material(s), more preferably polymer(s), is/are selected from the group consisting of

amorphous polymers and copolymers,

poly(ester)s, polyethylene terephthalate), polyethylene naphthalate), poly(butylen terephthalate), poly(butylene naphthalate), poly(carbonate)s, preferably poly(bisphenol A carbonate), amorphous poly(carbonate)s, preferably poly(bisphenol A carbonate-co-4,4'-(3,3,5-trimethylcyclohexylidene) diphenol carbonate) (Apec® 1895), poly(1,4-cyclohexylidene cyclohexane-1,4-dicarboxylate) (PCCD), poly(diethylene glycol bis(allyl carbonate),

poly(styrene)s, poly(methylstyrene)s, styrene copolymers, butadiene styrene copolymers, acrylonitrile butadiene styrene copolymers, styrene acrylonitrile copolymers, poly(acrylamide)s, poly(acrylonitrile)s,

polyolefines, cycloolefin polymers, cycloolefin copolymers, polyethylene, polymethylpentene, polypropylene, poly(vinylcyclohexane),

poly(acrylate)s, preferably poly(methacrylate)s, poly(methylmethacrylate) (PMMA), poly(dicyclopentanyl methacrylate) (PDCPMA), poly(adamantyl methacrylate) (PAdMA), poly(norbornyl methacrylate), poly(4-tert-butyl-cyclohexyl methacrylate), and copolymers of methylmethacrylates (especially of the five named ones),

poly(amide)s, poly(imide)s, poly(etherimide)s (PEI), poly(urethane)s,

poly(sulfone)s, poly(ethersulfone)s, poly(aryl sulfone)s,

poly(vinyl chloride),

poly(siloxane)s, preferably poly(dimethyl siloxane) (PDMS), fluoropolymers,

poly(ethylene-vinylacetate),

cellulose esters, cellulose acetate, cellulose acetate butyrate,

epoxides, and ultraviolet curable resins.

Preferably the host materials, more preferably polymers, of the mixture according to the invention, if present, have a glass transition temperature ($T_g$) in a range of about 90 to 220 °C, more preferably of about 130 to 220 °C, most preferably of about 150 to 220 °C, respectively.

Preferably, the host materials, preferably polymers, of the mixture according to the invention, if present, have high glass transition temperature ($T_g$) values, low optical losses and/or good adhesion, respectively. Most preferably, said host materials, preferably polymers, have high glass transition temperature ($T_g$) values, low optical losses, and good adhesion, respectively.

According to a further preferred embodiment, a total amount of 1 to 99% by weight, preferably of 20 to 80% by weight, more preferably of 30 to 60% by weight, of the one or more compound(s) of formula (I) is incorporated into the host material(s), based on the weight of the mixture according to the invention.

Another aspect of the present invention relates to a compound selected from the group consisting of

(i) compounds of formula (II)

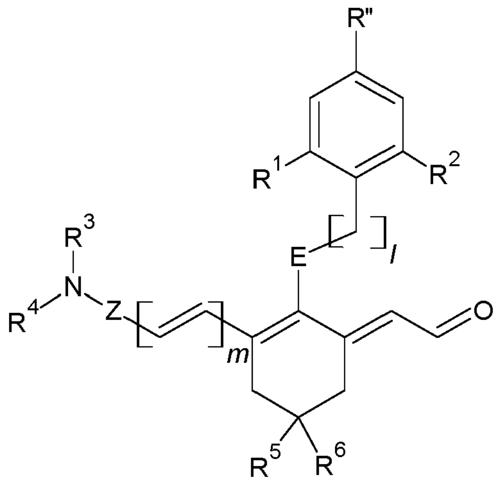

,

(II),

wherein

R" is selected from the group consisting of H and linear C1-C4 alkyl residues, preferably R" is H or a methyl residue, more preferably R" is H,

$R^1$ and $R^2$ are independently selected from the group consisting of linear, cyclic and branched C1-C10 alkyl residues, and additionally, if l = 1, then one or both of $R^1$ and $R^2$ can be H,

$R^3$ and $R^4$ are independently selected from the group consisting of

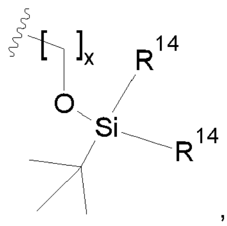

,

wherein x is 2 to 6, preferably x is 2, 3, 4, 5 or 6, more preferably x is 2, and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

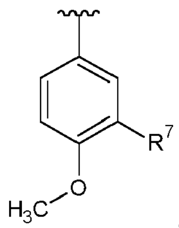

,

and

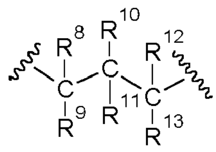

forming a 6-membered ring structure by also being connected to a carbon atom of Z that is vicinal to the carbon atom that is part of the N-Z-bond,

wherein $R^7$ is selected from the group consisting of linear, cyclic and branched C5-C10 alkyl residues,

$R^8$ to $R^{13}$ are independently selected from the group consisting of H and linear and branched C1-C4 alkyl residues, preferably are independently selected from the group consisting of H and methyl, most preferably all of $R^8$ to $R^{13}$ are H,

$R^5$ and $R^6$ are independently selected from the group consisting of H, methyl, and tert-butyl, or both of $R^5$ and $R^6$ are part of a fluorene moiety, preferably both of $R^5$ and $R^6$ are methyl,

l is 0 or 1,

m is 0, 1, or 2, preferably m is 1,

E represents one or more heteroatom(s), preferably is selected from the group consisting of O, S, SO, and $SO_2$, more preferably E is S or O, most preferably E is S, and

Z is selected from the group consisting of substituted or non-substituted phenyl, thienyl, and bithienyl, preferably Z is (non-substituted) phenyl,

(ii) compounds of formula (III)

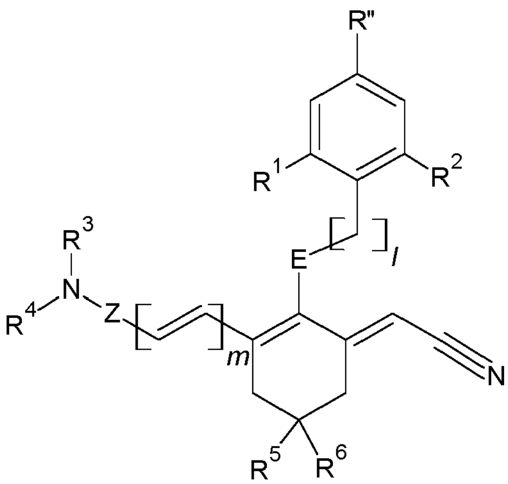

,

(III),

wherein

R" is selected from the group consisting of H and linear C1-C4 alkyl residues, preferably R" is H or a methyl residue, more preferably R" is H,

$R^1$ and $R^2$ are independently selected from the group consisting of linear, cyclic and branched C1-C10 alkyl residues, and additionally, if l = 1, then one or both of $R^1$ and $R^2$ can be H,

$R^3$ and $R^4$ are independently selected from the group consisting of

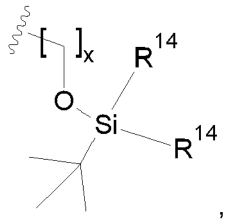

,

wherein x is 2 to 6, preferably x is 2, 3, 4, 5 or 6, more preferably x is 2, and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

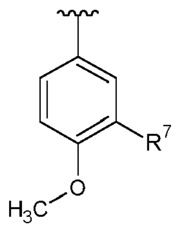

,

and

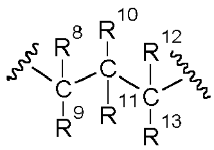

forming a 6-membered ring structure by also being connected to a carbon atom of Z that is vicinal to the carbon atom that is part of the N-Z-bond,

wherein $R^7$ is selected from the group consisting of linear, cyclic and branched C5-C10 alkyl residues,

$R^8$ to $R^{13}$ are independently selected from the group consisting of H and linear and branched C1-C4 alkyl residues, preferably are independently selected from the group consisting of H and methyl, most preferably all of $R^8$ to $R^{13}$ are H,

$R^5$ and $R^6$ are independently selected from the group consisting of H, methyl, and tert-butyl, or both of $R^5$ and $R^6$ are part of a fluorene moiety, preferably both of $R^5$ and $R^6$ are methyl,

l is 0 or 1,

m is 0, 1, or 2, preferably m is 1,

E represents one or more heteroatom(s), preferably is selected from the group consisting of O, S, SO, and $SO_2$, more preferably E is S or O, most preferably E is S, and

Z is selected from the group consisting of substituted or non-substituted phenyl, thienyl, and bithienyl, preferably Z is (non-substituted) phenyl,

(iii) compounds of formula (IV)

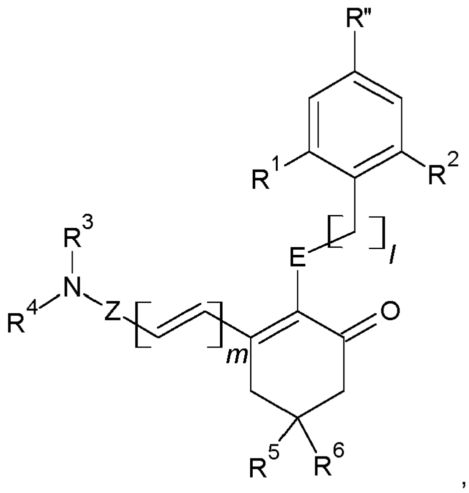

(IV),

wherein

R" is selected from the group consisting of H and linear C1-C4 alkyl residues, preferably R" is H or a methyl residue, more preferably R" is H,

$R^1$ and $R^2$ are independently selected from the group consisting of linear, cyclic and branched C1-C10 alkyl residues, and additionally, if l = 1, then one or both of $R^1$ and $R^2$ can be H,

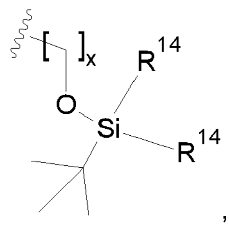

wherein x is 2 to 6, preferably x is 2, 3, 4, 5 or 6, more preferably x is 2, and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

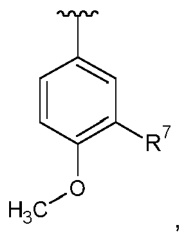

and

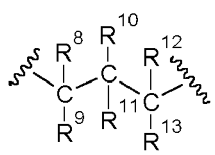

forming a 6-membered ring structure by also being connected to a carbon atom of Z that is vicinal to the carbon

atom that is part of the N-Z-bond,

wherein $R^7$ is selected from the group consisting of linear, cyclic and branched C5-C10 alkyl residues,

$R^8$ to $R^{13}$ are independently selected from the group consisting of H and linear and branched C1-C4 alkyl residues, preferably are independently selected from the group consisting of H and methyl, most preferably all of $R^8$ to $R^{13}$ are H,

$R^5$ and $R^6$ are independently selected from the group consisting of H, methyl, and tert-butyl, or both of $R^5$ and $R^6$ are part of a fluorene moiety, preferably both of $R^5$ and $R^6$ are methyl,

l is 0 or 1,

m is 0, 1, or 2, preferably m is 1,

E represents one or more heteroatom(s), preferably is selected from the group consisting of O, S, SO, and $SO_2$, more preferably E is S or O, most preferably E is S, and

Z is selected from the group consisting of substituted or non-substituted phenyl, thienyl, and bithienyl, preferably Z is (non-substituted) phenyl,

(iv) compounds of formula (V)

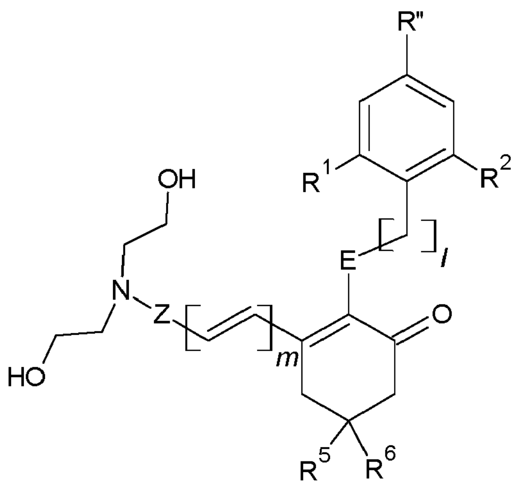

,

(V),

wherein

R" is selected from the group consisting of H and linear C1-C4 alkyl residues, preferably R" is H or a methyl residue, more preferably R" is H,

$R^1$ and $R^2$ are independently selected from the group consisting of linear, cyclic and branched C1-C10 alkyl residues, and additionally, if l = 1, then one or both of $R^1$ and $R^2$ can be H,

$R^5$ and $R^6$ are independently selected from the group consisting of H, methyl, and tert-butyl, or both of $R^5$ and $R^6$ are part of a fluorene moiety, preferably both of $R^5$ and $R^6$ are methyl,

l is 0 or 1,

m is 0, 1, or 2, preferably m is 1,

E represents one or more heteroatom(s), preferably is selected from the group consisting of O, S, SO, and $SO_2$, more preferably E is S or O, most preferably E is S, and

Z is selected from the group consisting of substituted or non-substituted phenyl, thienyl, and bithienyl, preferably Z is (non-substituted) phenyl,

(v) compounds of formula (VI)

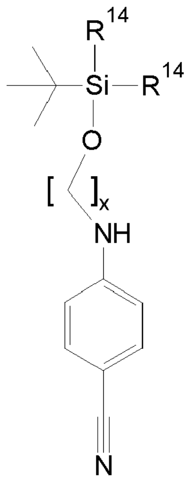

(VI),

wherein

x is 2 to 6, preferably x is 2, 3, 4, 5 or 6, more preferably x is 2, and

$R^{14}$ is independently selected from the group consisting of C2-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

(vi) compounds of formula (VII)

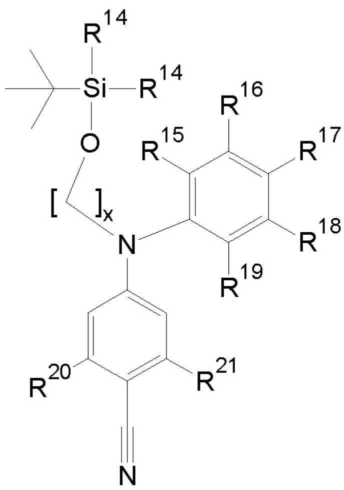

(VII),

wherein

x is 2 to 6, preferably x is 2, 3, 4, 5 or 6, more preferably x is 2,

$R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

at least one of $R^{15}$ to $R^{19}$ is independently selected from the group consisting of C1-C12 linear and branched alkyl, substituted or non-substituted cycloalkyl, and C1-C12 linear, branched, and substituted or non-substituted cyclic alkoxy residues, while the remaining ones of $R^{15}$ to $R^{19}$ are H, and

$R^{20}$ and $R^{21}$ are independently selected from the group consisting of H, C1-C8 linear and branched alkyl, C1-C12 linear and branched alkoxy, an arylalkoxy residue, a trialkylsilyloxyalkoxy residue, an aryldialkylsilyloxyalkoxy residue, and an alkyldiarylsilyloxyalkoxy residue, and

(vii) compounds of formula (VIII)

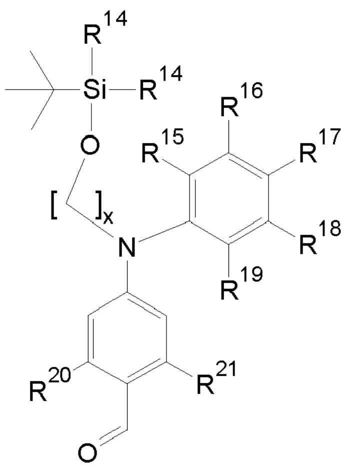

(VIII),

wherein

x is 2 to 6, preferably x is 2, 3, 4, 5 or 6, more preferably x is 2,

$R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

at least one of $R^{15}$ to $R^{19}$ is independently selected from the group consisting of C1-C12 linear and branched alkyl, substituted or non-substituted cycloalkyl, and C1-C12 linear, branched, and substituted or non-substituted cyclic alkoxy residues, while the remaining ones of $R^{15}$ to $R^{19}$ are H, and

$R^{20}$ and $R^{21}$ are independently selected from the group consisting of H, C1-C8 linear and branched alkyl, C1-C12 linear and branched alkoxy, an arylalkoxy residue, a trialkylsilyloxyalkoxy residue, an aryldialkylsilyloxyalkoxy residue, and an alkyldiarylsilyloxyalkoxy residue,

The compounds of formulae (II) to (VIII) are precursors of the compounds of formula (I). Thus, they can be used to synthesize the compounds of formula (I) according to the invention (cf. the examples further below).

Regarding compound of formula (II) according to the invention, the following applies:

Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl. According to a preferred embodiment of the compound of formula (II), $R^1$ and $R^2$ are the same. More preferably, both of $R^1$ and $R^2$ are methyl or isopropyl.

The $R^{14}$ residues of the compound of formula (II) according to the invention can be the same or different, preferably are the same. Preferably, all $R^{14}$ residues are either methyl or phenyl.

Preferably $R^7$, if present, is adamantyl or 4-tert-butylcyclohexyl, more preferably is

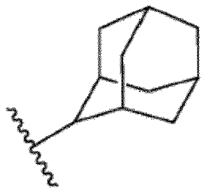
or
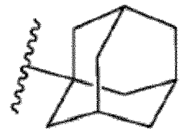
,

most preferably is

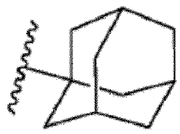
.

Regarding compound of formula (III) according to the invention, the following applies:
Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl. According to a preferred embodiment of the compound of formula (III), $R^1$ and $R^2$ are the same. More preferably, both of $R^1$ and $R^2$ are methyl or isopropyl.

The $R^{14}$ residues of the compound of formula (III) according to the invention can be the same or different, preferably are the same. Preferably, all $R^{14}$ residues are either methyl or phenyl.

Preferably $R^7$, if present, is adamantyl or 4-tert-butylcyclohexyl, more preferably is

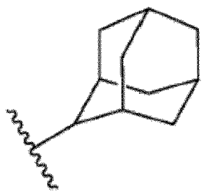
or
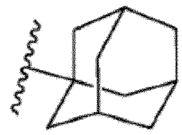
,

most preferably is

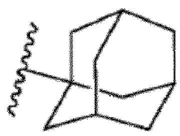
.

Regarding compound of formula (IV) according to the invention, the following applies:
Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl. According to a preferred embodiment of the compound of formula (IV), $R^1$ and $R^2$ are the same. More preferably, both of $R^1$ and $R^2$ are methyl or isopropyl.

The $R^{14}$ residues of the compound of formula (IV) according to the invention can be the same or different, preferably are the same. Preferably, all $R^{14}$ residues are either methyl or phenyl.

Preferably $R^7$, if present, is adamantyl or 4-*tert*-butylcyclohexyl, more preferably is

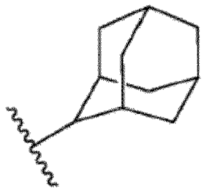 or 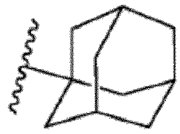 ,

most preferably is

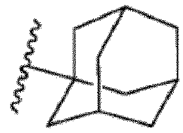

.

Regarding compound of formula (V) according to the invention, the following applies: Preferably, $R^1$ and $R^2$ are independently selected from the group consisting of linear, cyclic and branched C1-C10 alkyl residues. More preferably, $R^1$ and $R^2$ are independently selected from the group consisting of methyl and isopropyl. According to a preferred embodiment of the compound of formula (V), $R^1$ and $R^2$ are the same. More preferably, both of $R^1$ and $R^2$ are methyl or isopropyl.

Regarding compound of formula (VI) according to the invention, the following applies: The $R^{14}$ residues of the compound of formula (VI) can be the same or different, preferably are the same.

Preferably, both of $R^{14}$ are phenyl residues.

Preferably, both of $R^{14}$ are methyl residues.

Regarding compound of formula (VII) according to the invention, the following applies: The $R^{14}$ residues of the compound of formula (VII) can be the same or different, preferably are the same.

Preferably, both of $R^{14}$ are phenyl residues.

Preferably, both of $R^{14}$ are methyl residues.

Preferably, both of $R^{20}$ and $R^{21}$ are H.

Preferably, the C1-C8 branched alkyl residue in $R^{20}$ and/or $R^{21}$, if present, is branched at the 2nd carbon atom from the phenyl bond.

Preferably, one, two or three, most preferably two, of $R^{15}$ to $R^{19}$ are selected from the group consisting of C1-C12 linear and branched alkyl and substituted or non-substituted cycloalkyl and/or none, one or two of $R^{15}$ to $R^{19}$ are selected from the group consisting of C1-C12 linear, branched and substituted or non-substituted cyclic alkoxy residues, while the remaining ones of $R^{15}$ to $R^{19}$ are H.

Preferably, one, two, or three of $R^{16}$ to $R^{18}$ are selected from the group consisting of C1-C12 linear and branched alkyl and substituted or non-substituted cycloalkyl and/or none, one or two of $R^{15}$, $R^{17}$ and $R^{19}$ are selected from the group consisting of C1-C12 linear, branched and substituted or non-substituted cyclic alkoxy residues, while the remaining ones of $R^{15}$ to $R^{19}$ are H.

Preferably, at least two of $R^{15}$ to $R^{19}$ are H.

Preferably, $R^{17}$ is a methoxy residue, $R^{16}$ and $R^{18}$ are independently selected from the group consisting of H, linear, cyclic and branched C5-C1 0 alkyl residues, more preferably $R^{16}$ and $R^{18}$ are independently selected from the group consisting of H, adamantyl and 4-tert-butylcyclohexyl, and $R^{15}$ and $R^{19}$ both are H.

Most preferably, $R^{17}$ is a methoxy residue, $R^{16}$ is an adamantyl residue, and $R^{15}$ and $R^{18}$ and $R^{19}$ are H.

Regarding compound of formula (VIII) according to the invention, the following applies: The $R^{14}$ residues of the compound of formula (VIII) can be the same or different, preferably are the same.

Preferably, both of $R^{14}$ are phenyl residues.

Preferably, both of $R^{14}$ are methyl residues.

Preferably, both of $R^{20}$ and $R^{21}$ are H.

Preferably, the C1-C8 branched alkyl residue in $R^{20}$ and/or $R^{21}$, if present, is branched at the 2nd carbon atom from the phenyl bond.

Preferably, one, two or three, most preferably two, of $R^{15}$ to $R^{19}$ are selected from the group consisting of C1-C12 linear and branched alkyl and substituted or non-substituted cycloalkyl and/or none, one or two of $R^{15}$ to $R^{19}$ are selected from the group consisting of C1-C12 linear, branched and substituted or non-substituted cyclic alkoxy residues, while the remaining ones of $R^{15}$ to $R^{19}$ are H.

Preferably, one, two, or three of $R^{16}$ to $R^{18}$ are selected from the group consisting of C1-C12 linear and branched

alkyl and substituted or non-substituted cycloalkyl and/or none, one or two of $R^{15}$, $R^{17}$ and $R^{19}$ are selected from the group consisting of C1-C12 linear, branched and substituted or non-substituted cyclic alkoxy residues, while the remaining ones of $R^{15}$ to $R^{19}$ are H.

Preferably, at least two of $R^{15}$ to $R^{19}$ are H.

Preferably, $R^{17}$ is a methoxy residue, $R^{16}$ and $R^{18}$ are independently selected from the group consisting of H, linear, cyclic and branched C5-C10 alkyl residues, more preferably $R^{16}$ and $R^{18}$ are independently selected from the group consisting of H, adamantyl and 4-tert-butylcyclohexyl, and $R^{15}$ and $R^{19}$ both are H.

Most preferably, $R^{17}$ is a methoxy residue, $R^{16}$ is an adamantyl residue, and $R^{15}$ and $R^{18}$ and $R^{19}$ are H.

According to a preferred embodiment, the compound of formula (II) is selected from the group consisting of

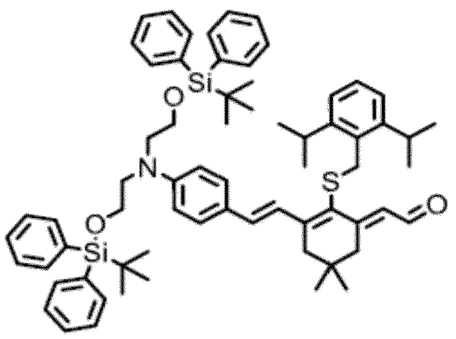

(A-1)

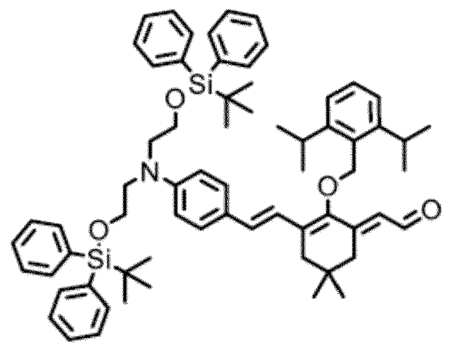

(A-2)

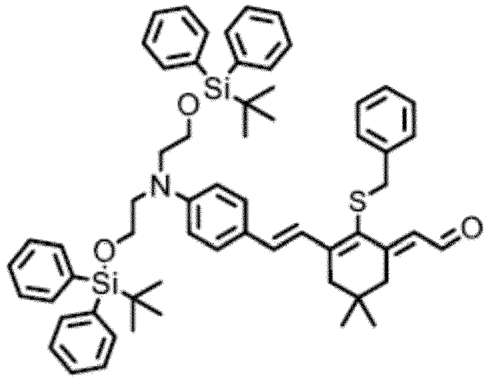

(A-3)

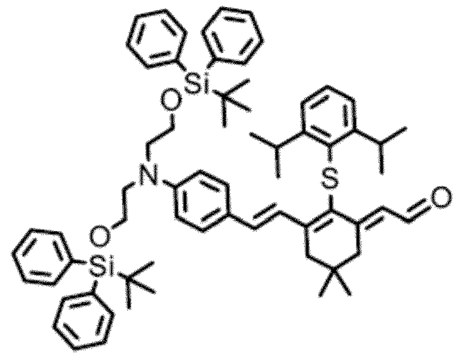

(A-4)

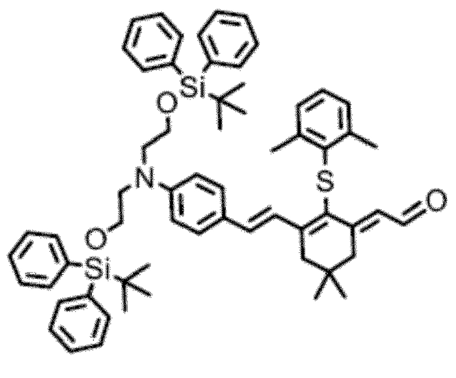

(A-5)

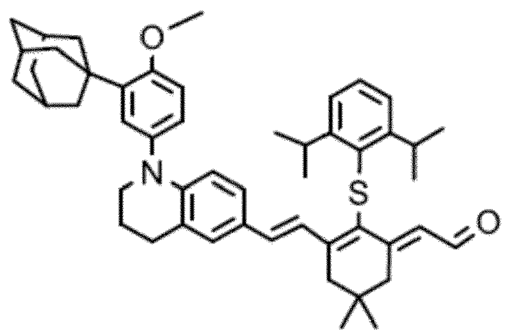

(A-6)

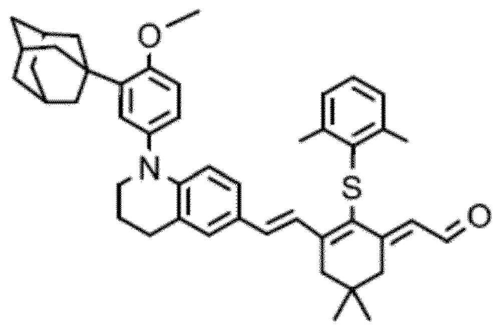

(A-7)

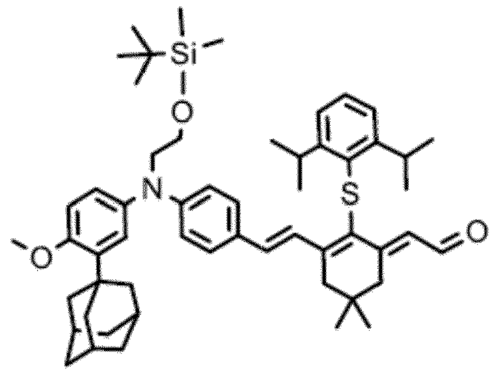

(A-8)

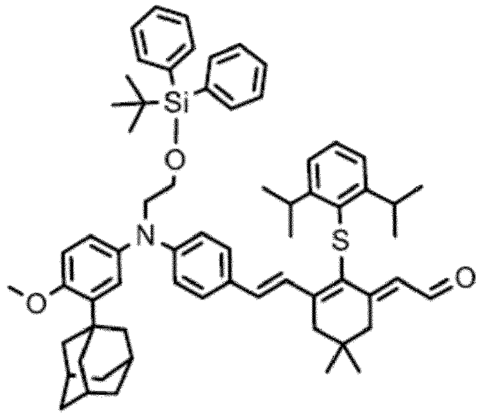

(A-9)

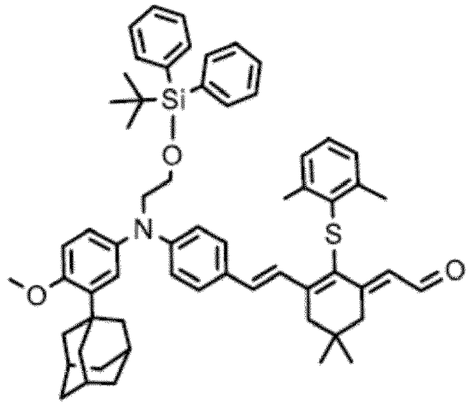

(A-10).

According to a preferred embodiment, the compound of formula (III) is selected from the group consisting of

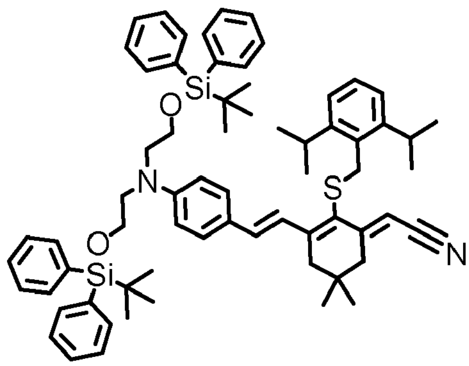

(C-1)

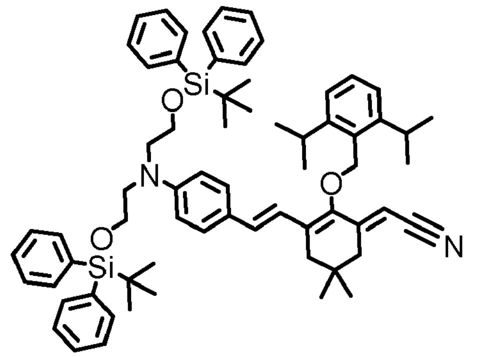

(C-2)

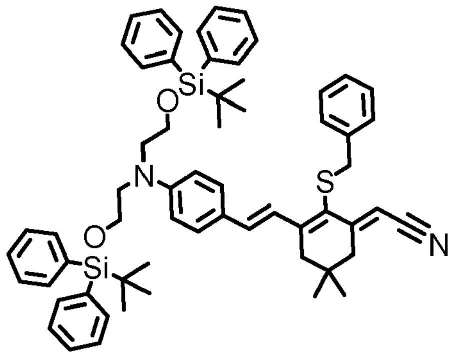

(C-3)

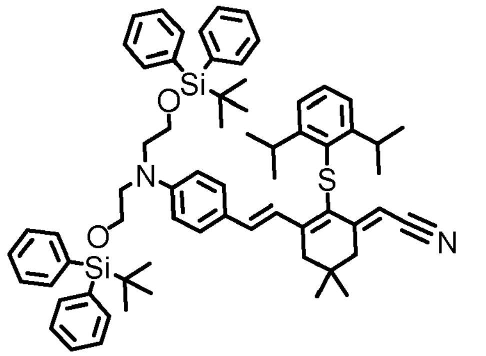

(C-4)

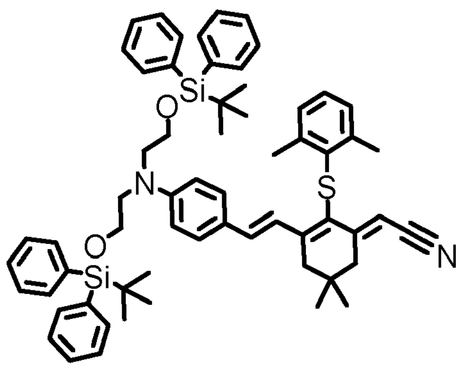

(C-5)

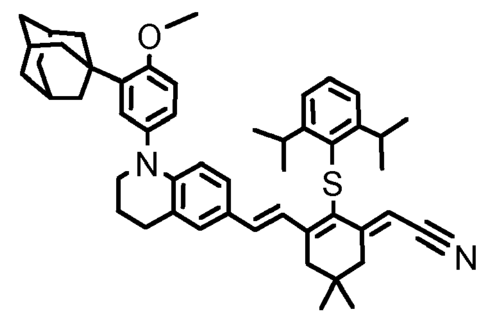

(C-6)

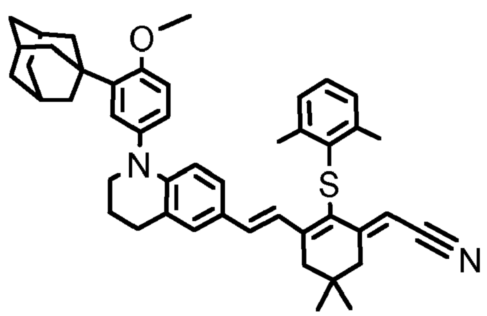

(C-7)

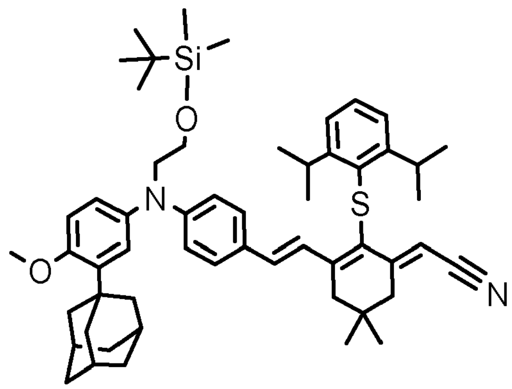

(C-8)

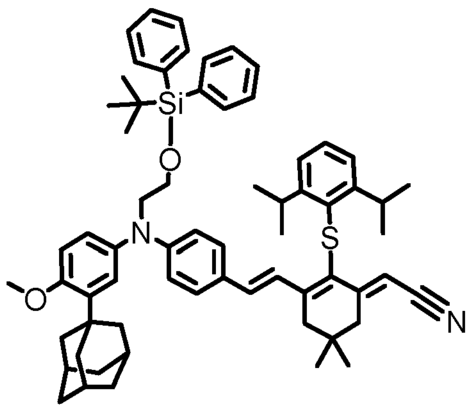

(C-9)

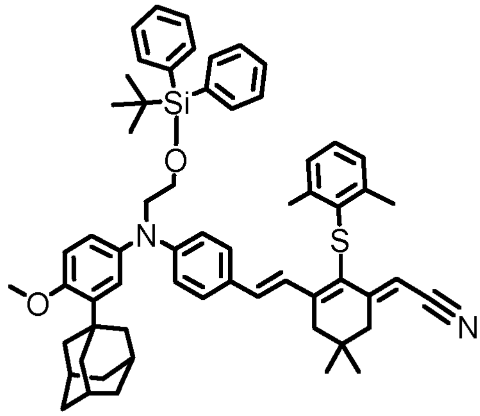

(C-10).

According to a preferred embodiment, the compound of formula (IV) is selected from the group consisting of

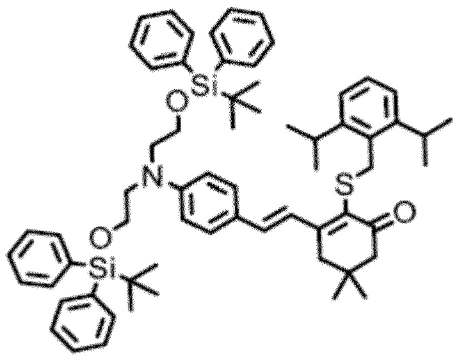

(K-1)

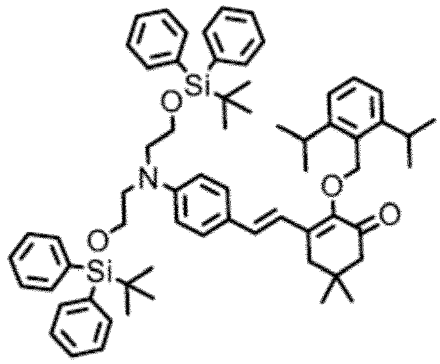

(K-2)

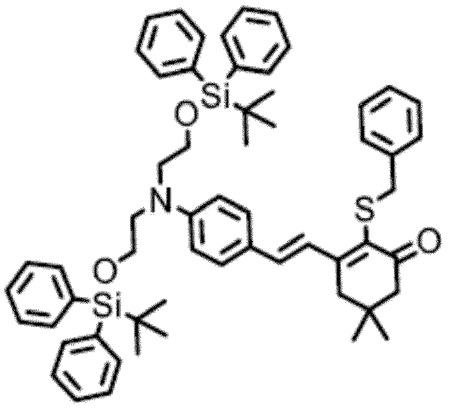

(K-3)

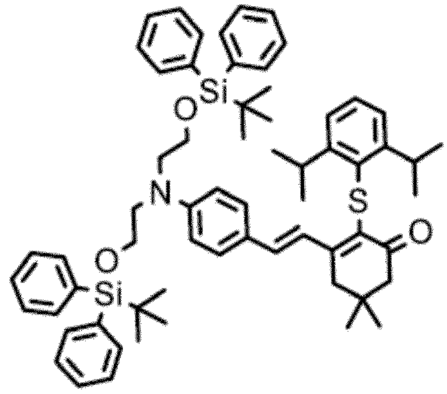

(K-4)

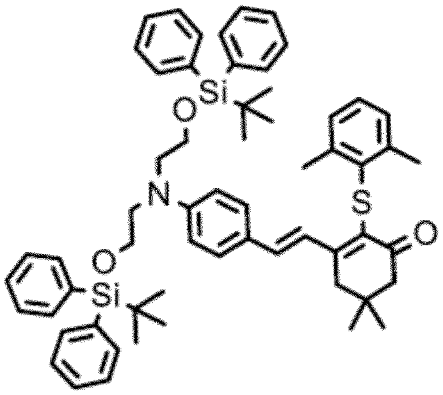

(K-5)

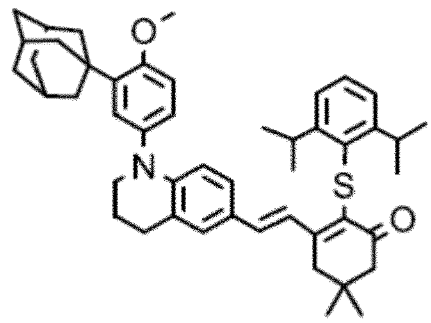

(K-6)

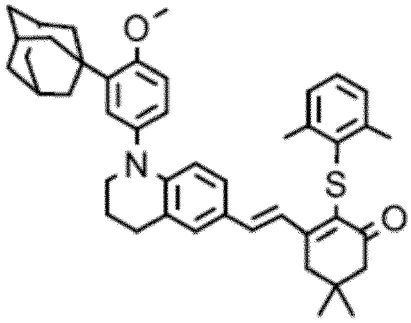

(K-7)

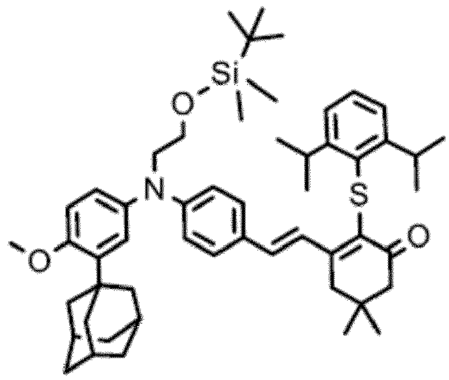

(K-8)

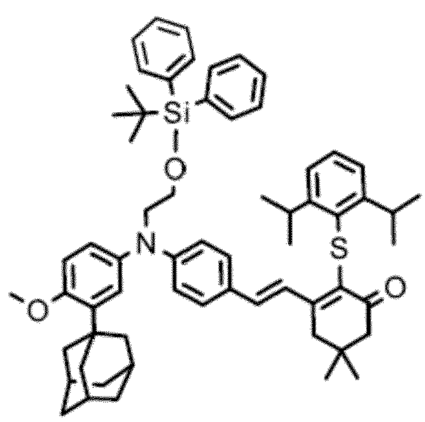

(K-9)

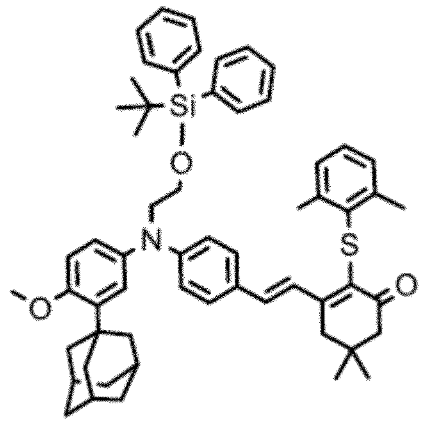

(K-10).

According to a preferred embodiment, the compound of formula (V) is selected from the group consisting of

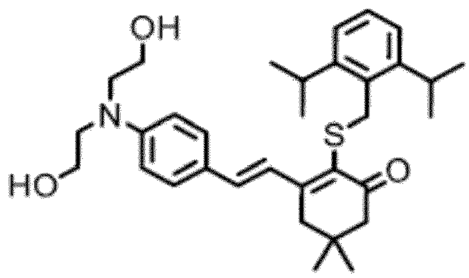

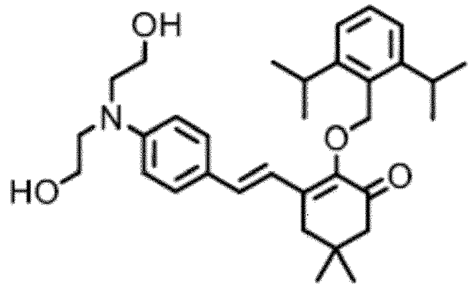

(D-1) (D-2)

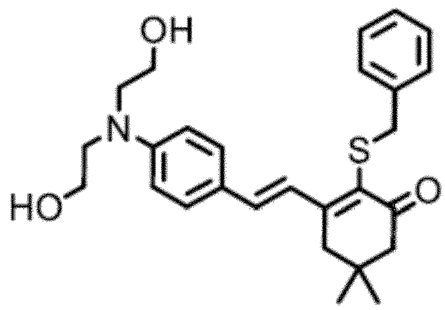

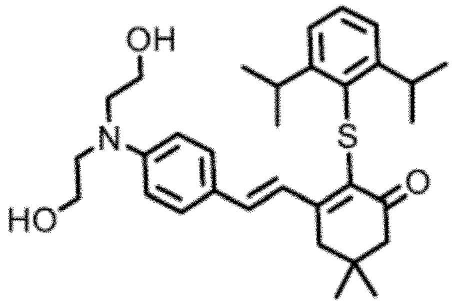

(D-3) (D-4)

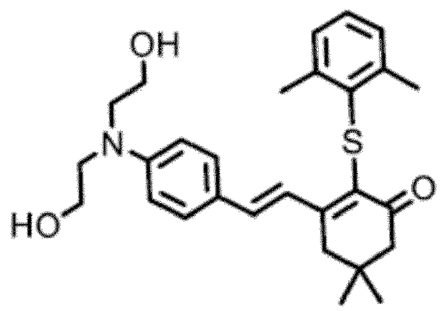

(D-5).

According to a preferred embodiment, the compound of formula (VI) is the following chemical compound

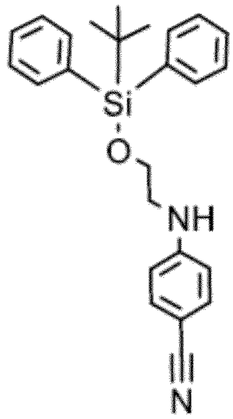

(P-10).

According to a preferred embodiment, the compound of formula (VII) is selected from the group consisting of

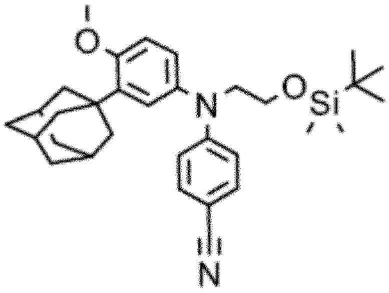

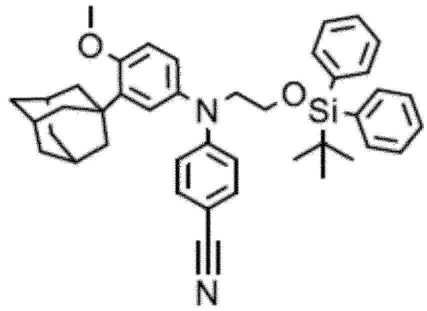

(N-8) (N-10).

According to a preferred embodiment, the compound of formula (VIII) is selected from the group consisting of

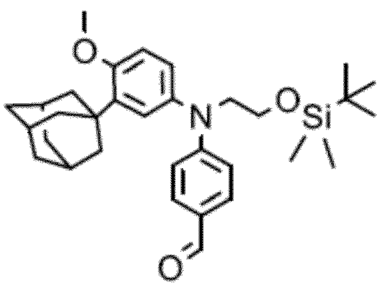

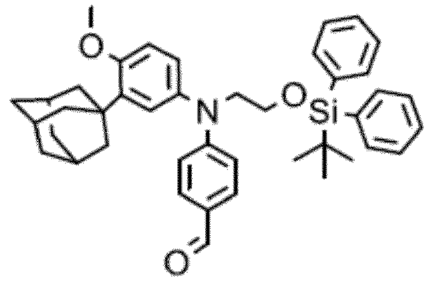

(R-8) (R-10).

Another aspect of the present invention relates to a compound selected from the group consisting of

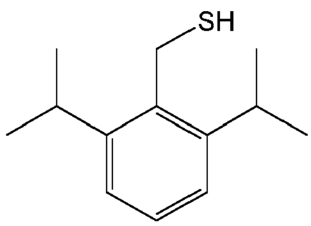

(S-1)

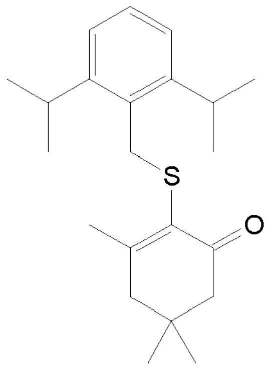

(B-1)

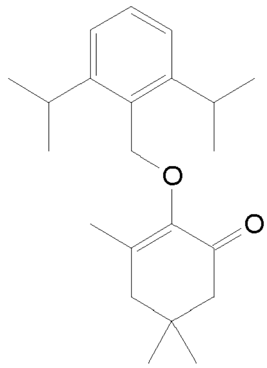

(B-2)

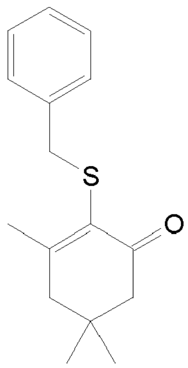

(B-3)

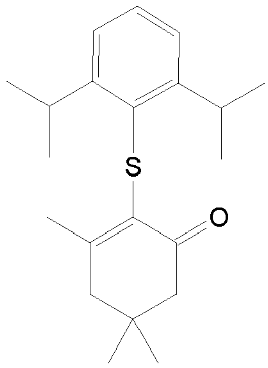

(B-4)

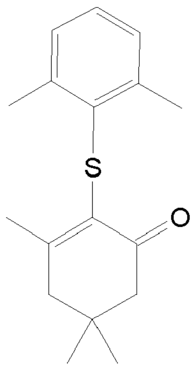

(B-5)

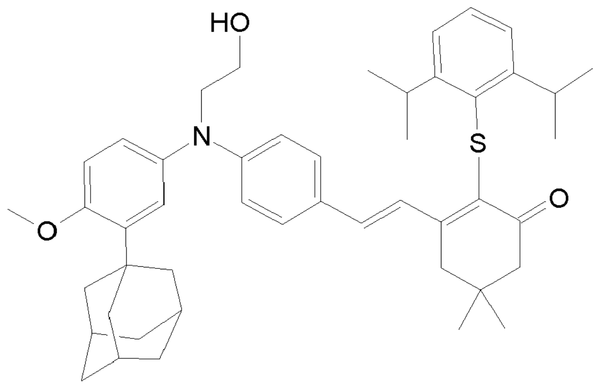

(D-9).

Another aspect of the present invention relates to an electro-optic film comprising or consisting of one or more compound(s) of formula (I) or a mixture according to the invention, preferably wherein the one or more compound(s) of formula (I) is/are dispersed and poled within a/the host material, preferably polymer, matrix (cf. the preferred embodiments of the mixture according to the invention for preferred host materials / polymers, which are also preferred in the context of this aspect of the invention).

Preferably, the electro-optic film according to the invention is a thin film.

Preferably, the electro-optic film according to the invention has an average film thickness in a range of from 10 nm to 5 mm, more preferably from 10 nm to 100 μm, most preferably from 10 nm to 10 μm.

Another aspect of the present invention relates to an electro-optic modulator-device comprising one or more

compound(s) of formula (I) or a mixture according to the invention.

According to a preferred embodiment, the electro-optic modulator-device comprises

- a substrate comprising or consisting of a waveguiding structure and an electrode structure, and
- a film comprising or consisting of one or more compound(s) of formula (I) or a mixture according to the invention, preferably wherein the film is an electro-optic film according to the invention,

wherein said waveguiding structure is at least partially in direct contact with said film and optionally wherein said electrode structure is at least partially in direct contact with said film,
and preferably wherein an electric field is induced into said one or more compound(s) of formula (I) comprised in said film *via* said electrode structure preferably to manipulate the refractive index of said one or more compound(s) of formula (I).

Preferably, the substrate contained in the electro-optic modulator-device comprises or consists of a Si semiconductor, an InP semiconductor, a GaAs semiconductor, a $Si_3N_4$ ceramic, and/or a $SiN_x$ ceramic material.

According to a preferred embodiment, the waveguiding structure contained in the electro-optic modulator-device comprises or consists of a Si semiconductor, an InP semiconductor, a GaAs semiconductor, a $Si_3N_4$ ceramic, a $SiN_x$ ceramic, a $SiN_xO_y$ ceramic material, $TiO_2$, $TiO_x$, $SiO_2$, $Al_2O_3$ and/or similar oxides and organic materials.

Generally, an electric field manipulates the refractive index of a material to which it is applied. The manipulation of the refractive index of the one or more compound(s) of formula (I) in the electro-optic modulator-device according to the invention obtained by the induction of the electric field depends on the magnitude and direction of the applied electric field. Within the context of the present text, a manipulation of the refractive index of the one or more compound(s) of formula (I) can mean a decrease or increase of the refractive index of the one or more compound(s) of formula (I).

According to a preferred embodiment of the modulator-device, said electrode structure is at least partially in direct contact with said waveguiding structure and preferably said waveguiding structure comprises at least two (parallel) rails separated by a slot, respectively, which are at least partially in direct contact with said film comprising or consisting of one or more compound(s) of formula (I) or a mixture according to the invention.

Preferably, the modulator-device exhibits a half-wave voltage length product of less than 1 Vmm and/or an optical loss of less than 3 dB/mm when operated at a wavelength of 1550 nm.

Another aspect of the present invention relates to a method for manufacturing an electro-optic modulator-device, preferably an electro-optic modulator-device according to the present invention, comprising or consisting of the following steps:

a) Providing one or more compound(s) of formula (I) or a mixture according to the invention and depositing it/them onto a substrate, preferably to form a film of the compound(s) of formula (I) or mixture on the substrate,

b) heating of the compound(s) of formula (I) deposited onto the substrate as obtained in step a) to a temperature which is equal to or higher than the glass transition temperature of the compound(s) of formula (I),

c) applying an aligning force, preferably an electric field, to the heated compound(s) of formula (I) deposited onto the substrate obtained in step b), wherein at least a part of the dipole vectors of the compound(s) of formula (I) deposited onto the substrate align with the applied aligning force,

d) cooling of the at least partially poled compound(s) of formula (I) deposited onto the substrate obtained in step c), while applying an aligning force as defined in step c), to a temperature below the glass transition temperature of the compound(s) of formula (I) deposited onto the substrate, wherein at least a part of the dipole vectors of the compound(s) of formula (I) deposited onto the substrate stay in the aligned orientation obtained in step c).

Preferably, the substrate used in step a) of the method according to the invention comprises or consists of a Si semiconductor, an InP semiconductor, a GaAs semiconductor, a $Si_3N_4$ ceramic, and/or a $SiN_x$ ceramic material.

According to a preferred embodiment of step a) of the method according to the invention, one or more compound(s) of formula (I) or a mixture according to the invention is/are provided and dissolved in one or more suitable solvent(s) to prepare an ink, the obtained ink is deposited onto a substrate, and a film comprising the one or more compound(s) of formula (I) or mixture according to the invention on the substrate is formed by drying the ink on the substrate.

In step d) of the method according to the invention, compound(s) of formula (I) according to the invention with electro-optic properties, deposited onto the substrate, are obtained.

Another aspect of the present invention relates to the use of a compound of formula (I) or of a mixture or of an

electro-optic film according to the invention or of an electro-optic modulator-device according to the invention or as manufactured according the invention, in a field selected from the group consisting of nonlinear optics, Mach-Zehnder modulators, silicon organic hybrid electro-optic modulators, materials for devices or arrangements for the control of the intensity, color, phase, polarization or direction of light arriving from an independent light source, preferably switching, gating, or modulating, photonic communication networks, optical data transmission, preferably in 6G applications, phased array radars, satellite and fiber telecommunications, cable television (CATV), optical gyroscopes for application in aerial and missile guidance, electronic counter measure (ECM) systems, backplane interconnects for high-speed computation, ultra-quick analog-to-digital conversion, land mine detection, radio frequency photonics, programmable photonics, cryo-communications, quantum computing, spatial light modulation, and all-optical (light-switching-light) signal processing.

(Preferred) embodiments of the compounds (I) to (VIII) according to the invention, especially of the compounds of formula (I) according to the invention, correspond to or can be derived from the (preferred) embodiments of the mixture according to the invention which are explained above or *vice versa.* (Preferred) embodiments of the compounds (I) to (VIII) according to the invention, especially of the compounds of formula (I) according to the invention, correspond to or can be derived from the (preferred) embodiments of the electro-optic film according to the invention which are explained above or *vice versa.* (Preferred) embodiments of the compounds (I) to (VIII) according to the invention, especially of the compounds of formula (I) according to the invention, correspond to or can be derived from the (preferred) embodiments of the electro-optic modulator-device according to the invention which are explained above or *vice versa.* (Preferred) embodiments of the compounds (I) to (VIII) according to the invention, especially of the compounds of formula (I) according to the invention, correspond to or can be derived from the (preferred) embodiments of the method according to the invention which are explained above or *vice versa.* (Preferred) embodiments of the compounds (I) to (VIII) according to the invention, especially of the compounds of formula (I) according to the invention, correspond to or can be derived from the (preferred) embodiments of the use according to the invention which are explained above or *vice versa.* Moreover, the (preferred) embodiments described herein can be arbitrarily combined with each other as long as technically sensible.

The invention will now be described in more detail hereinafter with references to the examples. Further aspects of the present invention are disclosed in the accompanying claims.

Examples

## 1. Commercially available starting materials

The commerically available starting materials and reagents were purchased from different suppliers such as 2,6-diisopropylbenzene, 3,5,5-trimethylcyclohex-2-en-1-one, and malononitrile from Sigma Aldrich, N,N-bis(2-hydroxyethyl) aniline and 2,2,2-trifluoracetophenone from Thermo Fisher Scientific, 1 ,2,3,4-tetrahydroquinoline from Acros, 1-(5-bromo-2-methoxyphenyl)adamantane and 2,6-dimethylbenzenethiol from BLDpharm, 4-fluorobenzonitrile and tert-butyl(chloro)diphenylsilane from ChemPUR, and *tert*-butyl(chloro)dimethylsilane and phenylmethanethiol from TCI.

## 2. Synthesis of 2-(4-((1E,3E)-3-(3-((E)-4-(bis(2-((tert-butyldiphenylsilyl)oxy)ethyl) amino)styryl)-2-((2,6-diisopropylbenzyl)thio)-5,5-dimethylcyclohex-2-en-1-ylidene)prop-1-en-1-yl)-3-cyano-5-phenyl-5-(trifluoromethyl) furan-2(5H)-ylidene)malono-nitrile (I-1)

The synthesis of (I-1) has been accomplished following **Scheme 3** below.

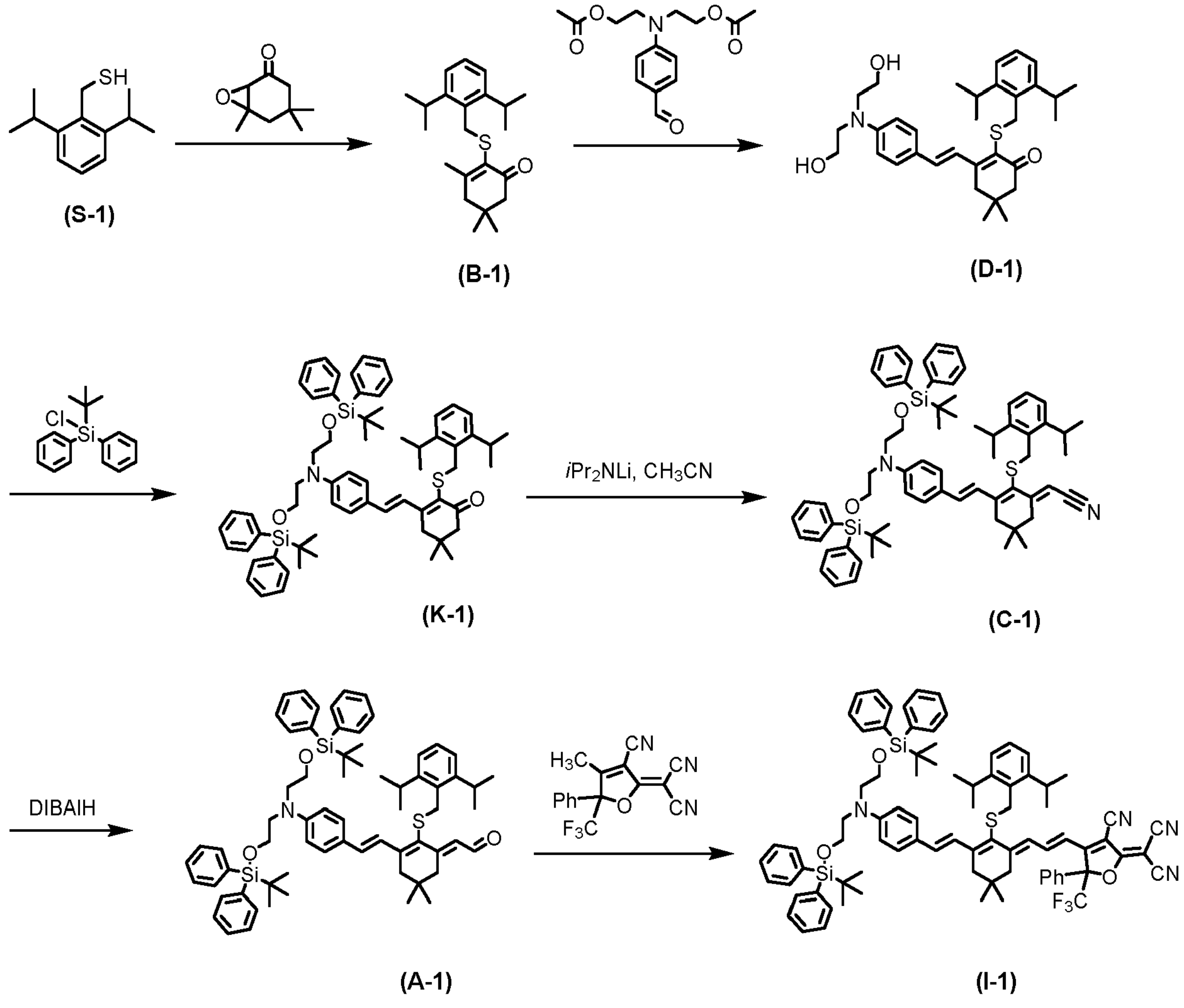


(S-1) (B-1) (D-1)

(K-1) (C-1)

(A-1) (I-1)

**Scheme 3**: Synthetic pathway to compound (I-1).

2.1 (2,6-diisopropylphenyl)methanethiol (S-1)

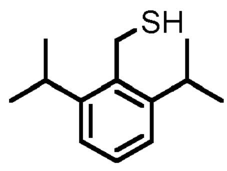

(S-1) was isolated in four steps. In the first step, 2-bromo-1,3-diisopropylbenzene was synthesized adapting a reported procedure (J.E. Siewert el al., "Phosphinecatalysed reductive coupling of dihalophosphanes," Dalton Transactions, 50, 2021). Following steps involved the synthesis of (2,6-diisopropylphenyl)methanol and 2-(bromomethyl)-1,3-diisopropylbenzene according to the protocol reported for (2,4,6-triisopropylphenyl)methanol and the bromination step afterward (S. Handa et al., "HandaPhos: A General Ligand Enabling Sustainable ppm Levels of Palladium-Catalyzed Cross-Couplings in Water at Room Temperature," Angewandte Chemie International Edition, 55, 2016). In the final step, dry-degassed ethanol (120 mL) was added to a flask containing 2-(bromomethyl)-1,3-diisopropylbenzene (12.5 g, 0.049 mol) and thiourea (3.73 g, 0.049 mol). The mixture was stirred at room temperature to obtain isothiourea salt as an intermediate. After 4 h, ethanol was evaporated, and the salt was hydrolyzed by 5M aqueous sodium hydroxide solution under reflux for 1 h. The reaction mixture was cooled with an ice bath and neutralized by the addition of 6M HCl until pH 2. The organics were extracted with dichloromethane, dried over sodium sulfate, and evaporated to obtain an oily liquid.

Column chromatography (hexane:ethyl acetate 10:1) yielded (S-1) as a colorless oil in 60% yield (6.12 g, 0.029 mol).

$^1$H-NMR (400 MHz, $CDCl_3$) δ 7.33 - 7.27 (m, 1H, *Ar-H*), 7.21 (d, *J* = 8.3 Hz, 2H, *Ar-H*), 3.92 (d, *J* = 6.4 Hz, 2H, *$CH_2$*), 3.35 (hept, *J* = 6.9 Hz, 2H, *CH*), 1.70 (t, *J* = 6.3 Hz, 1H, *SH*), 1.36 (d, *J* = 6.9 Hz, 12H, *$CH_3$*).

**2.2 2-((2,6-diisopropylbenzyl)thio)-3,5,5-trimethylcyclohex-2-en-1-one (B-1)**

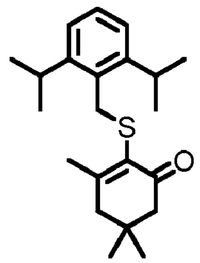

Under an argon atmosphere, dry dimethyl sulfoxide (15 mL) was slowly added to a flask containing (S-1) (7.5 g, 36 mmol) and potassium hydride (0.22 g, 5.4 mmol) and stirred at room temperature for 1 h. To the resulting solution, 4,4,6-trimethyl-7-oxabicyclo[4.1.0]heptan-2-one (6.11 g, 39.6 mmol) and N, N'-dimethylpropyleneurea (3.57 mL, 29.5 mmol) were added and heated at 100°C for 24 h. Diethyl ether was added to the cooled reaction mixture, washed with brine, and dried over sodium sulfate. The crude product was purified by column chromatography (hexane:ethyl acetate, 10:1) to obtain (B-1) as a colorless oil in 35% yield (4.3 g, 10.2 mmol).

$^1$H-NMR (400 MHz, $CDCl_3$) δ 7.23 (m, 1H, *Ar-H)*, 7.14 (d, *J* = 7.3 Hz, 2H, *Ar-H*), 4.04 (s, 2H, *$CH_2$*), 3.46 (hept, *J* = 6.8 Hz, 2H, *CH*), 2.41 (d, *J* = 4.9 Hz, 4H, *$CH_2$*), 2.19 (s, 3H, *$CH_3$*), 1.29 (d, *J* = 6.8 Hz, 12H, *$CH_3$*), 1.06 (s, 6H, *$CH_3$*).

**2.3 (E)-3-(4-(bis(2-hydroxyethyl)amino)styryl)-2-((2,6-diisopropylbenzyl)thio)-5,5-dimethylcyclohex-2-en-1-one (D-1)**

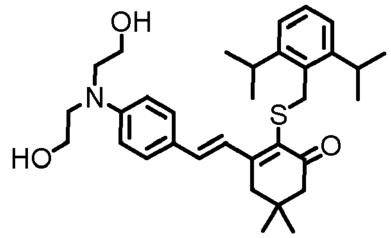

Piperidine (0.4 mL, 4.12 mmol) and 1 M lithium ethylate in ethanol (1.4 mL, 1.4 mmol) were added to the solution of (B-1) (1.5 g, 4.35 mmol) and ((4-formylphenyl)azanediyl)bis(ethane-2,1-diyl) diacetate (1.2 g, 4.12 mmol) (S. Guang et al., "Synthesis and properties of long conjugated organic optical limiting materials with different π-electron conjugation bridge structure," Dyes and pigments, 73, 2007) in 15 mL dry ethanol under argon. The reaction mixture was heated to 70°C for 3 days. After cooling to room temperature, the solvent was evaporated, water was added to the product under vigorous stirring, and 1 M hydrochloric acid was slowly added until pH 4. The solution was left to stir at room temperature overnight. The product was extracted with dichloromethane and the solvent was evaporated. The crude product was purified by column chromatography (dichloromethane 100-90% in ethyl acetate) obtaining (D-1) as an orange solid in 61% yield (1.35 g, 2.52 mmol).

$^1$H-NMR (400 MHz, $CDCl_3$) δ 7.94 (d, *J* = 16.3 Hz, 1H, CH), 7.39 (d, *J* = 8.9 Hz, 2H, *Ar-H*), 7.23 (d, *J* = 6.6 Hz, 1H, *Ar-H*), 7.15 (d, *J* = 8.0 Hz, 2H, *Ar-H)*, 6.99 (d, *J* = 16.1 Hz, 1H, CH), 6.65 (d, *J* = 9.0 Hz, 2H, *Ar-H*), 4.07 (s, 2H, *$CH_2$*), 3.90 (t, *J* = 4.9 Hz, 4H, *$CH_2$*), 3.64 (t, *J* = 4.9 Hz, 4H, *$CH_2$*), 3.54 (hept, *J* = 6.9 Hz, 2H, *CH*), 3.31 (s, 2H, *OH*), 2.64 (s, 2H, *$CH_2$*), 2.46 (s, 2H, *$CH_2$*), 1.31 (d, *J* = 6.8 Hz, 12H, *$CH_3$*), 1.11 (s, 6H, *$CH_3$*).

**2.4 (E)-3-(4-(bis(2-((tert-butyldiphenylsilyl)oxy)ethyl)amino)styryl)-2-((2,6-diisopropylbenzyl)thio)-5,5-dimethyl-cyclohex-2-en-1-one (K-1)**

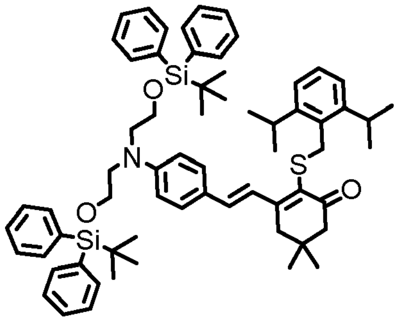

To a flask containing imidazole (0.85 g, 12.5 mmol) and dry dimethylformamide (9 mL) under an argon atmosphere, tert-butyl(chloro)diphenylsilane (1.59 mL, 6.23 mmol) was added dropwise. After 10 min of stirring, (D-1) (1.34 g, 2.49 mmol) was added, and the reaction was stirred overnight at room temperature. The reaction mixture was diluted with ethyl acetate and diethyl ether, washed with cold water, and brine, dried over sodium sulfate, and purified *via* column chromatography (hexane:ethyl acetate, 5:1) to get (K-1) as an orange solid in 68% yield (1.72 g, 1.7 mmol).

$^1$H-NMR (400 MHz, $CDCl_3$) δ 7.89 (d, *J* = 16.1 Hz, 1H, CH), 7.62 (d, *J* = 8.0, 1.5 Hz, 8H, *Ar-H),* 7.40 (t, *J* = 7.3 Hz, 4H, *Ar-H),* 7.33 (t, *J* = 7.8 Hz, 8H, *Ar-H*), 7.18 - 7.25 (m, 3H, *Ar-H),* 7.15 (d, *J* = 8.3 Hz, 2H, *Ar-H),* 6.95 (d, *J* = 16.1 Hz, 1H, CH), 6.31 (d, *J* = 9.1 Hz, 2H, *Ar-H),* 4.08 (s, 2H, $CH_2$), 3.75 (t, *J* = 6.4 Hz, 4H, $CH_2$), 3.52 (m, 6H, *CH* + $CH_2$), 2.65 (s, 2H, $CH_2$), 2.48 (s, 2H, $CH_2$), 1.30 (d, *J* = 6.9 Hz, 12H, $CH_3$), 1.13 (s, 6H, $CH_3$), 1.04 (s, 18H, $CH_3$).

**2.5 (E)-2-(3-((E)-4-(bis(2-((tert-butyldiphenylsilyl)oxy)ethyl)amino)styryl)-2-((2,6-diisopropylbenzyl)thio)-5,5-dimethylcyclohex-2-en-1-ylidene)acetonitrile (C-1)**

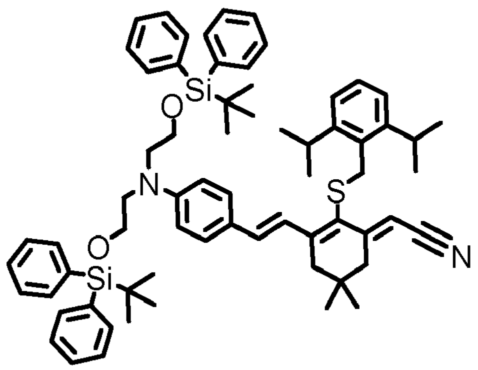

The reaction conditions and synthetic procedure for (C-1) to (C-10) are described in **Table 1** below.

$^1$H-NMR (400 MHz, $CDCl_3$) δ 7.84 (d, *J* = 16.1 Hz, 1H, CH), 7.63 (dd, *J* = 8.1, 1.7 Hz, 8H, *Ar-H*), 7.41 (t, *J* = 7.4 Hz, 4H, *Ar-H),* 7.34 (t, *J* = 7.2 Hz, 8H, *Ar-H),* 7.17 - 7.25 (m, 3H, *Ar-H),* 7.12 (d, *J* = 8.3 Hz, 2H, *Ar-H),* 6.84 (d, *J* = 16.1 Hz, 1H, CH), 6.34 - 6.37 (m, 3H, *Ar-H + CH),* 3.83 (s, 2H, $CH_2$), 3.77 (t, *J* = 6.4 Hz, 4H, $CH_2$), 3.52 (t, $CH_2$, *J* = 6.4 Hz, 4H, $CH_2$), 3.32 (hept, *J* = 6.8 Hz, 2H, *CH),* 2.64 (s, 2H, $CH_2$), 2.52 (s, 2H, $CH_2$), 1.25 (d, *J* = 6.8 Hz, 12H, $CH_3$), 1.06 (s, 6H, $CH_3$), 1.05 (s, 18H, $CH_3$).

**2.6 (E)-2-(3-((E)-4-(bis(2-((tert-butyldiphenylsilyl)oxy)ethyl)amino)styryl)-2-((2,6-diisopropylbenzyl)thio)-5,5-dimethylcyclohex-2-en-1-ylidene)acetaldehyde (A-1)**

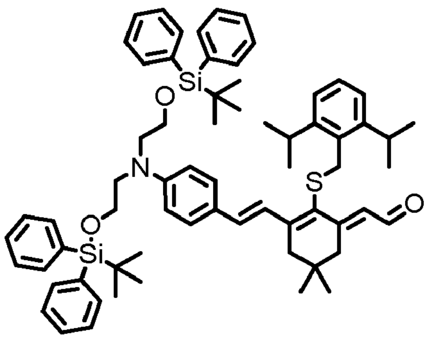

The reaction conditions and synthetic procedure for (A-1) to (A-10) are described in **Table 2** below.

$^1$H-NMR (400 MHz, $CDCl_3$) δ 10.21 (d, *J* = 8.0 Hz, 1H, *CH*), 7.93 (d, *J* = 16.3 Hz, 1H, *CH),* 7.65 (dd, *J* = 8.0, 1.5 Hz, 8H, *Ar-H),* 7.41 (t, *J* = 7.4 Hz, 4H, *Ar-H),* 7.34 (t, *J* = 7.1 Hz, 8H, *Ar-H),* 7.10 - 7.24 (m, 6 H, *CH* + *Ar-H*), 6.84 (d, *J* = 16.3 Hz, 1H, CH), 6.36 (d, *J* = 9.0 Hz, 2H, *Ar-H),* 3.84 (s, 2H, *$CH_2$),* 3.81 - 3.70 (m, 4H, *$CH_2$),* 3.51 (t, *J* = 6.4 Hz, 4H, *$CH_2$),* 3.36 (hept, *J* = 6.8 Hz, 2H, *CH*), 2.81 (s, 2H, *$CH_2$),* 2.54 (s, 2H, *$CH_2$),* 1.25 (d, *J* = 6.9 Hz, 12H, *$CH_3$),* 1.08 (s, 6H, *$CH_3$),* 1.05 (s, 18H, *$CH_3$*).

**2.7 2-(4-((1E,3E)-3-(3-((E)-4-(bis(2-((tert-butyldiphenylsilyl)oxy)ethyl)amino) styryl)-2-((2,6-diisopropylbenzyl) thio)-5,5-dimethylcyclohex-2-en-1-ylidene)prop-1-en-1-yl)-3-cyano-5-phenyl-5-(trifluoromethyl)furan-2(5H)-ylidene)malononitrile (I-1)**

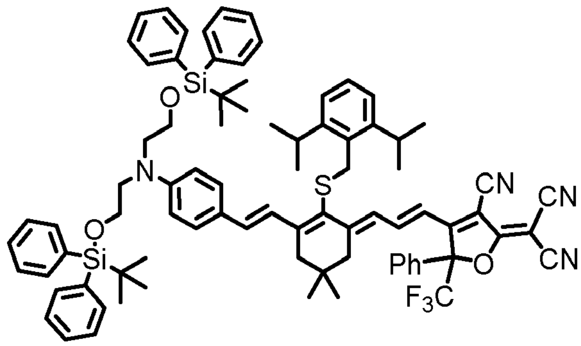

The reaction conditions and synthetic procedure for (I-1) to (I-10) are described in **Table 3** below.

$^1$H-NMR (400 MHz, $CDCl_3$) δ 8.29 (t, *J* = 13.6 Hz, 1H, CH), 8.06 (d, *J* = 16.0 Hz, 1H, *CH),* 7.60 - 7.66 (dd, *J* = 6.6 Hz, 1.4 Hz, 8H, *Ar-H),* 7.49 - 7.58 (m, 6H, *CH* + *Ar-H*), 7.40 (t, *J* = 7.4 Hz, 4H, *Ar-H*), 7.28 - 7.35 (m, 8H, *Ar-H*), 7.21 (d, *J* = 7.1 Hz, 1 H, *Ar-H*), 7.11 (d, *J* = 7.6 Hz, 2H, *Ar-H*), 7.02 (d, *J* = 15.9 Hz, 1H, CH), 6.42 (d, *J* = 9.0 Hz, 2H, *Ar-H),* 6.34 (d, *J* = 14.5 Hz, 1H, CH), 3.80 (s, 2H, *$CH_2$),* 3.78 (t, *J* = 6.3 Hz, 4H, *$CH_2$),* 3.54 (t, *J* = 6.3 Hz, 4H, *$CH_2$),* 3.31 (hept, *J* = 6.8 Hz, 2H, *CH),* 2.59 (s, 2H, *$CH_2$),* 2.35 - 2.57 (m, 2H, *$CH_2$),* 1.26 (s, 3H, *$CH_3$),* 1.20 (dd, *J* = 6.8, 2.4 Hz, 12H, *$CH_3$),* 1.04 (s, 18H, *$CH_3$),* 0.99 (s, 3H, *$CH_3$*).

The synthetic path for (I-2) to (I-10) was identical to (I-1), besides using different donor groups in examples (I-6) to (I-10).

**3. <u>2-(4-((1E,3E)-3-(3-((E)-4-(bis(2-((tert-butyldiphenylsilyl)oxylethyl)amino) styryl)-2-((2,6-diisopropylbenzyl) oxy)-5,5-dimethylcyclohex-2-en-1-ylidene)prop-1-en-1-yl)-3-cyano-5-phenyl-5-(trifluoromethyl)furan-2(5H)-vlidene)malononitrile (I-2)</u>**

**3.1 2-((2,6-diisopropylbenzyl)oxy)-3,5,5-trimethylcyclohex-2-en-1-one (B-2)**

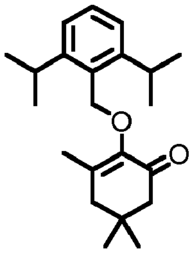

Under an argon atmosphere, dry dimethyl sulfoxide (10 mL) was slowly added to a flask containing (2,6-diisopropylphenyl)methanol (5.5 g, 28 mmol) (S. Handa et al., "HandaPhos: A General Ligand Enabling Sustainable ppm Levels of Palladium-Catalyzed Cross-Couplings in Water at Room Temperature," Angewandte Chemie International Edition, 55, 2016) and potassium hydride (0.17 g, 4.3 mmol) and stirred at room temperature for 1 h. To the resulting solution, 4,4,6-trimethyl-7-oxabicyclo[4.1.0]heptan-2-one (4.85 g, 31.5 mmol) and N, N'-dimethylpropyleneurea (2.84 mL, 23.5 mmol) were added and heated at 100°C for 24 h. Diethyl ether was added to the cooled reaction mixture, washed with brine, and dried over sodium sulfate. The crude product was purified by column chromatography (hexane:ethyl acetate, 10:1) to obtain (B-2) as a yellow solid in 44% yield (4.1 g, 12.5 mmol).

$^1$H-NMR (400 MHz, $CDCl_3$) δ 7.26 - 7.20 (m, 1H, *Ar-H*), 7.13 (d, *J* = 7.6 Hz, 2H, *Ar-H*), 4.96 (s, 2H, *$CH_2$*), 3.52 (hept, *J* = 6.9 Hz, 2H, *CH*), 2.32 (s, 2H, *$CH_2$*), 2.23 (s, 2H, *$CH_2$*), 1.72 (s, 3H, *$CH_3$*), 1.21 (d, *J* = 6.9 Hz, 12H, *$CH_3$*), 1.02 (s, 6H, *$CH_3$*).

**3.2 (E)-3-(4-(bis(2-hydroxyethyl)amino)styryl)-2-((2,6-diisopropylbenzyl)oxy)-5,5-dimethylcyclohex-2-en-1-one (D-2)**

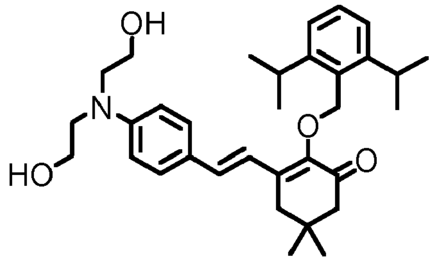

Piperidine (0.42 mL, 4.3 mmol) and 1 M lithium ethylate in ethanol (1.52 mL, 1.52 mmol) were added to the solution of (B-2) (1.5 g, 4.57 mmol) and ((4-formylphenyl)azanediyl)bis(ethane-2,1-diyl) diacetate (1.27 g, 4.3 mmol) (S. Guang et al., "Synthesis and properties of long conjugated organic optical limiting materials with different π-electron conjugation bridge structure," Dyes and pigments, 73, 2007) in 15 mL dry ethanol under argon. The reaction mixture was heated to 70°C for 3 days. After cooling to room temperature, the solvent was evaporated, water was added to the product under vigorous stirring, and 1 M hydrochloric acid was slowly added until pH 4. The solution was left to stir at room temperature overnight. The product was extracted with dichloromethane and the solvent was evaporated. The crude product was purified by column chromatography (dichloromethane 100-90% in ethyl acetate) obtaining (D-2) as a yellow solid in 20% yield (0.44 g, 0.71 mmol).

$^1$H-NMR (400 MHz, $CDCl_3$) δ 7.34 - 7.30 (m, 1H, *Ar-H*), 7.21 (d, *J* = 7.5 Hz, 2H, *Ar-H*), 7.20 - 7.14 (m, 3H, *Ar-H* + *CH*), 6.75 (d, *J* = 16.4 Hz, 1H, CH), 6.60 (d, *J* = 8.9 Hz, 2H, *Ar-H*), 5.09 (s, 2H, *$CH_2$*), 3.89 (t, *J* = 4.9 Hz, 4H, *$CH_2$*), 3.63 (m, 6H, *CH* + *$CH_2$*), 2.98 (bs, 2H, *OH*), 2.54 (s, 2H, *$CH_2$*), 2.44 (s, 2H, *$CH_2$*), 1.27 (d, *J* = 6.9 Hz, 12H, *$CH_3$*), 1.14 (s, 6H, *$CH_3$*).

**3.3 (E)-3-(4-(bis(2-((tert-butyldiphenylsilyl)oxy)ethyl)amino)styryl)-2-((2,6-diisopropylbenzyl)oxy)-5,5-dimethylcyclohex-2-en-1-one (K-2)**

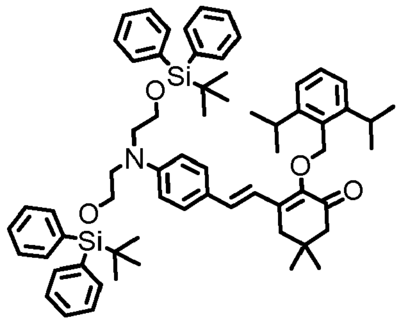

To a flask containing imidazole (0.26 g, 3.83 mmol) and dry dimethylformamide (3 mL) under an argon atmosphere, tert-butyl(chloro)diphenylsilane (0.49 mL, 1.91 mmol) was added dropwise. After 10 min of stirring, (D-2) (0.4 g, 0.77 mmol) was added, and the reaction was stirred overnight at room temperature. The reaction mixture was diluted with ethyl acetate and diethyl ether, washed with cold water, and brine, dried over sodium sulfate, and purified *via* column chromatography (hexane:ethyl acetate, 5:1) to get (K-2) as an orange solid in 68% yield (0.53 g, 0.53 mmol).

$^1$H-NMR (400 MHz, $CDCl_3$) δ 7.61 (dd, *J* = 8.0, 1.5 Hz, 8H, *Ar-H),* 7.39 (t, 4H, *J* = 7.3 Hz, *Ar-H),* 7.32 (m, 9H, *Ar-H),* 7.19 (d, *J* = 8.1 Hz, 2H, *Ar-H),* 7.12 (d, *J* = 16.4 Hz, 1H, *CH),* 6.99 (d, *J* = 9.1 Hz, 2H, *Ar-H),* 6.71 (d, *J* = 16.3 Hz, 1H, CH), 6.24 (d, *J* = 9.0 Hz, 2H, *Ar-H),* 5.08 (s, 2H, $CH_2$), 3.77 - 3.69 (m, 4H, $CH_2$), 3.62 (hept, *J* = 6.7 Hz, 2H, *CH),* 3.47 (t, *J* = 6.4 Hz, 4H, $CH_2$), 2.54 (s, 2H, $CH_2$), 2.43 (s, 2H, $CH_2$), 1.24 (d, *J* = 6.8 Hz, 12H, $CH_3$), 1.14 (s, 6H, $CH_3$), 1.04 (s, 18H, $CH_3$).

**3.4 (E)-2-(3-((E)-4-(bis(2-((tert-butyldiphenylsilyl)oxy)ethyl)amino)styryl)-2-((2,6-diisopropylbenzyl)oxy)-5,5-dimethylcyclohex-2-en-1-ylidene)acetonitrile (C-2)**

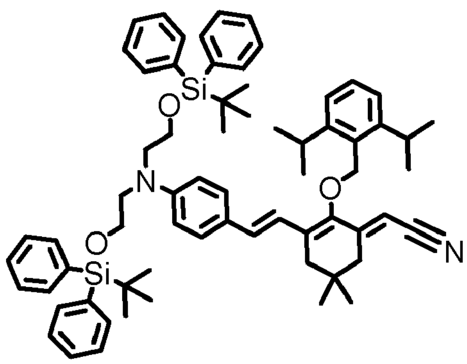

$^1$H-NMR (400 MHz, $CDCl_3$) δ 7.62 (dd, *J* = 8.1, 1.4 Hz, 8H, *Ar-H),* 7.41 (t, *J* = 7.4 Hz, 4H, *Ar-H),* 7.33 (t, *J* = 7.9 Hz, 8H, *Ar-H),* 7.17 (d, *J* = 8.1 Hz, 2H, *Ar-H),* 6.97 - 6.93 (m, 3H, *Ar-H + CH),* 6.56 (d, *J* = 16.0 Hz, 1H, CH), 6.28 (d, *J* = 8.9 Hz, 2H, *Ar-H),* 5.40 (s, 1H, CH), 4.94 (s, 2H, $CH_2$), 3.75 (t, *J* = 6.5 Hz, 4H, $CH_2$), 3.49 (t, *J* = 6.4 Hz, 4H, $CH_2$), 3.37 (hept, *J* = 6.9 Hz, 2H, *CH),* 2.57 (s, 2H, $CH_2$), 2.38 (s, 2H, $CH_2$), 1.23 (d, *J* = 6.9 Hz, 12H, $CH_3$), 1.07 (s, 6H, $CH_3$), 1.04 (s, 18H, $CH_3$).

**3.5 (E)-2-(3-((E)-4-(bis(2-((tert-butyldiphenylsilyl)oxy)ethyl)amino)styryl)-2-((2,6-diisopropylbenzyl)oxy)-5,5-dimethylcyclohex-2-en-1-ylidene)acetaldehyde (A-2)**

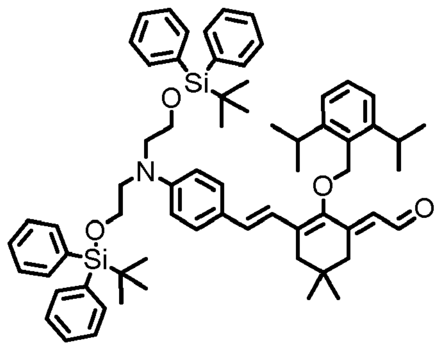

$^1$H-NMR (400 MHz, $CDCl_3$) δ 10.10 (d, *J* = 8.1 Hz, 1H, CH), 7.62 (dd, *J* = 8.1, 1.4 Hz, 8H, *Ar-H),* 7.41 (t, *J* = 7.4 Hz, 4H, *Ar-H),* 7.33 (t, *J* = 7.1 Hz, 8H, *Ar-H),* 7.21 (d, *J* = 6.6 Hz, 1H, *Ar-H),* 7.14 (d, *J* = 7.0 Hz, 2H, *Ar-H),* 6.90 (d, *J* = 16.4 Hz, 1H, CH), 6.82 (d, *J* = 8.9 Hz, 2H, *Ar-H),* 6.52 (d, *J* = 16.3 Hz, 1H, CH), 6.36 (d, *J* = 8.1 Hz, 1H, *CH),* 6.26 (d, *J* = 8.8 Hz, 2H, *Ar-H),* 4.96 (s, 2H, $CH_2$), 3.75 (t, *J* = 6.4 Hz, 4H, $CH_2$), 3.48 (t, *J* = 6.2 Hz, 4H, $CH_2$), 3.39 (hept, *J* = 6.8 Hz, 2H, *CH),* 2.79 (s, 2H, $CH_2$), 2.39 (s, 2H, $CH_2$), 1.21 (d, *J* = 6.9 Hz, 12H, $CH_3$), 1.09 (s, 6H, $CH_3$), 1.04 (s, 18H, $CH_3$).

**3.6 2-(4-((1E,3E)-3-(3-((E)-4-(bis(2-((tert-butyldiphenylsilyl)oxy)ethyl) amino)styryl)-2-((2,6-diisopropylbenzyl) oxy)-5,5-dimethylcyclohex-2-en-1-ylidene)prop-1-en-1-yl)-3-cyano-5-phenyl-5-(trifluoromethyl)furan-2(5H)-ylidene)malononitrile (I-2)**

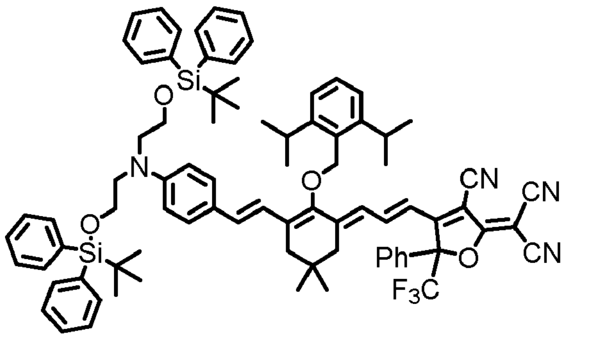

$^1$H-NMR (400 MHz, $CDCl_3$) δ 8.06 (t, *J* = 13.2 Hz, 1 H, *CH*), 7.61 (dd, *J* = 8.0, 1.5 Hz, 8H, *Ar-H),* 7.47 - 7.57 (m, 5H, *Ar-H),* 7.41 (t, *J* = 7.4 Hz, 4H, *Ar-H),* 7.33 (t, *J* = 7.2 Hz, 8H, *Ar-H),* 7.23 (d, *J* = 8.6 Hz, 1H, *Ar-H),* 7.08 - 7.18 (m, 3H, *Ar-H + CH),* 7.01 (d, *J* = 9.0 Hz, 2H, *Ar-H),* 6.77 (d, *J* = 15.9 Hz, 1H, CH), 6.57 (d, *J* = 13.4 Hz, 1H, *CH),* 6.32 (d, *J* = 9.1 Hz, 2H, *Ar-H),* 6.13 (d, *J* = 14.0 Hz, 1H, CH), 4.96 (s, 2H, $CH_2$), 3.76 (t, *J* = 6.3 Hz, 4H, $CH_2$), 3.51 (t, *J* = 6.3 Hz, 4H, $CH_2$), 3.34 (hept, *J* = 6.7 Hz, 2H, *CH),* 2.47 (s, 2H, $CH_2$), 2.36 (q, *J* = 15.9 Hz, 2H, $CH_2$), 1.26 (s, 3H, $CH_3$), 1.19 (dd, *J* = 9.7, 6.8 Hz, 12H, $CH_3$), 1.04 (s, 18H, $CH_3$), 1.01 (s, 3H, $CH_3$).

**4. Synthesis of 2-(4-((1E,3E)-3-(2-(benzylthio)-3-((E)-4-(bis(2-((tert-butyldiphenyl-silyl)oxy)ethyl)amino)styryl)-5,5-dimethylcyclohex-2-en-1-ylidene)prop-1-en-1-yl)-3-cyano-5-phenyl-5-(trifluoromethyl)furan-2(5H)-ylidene)malononitrile (I-3)**

**4.1 2-(benzylthio)-3,5,5-trimethylcyclohex-2-en-1-one (B-3)**

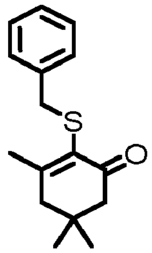

Under an argon atmosphere, dry dimethyl sulfoxide (8 mL) was slowly added to a flask containing 2.5 g (20 mmol) of phenylmethanethiol and 0.12 g (3 mmol) of potassium hydride and stirred at room temperature for 1 h. To the resulting solution, 4,4,6-trimethyl-7-oxabicyclo[4.1.0]heptan-2-one (3 g, 21.7 mmol) and N,N'-dimethylpropyleneurea (1.98 mL, 16.4 mmol) were added and heated at 100°C for 24 h. Diethyl ether was added to the cooled reaction mixture, washed with brine, and dried over sodium sulfate. The crude product was purified by column chromatography (hexane:ethyl acetate, 10:1) to obtain (B-3) as a brown oil in 25% yield (1.28 g, 4.92 mmol).

$^1$H-NMR (400 MHz, $CDCl_3$) δ 7.25 - 7.14 (m, 5H, *Ar-H*), 3.91 (s, 2H, $CH_2$), 2.29 (s, 2H, $CH_2$), 2.20 (s, 2H, $CH_2$), 1.90 (s, 3H, $CH_3$), 0.92 (s, 6H, $CH_3$).

**4.2 (E)-2-(benzylthio)-3-(4-(bis(2-hydroxyethyl)amino)styryl)-5,5-dimethylcyclo-hex-2-en-1-one (D-3)**

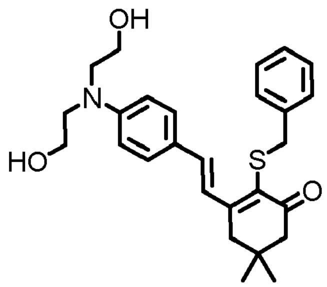

Piperidine (0.46 mL, 4.66 mmol) and 1 M lithium ethylate in ethanol (1.63 mL, 1.63 mmol) were added to the solution of (B-3) (1.28 g, 4.92 mmol) and ((4-formylphenyl)azanediyl)bis(ethane-2,1-diyl) diacetate (1.37 g, 4.66 mmol) (S. Guang et al., "Synthesis and properties of long conjugated organic optical limiting materials with different π-electron conjugation bridge structure," Dyes and pigments, 73, 2007) in 17 mL dry ethanol under argon. The reaction mixture was heated to 70°C for 3 days. After cooling to room temperature, the solvent was evaporated, water was added to the product under vigorous stirring, and 1 M hydrochloric acid was slowly added until pH 4. The solution was left to stir at room temperature overnight. The product was extracted with dichloromethane and the solvent was evaporated. The crude product was purified by column chromatography (dichloromethane 100-90% in ethyl acetate) obtaining (D-3) as an orange solid in 33% yield (0.69 g, 1.53 mmol).

$^1$H-NMR (400 MHz, $CDCl_3$) δ 7.62 (d, *J* = 15.9 Hz, 1H, CH), 7.36 (d, *J* = 9.0 Hz, 2H, *Ar-H)*, 7.24 - 7.14 (m, 4H, *Ar-H)*, 7.09 (t, *J* = 6.9 Hz, 1H, *Ar-H)*, 6.84 (d, *J* = 16.0 Hz, 1H, *CH)*, 6.70 (d, *J* = 9.5 Hz, 2H, *Ar-H)*, 3.96 (s, 2H, *CH)*, 3.92 (t, *J* = 4.9 Hz, 4H, $CH_2$), 3.67 (bs, 4H, $CH_2$), 3.05 (bs, 2H, *OH)*, 2.47 (s, 2H, $CH_2$), 2.35 (s, 2H, $CH_2$), 0.97 (s, 6H, $CH_3$).

**4.3 (E)-2-(benzylthio)-3-(4-(bis(2-((tert-butyldiphenylsilyl)oxy)ethyl)amino)styryl)-5,5-dimethylcyclohex-2-en-1-one (K-3)**

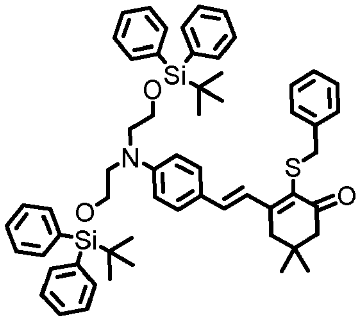

To a flask containing imidazole (0.51 g, 7.53 mmol) and dry dimethylformamide (7 mL) under an argon atmosphere, tert-butyl(chloro)diphenylsilane (0.96 mL, 3.76 mmol) was added dropwise. After 10 min of stirring, (D-3) (0.68 g, 1.51 mmol) was added, and the reaction was stirred overnight at room temperature. The reaction mixture was diluted with ethyl acetate and diethyl ether, washed with cold water, and brine, dried over sodium sulfate, and purified *via* column chromatography (hexane:ethyl acetate, 5:1) to get (K-3) as an orange solid in 68% yield (0.95 g, 1.02 mmol).

$^1$H-NMR (400 MHz, $CDCl_3$) δ 7.63 (dd, *J* = 6.8, 1.3 Hz, 8H, *Ar-H),* 7.57 (d, *J* = 16.3 Hz, 1H, CH), 7.43 (t, *J* = 6.8 Hz, 4H, *Ar-H),* 7.35 (t, *J* = 7.6 Hz, 8H, *Ar-H),* 7.22 (d, *J* = 7.1 Hz, 2H, *Ar-H),* 7.20 - 7.12 (m, 4H, *Ar-H),* 7.07 (t, *J* = 7.3 Hz, 1H, *Ar-H),* 6.79 (d, *J* = 16.1 Hz, 1H, CH), 6.28 (d, *J* = 9.0 Hz, 2H, *Ar-H),* 3.98 (s, 2H, $CH_2$), 3.76 (t, *J* = 6.4 Hz, 4H, $CH_2$), 3.49 (t, *J* = 6.4 Hz, 4H, $CH_2$), 2.47 (s, 2H, $CH_2$), 2.36 (s, 2H, $CH_2$), 1.05 (s, 18H, $CH_3$), 0.98 (s, 6H, $CH_3$).

### 4.4 (E)-2-(2-(benzylthio)-3-((E)-4-(bis(2-((tert-butyldiphenylsilyl)oxy)ethyl) amino)styryl)-5,5-dimethylcyclohex-2-en-1-ylidene)acetonitrile (C-3)

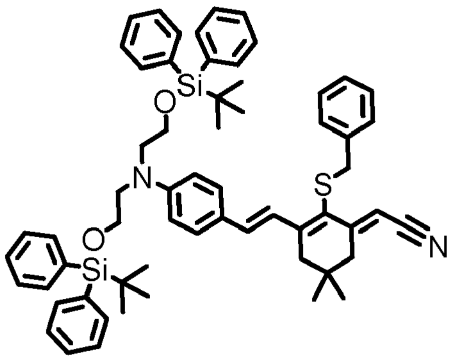

$^1$H-NMR (400 MHz, $CDCl_3$) δ 7.63 (dd, *J* = 8.1, 1.4 Hz, 8H, *Ar-H*), 7.57 (d, *J* = 16.3 Hz, 1H, CH), 7.42 (q, *J* = 6.8, 6.3 Hz, 4H, *Ar-H*), 7.39 - 7.29 (m, 8H, *Ar-H*), 7.22 - 7.09 (m, 7H, *Ar-H*), 6.69 (d, *J* = 16.3 Hz, 1H, CH), 6.29 (d, *J* = 9.0 Hz, 2H, *Ar-H*), 6.15 (s, 1H, *CH*), 3.75 (m, 6H, $CH_2$), 3.48 (m, 4H, $CH_2$), 2.50 (s, 2H, $CH_2$), 2.37 (s, 2H, $CH_2$), 1.05 (s, 18H, $CH_3$), 0.96 (s, 6H, $CH_3$).

### 4.5 (E)-2-(2-(benzylthio)-3-((E)-4-(bis(2-((tert-butyldiphenylsilyl)oxy)ethyl) amino)styryl)-5,5-dimethylcyclohex-2-en-1-ylidene)acetaldehyde (A-3)

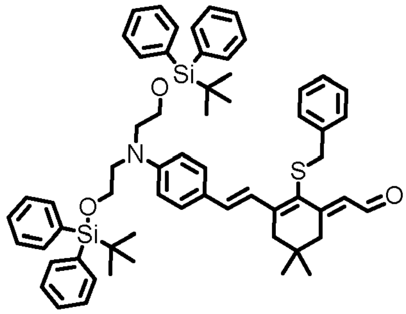

$^1$H-NMR (400 MHz, $CDCl_3$) δ 10.12 (d, *J* = 8.1 Hz, 1H, CH), 7.64 (dd, *J* = 8.0, 1.5 Hz, 9H, *Ar-H* + *CH*), 7.43 (t, *J* = 7.4 Hz, 4H, *Ar-H),* 7.35 (t, *J* = 7.2 Hz, 8H, *Ar-H),* 7.16 (d, *J* = 5.0 Hz, 4H, *Ar-H),* 7.12 (d, *J* = 8.9 Hz, 2H, *Ar-H),* 7.08 (m, 1H, *Ar-H),* 7.00 (d, *J* = 8.1 Hz, 1H, *CH),* 6.69 (d, *J* = 16.1 Hz, 1H, CH), 6.29 (d, *J* = 8.9 Hz, 2H, *Ar-H),* 3.85 - 3.67 (m, 6H, $CH_2$), 3.50 (t, *J* = 6.4 Hz, 4H, $CH_2$), 2.67 (s, 2H, $CH_2$), 2.40 (s, 2H, $CH_2$), 1.05 (s, 18H, $CH_3$), 0.98 (s, 6H, $CH_3$).

**4.6 2-(4-((1E,3E)-3-(2-(benzylthio)-3-((E)-4-(bis(2-((tert-butyldiphenylsilyl)oxy) ethyl)amino)styryl)-5,5-dimethyl-cyclohex-2-en-1-ylidene)prop-1-en-1-yl)-3-cyano-5-phenyl-5-(trifluoromethyl)furan-2(5H)-ylidene)malononitrile (I-3)**

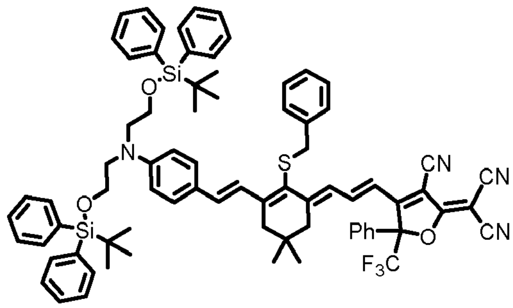

$^1$H-NMR (400 MHz, $CDCl_3$) δ 7.99 (t, *J* = 13.2 Hz, 1H, CH), 7.79 (d, *J* = 15.9 Hz, 1H, *CH),* 7.63 (d, *J* = 7.4 Hz, 8H, *Ar-H*), 7.58 - 7.49 (m, 5H, *Ar-H*), 7.43 (t, *J* = 7.3 Hz, 4H, *Ar-H*)*,* 7.35 (overlapped, 9H, *Ar-H* + *CH*), 7.19 (d, *J* = 8.8 Hz, 2H, *Ar-H*), 7.11 (s, 4H, *Ar-H*), 7.06 (bs, 1H, *Ar-H*), 6.88 (d, *J* = 16.0 Hz, 1H, CH), 6.41 -6.30 (m, 3H, *Ar-H* + *CH*), 3.78 (t, *J* = 6.4 Hz, 4H, $CH_2$), 3.74 (s, 2H, $CH_2$), 3.52 (t, *J* = 6.4 Hz, 4H, $CH_2$), 2.46 (s, 2H, $CH_2$), 2.34 - 2.15 (m, 2H, $CH_2$), 1.05 (s, 18H, $CH_3$), 0.94 (s, 4H, $CH_3$), 0.86 (s, 6H, $CH_3$).

**5. <u>Synthesis of 2-(4-((1E,3E)-3-(3-((E)-4-(bis(2-((tert-butyldiphenylsilyl)oxy)ethyl) amino)styryl)-2-((2,6-diisopropylphenyl)thio)-5,5-dimethylcyclohex-2-en-1-ylidene) prop-1-en-1-yl)-3-cyano-5-phenyl-5-(trifluoromethyl) furan-2(5H)-vlidene)malono-nitrile (I-4)</u>**

**5.1 2-((2,6-diisopropylphenyl)thio)-3,5,5-trimethylcyclohex-2-en-1-one (B-4)**

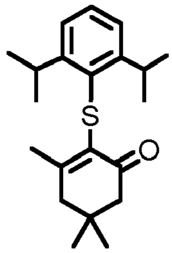

Sodium metal (30 mg, 1.29 mmol) was added to dry ethanol (2 mL) in a flask under an argon atmosphere and stirred at room temperature until completely dissolved. To that solution, 0.5 g (2.57 mmol) of 2,6-diisopropylbenzenethiol

(synthesized following the reported protocol in E. Hartmann and S.E. Denmark, "Structural, Mechanistic, Spectroscopic, and Preparative Studies on the Lewis Base Catalyzed, Enantioselective Sulfenofunctionalization of Alkenes," Helvetica chimica acta, 100, 2017) was added and the reaction mixture was stirred at room temperature for 1 h, followed by dropwise addition of 4,4,6-trimethyl-7-oxabicyclo[4.1.0]heptan-2-one (0.397 g, 2.57 mmol) and continued stirring for another 2 h. The mixture was diluted with ethyl acetate, washed with brine, and dried over sodium sulfate. The crude product was purified by column chromatography (hexane:ethyl acetate 10:1) to obtain (B-4) as a brown solid in 30% yield (0.26 g, 0.78 mmol).

$^1$H-NMR (400 MHz, $CDCl_3$) δ 7.19 - 7.13 (m, 1H, *Ar-H*), 7.03 (d, *J* = 7.6 Hz, 2H, *Ar-H*), 3.78 (hept, *J* = 6.9 Hz, 2H, *CH*), 2.25 (s, 2H, $CH_2$), 2.13 (s, 2H, $CH_2$), 2.08 (s, 3H, $CH_3$), 1.14 (d, *J* = 6.9 Hz, 12H, $CH_3$), 0.92 (s, 6H, $CH_3$).

**5.2 (E)-3-(4-(bis(2-hydroxyethyl)amino)styryl)-2-((2,6-diisopropylphenyl)thio)-5,5-dimethylcyclohex-2-en-1-one (D-4)**

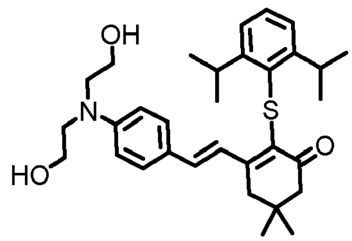

Piperidine (0.31 mL, 3.16 mmol) and 1 M lithium ethylate in ethanol (1.11 mL, 1.11 mmol) were added to the solution of (B-4) (1.1 g, 3.48 mmol) and ((4-formylphenyl)azanediyl)bis(ethane-2,1-diyl) diacetate (0.92 g, 3.15 mmol) (S. Guang et al., "Synthesis and properties of long conjugated organic optical limiting materials with different π-electron conjugation bridge structure," Dyes and pigments, 73, 2007) in 10 mL dry ethanol under argon. The reaction mixture was heated to 70°C for 3 days. After cooling to room temperature, the solvent was evaporated, water was added to the product under vigorous stirring, and 1 M hydrochloric acid was slowly added until pH 4. The solution was left to stir at room temperature overnight. The product was extracted with dichloromethane and the solvent was evaporated. The crude product was purified by column chromatography (dichloromethane 100-90% in ethyl acetate) obtaining (D-4) as an orange solid in 30% yield (0.54 g, 1.03 mmol).

$^1$H-NMR (400 MHz, $CDCl_3$) δ 7.83 (d, *J* = 16.3 Hz, 1H, CH), 7.37 (d, *J* = 8.9 Hz, 2H, *Ar-H*), 7.24 (d, *Ji*= 8.3 Hz, 1H, *Ar-H*), 7.13 (d, *J* = 7.6 Hz, 2H, *Ar-H*), 6.98 (d, *J* = 16.1 Hz, 1H, CH), 6.69 (d, *J* = 8.8 Hz, 2H, *Ar-H*), 3.96 - 3.85 (m, 6H, $CH_2$ + *CH*), 3.65 (t, *J* = 4.9 Hz, 4H, $CH_2$), 3.03 (s, 2H, *OH*), 2.59 (s, 2H, $CH_2$), 2.27 (s, 2H, $CH_2$), 1.22 (d, *J* = 6.9 Hz, 12H, $CH_3$), 1.06 (s, 6H, $CH_3$).

**5.3 (E)-3-(4-(bis(2-((tert-butyldiphenylsilyl)oxy)ethyl)amino)styryl)-2-((2,6-diisopropylphenyl)thio)-5,5-dimethylcyclohex-2-en-1-one (K-4)**

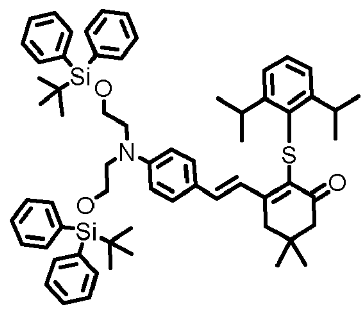

To a flask containing imidazole (0.352 g, 5.17 mmol) and dry dimethylformamide (5 mL) under an argon atmosphere, tert-butyl(chloro)diphenylsilane (0.66 mL, 2.59 mmol) was added dropwise. After 10 min of stirring, (D-4) (0.54 g, 1.03 mmol) was added, and the reaction was stirred overnight at room temperature. The reaction mixture was diluted with ethyl acetate and diethyl ether, washed with cold water, and brine, dried over sodium sulfate, and purified *via*

column chromatography (hexane:ethyl acetate, 5:1) to get (K-4) as an orange solid in 82% yield (0.85 g, 0.85 mmol).

$^1$H-NMR (400 MHz, $CDCl_3$) δ 7.81 (d, *J* = 16.0 Hz, 1H, CH), 7.63 (dd, *J* = 8.1, 1.4 Hz, 8H, *Ar-H*), 7.42 (d, *J* = 8.8 Hz, 4H, *Ar-H*), 7.35 (t, *J* = 7.2 Hz, 8H, *Ar-H*), 7.23 (d, *J* = 8.3 Hz, 1H, *Ar-H*), 7.17 (d, *J* = 8.9 Hz, 2H, *Ar-H*), 7.12 (d, *J* = 7.6 Hz, 2H, *Ar-H*), 6.94 (d, *J* = 16.0 Hz, 1H, CH), 6.30 (d, *J* = 9.0 Hz, 2H, *Ar-H*), 3.94 (hept, *J* = 6.8 Hz, 2H, *CH*), 3.76 (t, *J* = 6.5 Hz, 4H, $CH_2$), 3.49 (t, *J* = 6.5 Hz, 4H, $CH_2$), 2.59 (s, 2H, $CH_2$), 2.27 (s, 2H, $CH_2$), 1.23 (d, *J* = 6.9 Hz, 12H, $CH_3$), 1.08 (s, 6H, $CH_3$), 1.05 (s, 18H, $CH_3$).

**5.4 (E)-2-(3-((E)-4-(bis(2-((tert-butyldiphenylsilyl)oxy)ethyl)amino)styryl)-2-((2,6-diisopropylphenyl)thio)-5,5-dimethylcyclohex-2-en-1-ylidene)acetonitrile (C-4)**

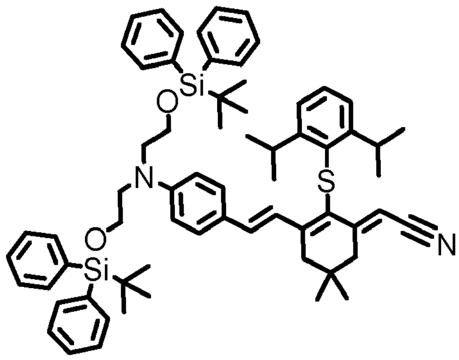

$^1$H-NMR (400 MHz, $CDCl_3$) δ 7.72 (d, *J* = 16.0 Hz, 1H, CH), 7.62 (d, *J* = 8.0 Hz, 8H, *Ar-H*), 7.41 (d, *J* = 7.4 Hz, 4H, *Ar-H),* 7.34 (t, *J* = 7.2 Hz, 8H, *Ar-H*), 7.23 (d, *J* = 7.0 Hz, 1H, *Ar-H*), 7.16 - 7.07 (m, 4H, *Ar-H*), 6.79 (d, *J* = 16.0 Hz, 1H, CH), 6.29 (d, *J* = 9.0 Hz, 2H, *Ar-H*), 5.58 (s, 1H, CH), 3.72 (m, 6H, $CH_2$ + *CH*), 3.48 (t, *J* = 6.4 Hz, 4H, $CH_2$), 2.47 (s, 4H, $CH_2$), 1.19 (d, *J* = 6.9 Hz, 12H, $CH_3$), 1.04 (s, 24H, $CH_3$).

**5.5 (E)-2-(3-((E)-4-(bis(2-((tert-butyldiphenylsilyl)oxy)ethyl)amino)styryl)-2-((2,6-diisopropylphenyl)thio)-5,5-dimethylcyclohex-2-en-1-ylidene)acetaldehyde (A-4)**

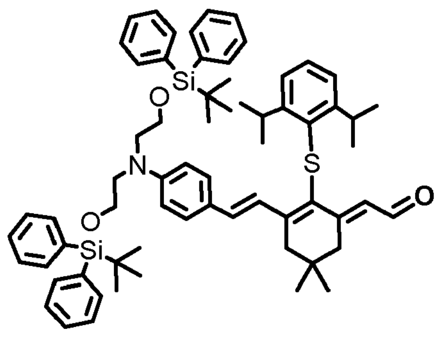

$^1$H-NMR (400 MHz, $CDCl_3$) δ 9.96 (d, *J* = 7.9 Hz, 1H, CH), 7.81 (d, *J* = 16.0 Hz, 1H, *CH*), 7.63 (dd, *J* = 8.0, 1.5 Hz, 8H, *Ar-H*), 7.46 - 7.39 (m, 4H, *Ar-H*), 7.34 (t, *J* = 7.9 Hz, 8H, *Ar-H*), 7.22 (d, *J* = 8.5 Hz, 1H, *Ar-H*), 7.12 (d, *J* = 7.1 Hz, 4H, *Ar-H*), 6.79 (d, *J* = 16.0 Hz, 1H, CH), 6.45 (d, *J* = 8.0 Hz, 1H, CH), 6.29 (d, *J* = 9.0 Hz, 2H, *Ar-H*), 3.77 (m, 6H, $CH_2$ + *CH),* 3.49 (t, *J* = 6.4 Hz, 4H, $CH_2$), 2.61 (s, 2H, $CH_2$), 2.50 (s, 2H, $CH_2$), 1.21 (d, *J* = 6.8 Hz, 12H, $CH_3$), 1.05 (s, 24H, $CH_3$).

**5.6 2-(4-((1E,3E)-3-(3-((E)-4-(bis(2-((tert-butyldiphenylsilyl)oxy)ethyl)amino) styryl)-2-((2,6-diisopropylphenyl) thio)-5,5-dimethylcyclohex-2-en-1-ylidene)prop-1-en-1-yl)-3-cyano-5-phenyl-5-(trifluoromethyl)furan-2(5H)-ylidene)malononitrile (I-4)**

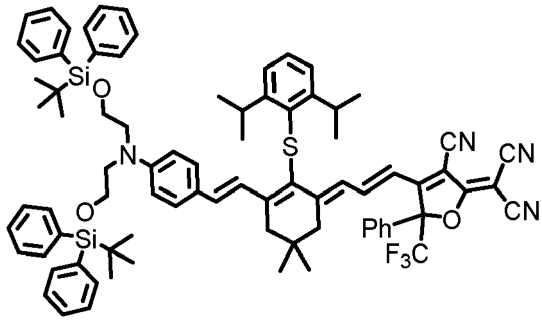

$^1H$-NMR (400 MHz, $CDCl_3$) δ 8.01 (t, *J* = 13.5 Hz, 1H, CH), 7.93 (d, *J* = 15.6 Hz, 1H, *CH*), 7.65 - 7.57 (m, 8H, *Ar-H*), 7.56 - 7.48 (m, 3H, *Ar-H*), 7.41 (t, *J* = 6.6 Hz, 6H, *Ar-H*), 7.33 (t, *J* = 7.3 Hz, 8H, *Ar-H*), 7.18 (dd, *J* = 13.8, 8.1 Hz, 3H, *Ar-H*), 7.10 (d, *J* = 7.6 Hz, 2H, *Ar-H*), 6.95 (d, *J* = 15.8 Hz, 1H, CH), 6.77 (d, *J* = 12.1 Hz, 1H, CH), 6.31 (d, *J* = 9.1 Hz, 2H, *Ar-H*), 6.11 (d, *J* = 14.6 Hz, 1H, CH), 3.75 (t, *J* = 6.3 Hz, 4H, $CH_2$), 3.67 (hept, *J* = 6.8 Hz, 2H, *CH*), 3.50 (t, *J* = 6.4 Hz, 4H, $CH_2$), 2.54 (s, 2H, $CH_2$), 2.25 (s, 2H, $CH_2$), 1.16 (t, *J* = 6.2 Hz, 12H, $CH_3$), 1.03 (s, 18H, $CH_3$), 1.00 (s, 3H, $CH_3$), 0.92 (s, 3H, $CH_3$).

**6. Synthesis of 2-(4-((1E,3E)-3-(3-((E)-4-(bis(2-((tert-butyldiphenylsilyl)oxy)ethyl) amino)styryl)-2-((2,6-dimethylphenyl)thio)-5,5-dimethylcyclohex-2-en-1-ylidene)prop-1-en-1-yl)-3-cyano-5-phenyl-5-(trifluoromethyl) furan-2(5H)-ylidene)malononitrile (I-5)**

**6.1 2-((2,6-dimethylphenyl)thio)-3,5,5-trimethylcyclohex-2-en-1-one (B-5)**

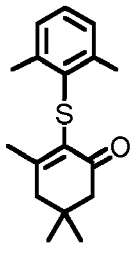

Sodium metal (174 mg, 7.23 mmol) was added to dry ethanol (10 mL) in a flask under an argon atmosphere and stirred at room temperature until completely dissolved. To that solution, 2,6-dimethylbenzenethiol (2 g, 14.5 mmol) was added and the reaction mixture was stirred at room temperature for 1 h, followed by dropwise addition of 4,4,6-trimethyl-7-oxabicyclo[4.1.0]heptan-2-one (2.23 g, 14.5 mmol) and continued stirring for another 2 h. The mixture was diluted with ethyl acetate, washed with brine, and dried over sodium sulfate. The crude product was purified by column chromatography (hexane:ethyl acetate 10:1) to obtain (B-5) as a yellow solid in 65% yield (2.6 g, 9.47 mmol).

$^1H$-NMR (400 MHz, $CDCl_3$) δ 7.08 - 6.99 (m, 3H, *Ar-H*), 2.48 (s, 6H, $CH_3$), 2.37 (s, 2H, $CH_2$), 2.24 (s, 2H, $CH_2$), 2.15 (s, 3H, $CH_3$), 1.01 (s, 6H, $CH_3$).

**6.2 (E)-3-(4-(bis(2-hydroxyethyl)amino)styryl)-2-((2,6-dimethylphenyl)thio)-5,5-dimethylcyclohex-2-en-1-one (D-5)**

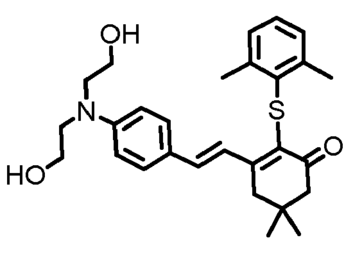

Piperidine (0.37 mL, 3.77 mmol) and 1 M lithium ethylate in ethanol (1.3 mL, 1.3 mmol) were added to the solution

of (B-5) (1.51 g, 4.19 mmol) and ((4-formylphenyl)azanediyl)bis(ethane-2,1-diyl) diacetate (1.11 g, 3.77 mmol) (S. Guang et al., "Synthesis and properties of long conjugated organic optical limiting materials with different π-electron conjugation bridge structure," Dyes and pigments, 73, 2007) in 14 mL dry ethanol under argon. The reaction mixture was heated to 70°C for 3 days. After cooling to room temperature, the solvent was evaporated, water was added to the product under vigorous stirring, and 1 M hydrochloric acid was slowly added until pH 4. The solution was left to stir at room temperature overnight. The product was extracted with dichloromethane and the solvent was evaporated. The crude product was purified by column chromatography (dichloromethane 100-90% in ethyl acetate) obtaining (D-5) as an orange solid in 37% yield (0.72 g, 1.55 mmol).

$^1$H-NMR (400 MHz, $CDCl_3$) δ 7.80 (d, *J* = 16.1 Hz, 1H, CH), 7.37 (d, *J* = 9.0 Hz, 2H, *Ar-H*), 7.07 - 6.99 (m, 3H, *Ar-H*), 6.95 (d, *J* = 16.1 Hz, 1H, CH), 6.67 (d, *J* = 9.0 Hz, 2H, *Ar-H),* 3.89 (t, *J* = 4.9 Hz, 4H, *$CH_2$*), 3.64 (t, *J* = 4.9 Hz, 4H, *$CH_2$*), 3.15 (s, 2H, *OH*), 2.61 (s, 2H, *$CH_2$*), 2.50 (s, 6H, *$CH_3$*), 2.30 (s, 2H, *$CH_2$*), 1.07 (s, 6H, *$CH_3$*).

**6.3 (E)-3-(4-(bis(2-((tert-butyldiphenylsilyl)oxy)ethyl)amino)styryl)-2-((2,6-dimethylphenyl)thio)-5,5-dimethylcyclohex-2-en-1-one (K-5)**

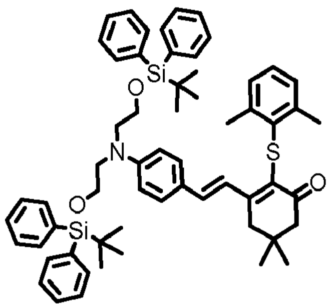

To a flask containing imidazole (0.52 g, 7.73 mmol) and dry dimethylformamide (6.5 mL) under an argon atmosphere, tert-butyl(chloro)diphenylsilane (0.99 mL, 3.87 mmol) was added dropwise. After 10 min of stirring, (D-5) (0.72 g, 1.55 mmol) was added, and the reaction was stirred overnight at room temperature. The reaction mixture was diluted with ethyl acetate and diethyl ether, washed with cold water, and brine, dried over sodium sulfate, and purified *via* column chromatography (hexane:ethyl acetate, 5:1) to get (K-5) as an orange solid in 69% yield (1 g, 1.06 mmol).

$^1$H-NMR (400 MHz, $CDCl_3$) δ 7.77 (d, *J* = 16.1 Hz, 1H, CH), 7.63 (m, 8H, *Ar-H*), 7.47 - 7.40 (m, 4H, *Ar-H*), 7.39 - 7.33 (m, 8H, *Ar-H*), 7.17 (d, *J* = 9.0 Hz, 2H, *Ar-H*), 7.03 (s, 3H, *Ar-H*), 6.92 (d, *J* = 16.1 Hz, 1H, CH), 6.30 (d, *J* = 9.0 Hz, 2H, *Ar-H*), 3.76 (t, *J* = 6.4 Hz, 4H, *$CH_2$*), 3.50 (t, *J* = 6.4 Hz, 4H, *$CH_2$*), 2.62 (s, 2H, *$CH_2$*), 2.53 (s, 6H, *$CH_3$*), 2.31 (s, 2H, *$CH_2$*), 1.08 (s, 6H, *$CH_3$*), 1.05 (s, 18H, *$CH_3$*).

**6.4 (E)-2-(3-((E)-4-(bis(2-((tert-butyldiphenylsilyl)oxy)ethyl)amino)styryl)-2-((2,6-dimethylphenyl)thio)-5,5-dimethylcyclohex-2-en-1-ylidene)acetonitrile (C-5)**

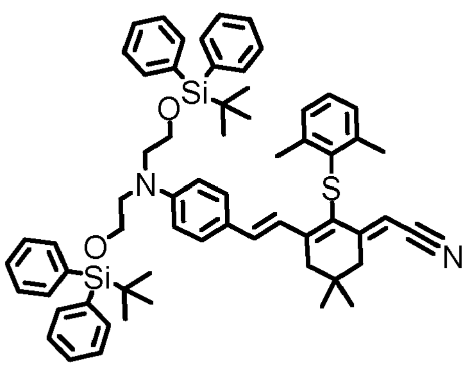

$^1$H-NMR (400 MHz, $CDCl_3$) δ 7.62 (m, 9H, *CH + Ar-H),* 7.44 - 7.39 (m, 4H, *Ar-H*), 7.37 - 7.31 (m, 8H, *Ar-H*), 7.10 (d, *J* = 9.0 Hz, 2H, *Ar-H),* 7.01 (d, *J* = 11.4 Hz, 3H, *Ar-H*), 6.75 (d, *J* = 16.0 Hz, 1H, CH), 6.30 (d, *J* = 9.0 Hz, 2H, *Ar-H*), 5.59 (s, 1H,

CH), 3.74 (t, $J$ = 6.4 Hz, 4H, $CH_2$), 3.48 (t, $J$ = 6.3 Hz, 4H, $CH_2$), 2.53 (s, 2H, $CH_2$), 2.49 (s, 2H, $CH_2$), 2.39 (s, 6H, $CH_3$), 1.05 (s, 6H, $CH_3$), 1.04 (s, 18H, $CH_3$).

**6.5 (E)-2-(3-((E)-4-(bis(2-((tert-butyldiphenylsilyl)oxy)ethyl)amino)styryl)-2-((2,6-dimethylphenyl)thio)-5,5-dimethylcyclohex-2-en-1-ylidene)acetaldehyde (A-5)**

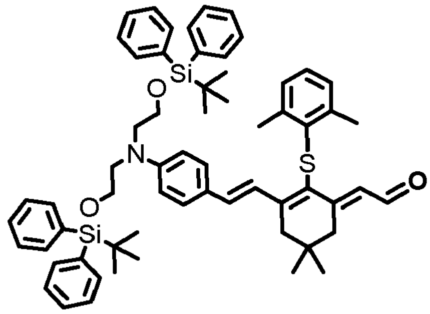

$^1$H-NMR (400 MHz, $CDCl_3$) δ 9.97 (d, $J$ = 7.9 Hz, 1H, CH), 7.70 (d, $J$ = 16.1 Hz, 1H, *CH*), 7.66 - 7.58 (m, 8H, *Ar-H*), 7.45 - 7.38 (m, 4H, *Ar-H*), 7.37 - 7.30 (m, 8H, *Ar-H*), 7.10 (d, $J$ = 9.0 Hz, 2H, *Ar-H*), 6.99 (s, 3H, *Ar-H*), 6.74 (d, $J$ = 16.1 Hz, 1H, CH), 6.50 (d, $J$ = 8.0 Hz, 1H, CH), 6.29 (d, $J$ = 9.0 Hz, 2H, *Ar-H*), 3.81 - 3.69 (m, 4H, $CH_2$), 3.53 - 3.44 (m, 4H, $CH_2$), 2.67 (s, 2H, $CH_2$), 2.51 (s, 2H, $CH_2$), 2.43 (s, 6H, $CH_3$), 1.05 (s, 6H, $CH_3$), 1.04 (s, 18H, $CH_3$).

**6.6 2-(4-((1E,3E)-3-(3-((E)-4-(bis(2-((tert-butyldiphenylsilyl)oxy)ethyl)amino) styryl)-2-((2,6-dimethylphenyl) thio)-5,5-dimethylcyclohex-2-en-1-ylidene)prop-1-en-1-yl)-3-cyano-5-phenyl-5-(trifluoromethyl)furan-2(5H)-ylidene)malono-nitrile (I-5)**

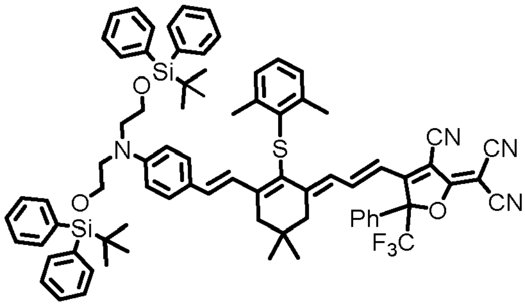

$^1$H-NMR (400 MHz, $CDCl_3$) δ 7.99 (t, $J$ = 13.6 Hz, 1H, *CH),* 7.69 (d, $J$ = 15.9 Hz, 1H, *CH*), 7.61 (dd, $J$ = 8.1, 1.4 Hz, 8H, *Ar-H*), 7.56 - 7.49 (m, 3H, *Ar-H*), 7.46 - 7.38 (m, 6H, *Ar-H*), 7.36 - 7.30 (m, 8H, *Ar-H*), 7.11 (d, $J$ = 9.0 Hz, 2H, *Ar-H*), 6.99 (s, 4H, *Ar-H*), 6.87 (d, $J$ = 15.8 Hz, 1H, CH), 6.32 (d, $J$ = 9.1 Hz, 2H, *Ar-H*), 6.18 (d, $J$ = 14.6 Hz, 1H, CH), 3.79 - 3.70 (m, 4H, $CH_2$), 3.50 (t, $J$ = 6.3 Hz, 4H, $CH_2$), 2.55 (s, 2H, $CH_2$), 2.40 (s, 6H, $CH_3$), 2.32 - 2.24 (m, 2H, $CH_2$), 1.03 (s, 18H, $CH_3$), 1.01 (s, 3H, $CH_3$), 0.93 (s, 3H, $CH_3$).

**7. Synthesis of 2-(4-((1E,3E)-3-(3-((E)-2-(1-(3-(1-adamantyl)-4-methoxyphenyl)-1,2,3,4-tetrahydroquinolin-6-yl) vinyl)-2-((2,6-diisopropylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-6)**

**7.1 Synthesis of 3-((E)-2-(1-(3-(1-adamantyl)-4-methoxyphenyl)-1,2,3,4-tetrahydro-quinolin-6-yl)vinyl)-2-((2,6-diisopropylphenyl)thio)-5,5-dimethylcyclohex-2-en-1-one (K-6)**

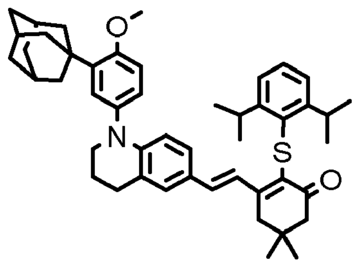

Piperidine (0.4 mL, 4.12 mmol) and 1 M lithium ethylate in ethanol (1.4 mL, 1.4 mmol) were added to the solution of (B-4) (0.69 g, 2.09 mmol) and 1-[3-(1-adamantanyl)-4-methoxyphenyl]-1,2,3,4-tetrahydroquinoline-6-carbaldehyde (0.8 g, 1.99 mmol) (synthesized in two steps as reported previously in US2023212399A1) in 9 mL dry ethanol under argon. The reaction mixture was heated to 70°C for 3 days. After cooling to room temperature, the solvent was evaporated, and the crude product was purified by column chromatography (hexane:ethyl acetate 10:1) obtaining (K-6) as an orange solid in 28% yield (0.4 g, 0.56 mmol).

$^1$H-NMR (400 MHz, $CDCl_3$) δ 7.70 (d, *J* = 16.0 Hz, 1H, CH), 7.24 (d, *J* = 7.0 Hz, 1H, *Ar-H*), 7.13 (d, *J* = 7.5 Hz, 2H, *Ar-H*), 7.10 (d, *J* = 2.6 Hz, 2H, *Ar-H*), 7.03 (td, *J* = 7.8, 7.0, 2.4 Hz, 2H, *Ar-H*), 6.96 - 6.87 (m, 2H, *CH* + *Ar-H*), 6.41 (d, *J* = 8.6 Hz, 1H, *Ar-H*), 3.92 (q, *J* = 6.9 Hz, 2H, *CH*), 3.86 (s, 3H, $OCH_3$), 3.62 (t, *J* = 5.6 Hz, 2H, $CH_2$), 2.88 (t, *J* = 6.4 Hz, 2H, $CH_2$), 2.58 (s, 2H, $CH_2$), 2.29 (s, 2H, $CH_2$), 2.08 (bs, 11H, *CH* + $CH_2$), 1.77 (bs, 6H, $CH_2$), 1.22 (d, *J* = 6.8 Hz, 12H, $CH_3$), 1.06 (s, 6H, $CH_3$).

**7.2 Synthesis of (E)-2-(3-((E)-2-(1-(3-(1-adamantyl)-4-methoxyphenyl)-1,2,3,4-tetrahydroquinolin-6-yl)vinyl)-2-((2,6-diisopropylphenyl)thio)-5,5-dimethylcyclohex-2-en-1-ylidene)acetonitrile (C-6)**

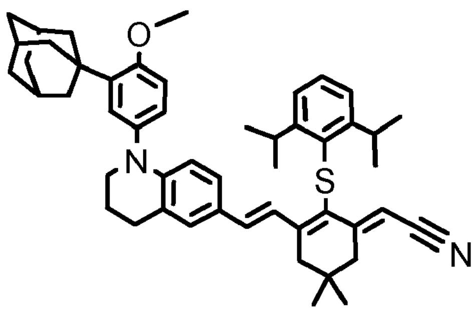

$^1$H-NMR (400 MHz, $CDCl_3$) δ 7.57 (d, *J* = 16.0 Hz, 1H, CH), 7.24 (d, *J* = 7 Hz, 1H, *Ar-H*), 7.14 (d, *J* = 7.6 Hz, 2H, *Ar-H*), 7.08 (d, *J* = 2.8 Hz, 1H, *Ar-H*), 7.04 - 7.00 (m, 1H, *Ar-H*), 6.99 (d, *J* = 2.4 Hz, 1H, *Ar-H*), 6.93 (dd, *J* = 8.7, 2.2 Hz, 1H, *Ar-H*), 6.88 (d, *J* = 8.6 Hz, 1H, *Ar-H*), 6.77 (d, *J* = 15.9 Hz, 1H, CH), 6.38 (d, *J* = 8.6 Hz, 1H, *Ar-H*), 5.68 (s, 1H, CH), 3.85 (s, 3H, $OCH_3$), 3.67 (q, *J* = 6.8 Hz, 2H, *CH*), 3.62 - 3.57 (m, 2H, $CH_2$), 2.84 (t, *J* = 6.4 Hz, 2H, $CH_2$), 2.46 (d, *J* = 11.9 Hz, 4H, $CH_2$), 2.06 (bs, 11H, *CH* + $CH_2$), 1.76 (bs, 6H, $CH_2$), 1.18 (d, *J* = 6.8 Hz, 12H, $CH_3$), 1.02 (s, 6H, $CH_3$).

**7.3 Synthesis of (E)-2-(3-((E)-2-(1-(3-(1-adamantyl)-4-methoxyphenyl)-1,2,3,4-tetrahydroquinolin-6-yl)vinyl)-2-((2,6-diisopropylphenyl)thio)-5,5-dimethylcyclohex-2-en-1-ylidene)acetaldehyde (A-6)**

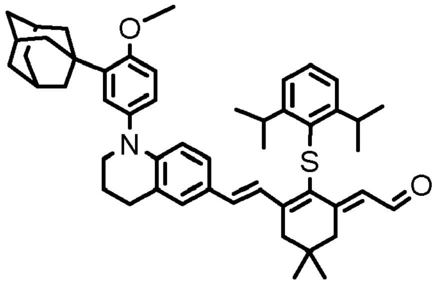

$^1$H-NMR (400 MHz, $CDCl_3$) 9.98 (d, *J* = 7.9 Hz, 1H, CH), 7.66 (d, *J* = 16.0 Hz, 1H, *CH*), 7.22 (dd, *J* = 8.5, 6.9 Hz, 1H, *Ar-H),* 7.12 (d, *J* = 7.1 Hz, 2H, *Ar-H),* 7.09 (d, *J* = 2.8 Hz, 1H, *Ar-H*), 7.02 (dd, *J* = 8.5, 2.6 Hz, 2H, *Ar-H*), 6.94 (dd, *J* = 8.7, 2.3 Hz, 1H, *Ar-H),* 6.88 (d, *J* = 8.6 Hz, 1H, *Ar-H),* 6.77 (d, *J* = 16.0 Hz, 1H, CH), 6.55 (d, *J* = 7.9 Hz, 1H, CH), 6.39 (d, *J* = 8.6 Hz, 1H, *Ar-H*), 3.85 (s, 3H, $OCH_3$), 3.75 (q, *J* = 6.8 Hz, 2H, *CH*), 3.61 (t, *J* = 5.6 Hz, 2H, $CH_2$), 2.85 (t, *J* = 6.4 Hz, 2H, $CH_2$), 2.62 (s, 2H, $CH_2$), 2.48 (s, 2H, $CH_2$), 2.06 (bs, 11H, *CH* + $CH_2$), 1.76 (bs, 6H, $CH_2$), 1.20 (d, *J* = 6.8 Hz, 12H, $CH_3$), 1.03 (s, 6H, $CH_3$).

**7.4 Synthesis of 2-(4-((1E,3E)-3-(3-((E)-2-(1-(3-(1-adamantyl)-4-methoxyphenyl)-1,2,3,4-tetrahydroquinolin-6-yl) vinyl)-2-((2,6-diisopropylphenyl)thio)-5,5-dimethylcyclohex-2-en-1 -ylidene)prop-1 -en-1 -yl)-3-cyano-5-phenyl-5-(trifluoromethyl)furan-2(5H)-ylidene)malononitrile (I-6)**

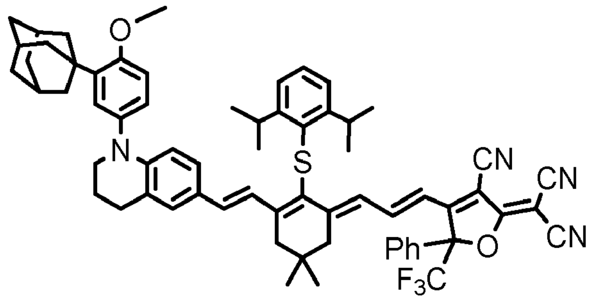

$^1$H-NMR (400 MHz, $CDCl_3$) δ 8.02 (t, *J* = 13.2 Hz, 1H, CH), 7.81 (d, *J* = 15.8 Hz, 1H, *CH*), 7.58 - 7.47 (m, 3H, *Ar-H*), 7.42 (d, *J* = 6.9 Hz, 2H, *Ar-H*), 7.24 - 7.18 (m, 1H, *Ar-H*), 7.10 (d, *J* = 7.5 Hz, 2H, *Ar-H*), 7.07 (d, *J* = 2.6 Hz, 2H, *Ar-H*), 7.04 - 6.98 (m, 2H, *Ar-H),* 6.94 (d, *J* = 15.8 Hz, 1H, CH), 6.91 - 6.84 (m, 2H, *Ar-H, CH*), 6.38 (d, *J* = 8.8 Hz, 1H, *Ar-H*), 6.14 (d, *J* = 14.5 Hz, 1H, CH), 3.86 (s, 3H, $OCH_3$), 3.69 - 3.60 (m, 4H, $CH_2$), 2.86 (t, *J* = 6.3 Hz, 2H, $CH_2$), 2.53 (s, 2H, $CH_2$), 2.26 (s, 2H, $CH_2$), 2.17 (s, 2H, $CH_2$), 2.07 (bs, 11H, *CH* + $CH_2$), 1.76 (bs, 6H, $CH_2$), 1.16 (t, *J* = 6.4 Hz, 12H, $CH_3$), 0.99 (s, 3H, $CH_3$), 0.91 (s, 3H, $CH_3$).

**8. Synthesis of 2-(4-((1E,3E)-3-(3-((E)-2-(1-(3-(1-adamantyl)-4-methoxyphenyl)-1,2,3,4-tetrahydroquinolin-6-yl) vinyl)-2-((2,6-dimethylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-7)**

**8.1 Synthesis of 3-((E)-2-(1-(3-(1-adamantyl)-4-methoxyphenyl)-1,2,3,4-tetrahydro-quinolin-6-yl)vinyl)-2-((2,6-dimethylphenyl)thio)-5,5-dimethylcyclohex-2-en-1-one (K-7)**

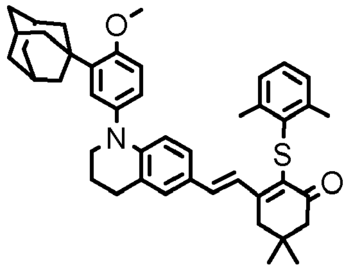

Piperidine (0.18 mL, 1.82 mmol) and 1 M lithium ethylate in ethanol (0.54 mL, 0.54 mmol) were added to the solution of (B-5) (0.55 g, 2 mmol) and 1-[3-(1-adamantanyl)-4-methoxyphenyl]-1,2,3,4-tetrahydroquinoline-6-carbaldehyde (0.73 g, 1.82 mmol) (US2023212399A1) in 8 mL dry ethanol under argon. The reaction mixture was heated to 70°C for 3 days. After cooling to room temperature, the solvent was evaporated, and the crude product was purified by column chromatography (hexane:ethyl acetate 10:1) obtaining (K-7) as an orange solid in 75% yield (0.9 g, 1.37 mmol).

$^1$H-NMR (400 MHz, $CDCl_3$) δ 7.70 (d, *J* = 16.1 Hz, 1H, CH), 7.14 (d, *J* = 2.4 Hz, 1H, *Ar-H),* 7.09 (d, *J* = 2.6 Hz, 1H, *Ar-H),* 7.06 - 6.97 (m, 5H, *Ar-H),* 6.95 - 6.87 (m, 2H, *Ar-H* + *CH),* 6.39 (d, *J* = 8.6 Hz, 1H, *Ar-H),* 3.86 (s, 3H, $OCH_3$), 3.62 (t, *J* = 5.6 Hz, 2H, $CH_2$), 2.88 (t, *J* = 6.4 Hz, 2H, $CH_2$), 2.60 (s, 2H, $CH_2$), 2.50 (s, 6H, $CH_3$), 2.31 (s, 2H, $CH_2$), 2.08 (bs, 11H, $CH_2$ + *CH),* 1.77 (bs, 6H, $CH_3$), 1.07 (s, 6H, $CH_3$).

**8.2 Synthesis** of **(E)-2-(3-((E)-2-(1-(3-(1-adamantyl)-4-methoxyphenyl)-1,2,3,4-tetrahydroquinolin-6-yl)vinyl)-2-((2,6-dimethylphenyl)thio)-5,5-dimethylcyclo-hex-2-en-1-ylidene)acetonitrile (C-7)**

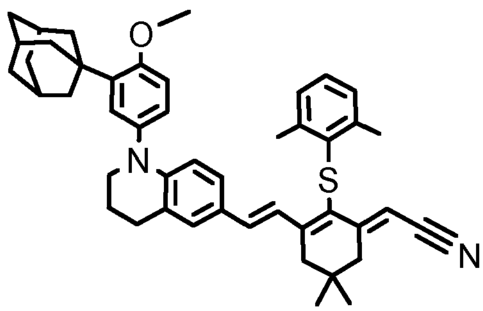

$^1$H-NMR (400 MHz, $CDCl_3$) δ 7.61 (d, *J* = 16.1 Hz, 1H, CH), 7.08 (t, *J* = 3.3 Hz, 2H, *Ar-H*), 7.05 - 6.99 (m, 4H, *Ar-H*), 6.93 (dd, *J* = 8.6, 2.3 Hz, 1H, *Ar-H*), 6.89 (d, *J* = 8.6 Hz, 1H, *Ar-H*), 6.75 (d, *J* = 16.0 Hz, 1H, CH), 6.38 (d, *J* = 8.6 Hz, 1H, *Ar-H*), 5.65 (s, 1H, CH), 3.86 (s, 3H, *$OCH_3$*), 3.64 - 3.57 (m, 2H, *$CH_2$*), 2.86 (t, *J* = 6.4 Hz, 2H, *$CH_2$*), 2.53 (s, 2H, *$CH_2$*), 2.47 (s, 2H, *$CH_2$*), 2.39 (s, 6H, *$CH_3$*), 2.08 (bs, 9H, *$CH_2$ + CH),* 2.05 (s, 2H, *$CH_2$*), 1.77 (bs, 6H, *$CH_2$*), 1.04 (s, 6H, *$CH_3$*).

**8.3 Synthesis of (E)-2-(3-((E)-2-(1-(3-(1-adamantyl)-4-methoxyphenyl)-1,2,3,4-tetrahydroquinolin-6-yl)vinyl)-2-((2,6-dimethylphenyl)thio)-5,5-dimethylcyclo-hex-2-en-1-ylidene)acetaldehyde (A-7)**

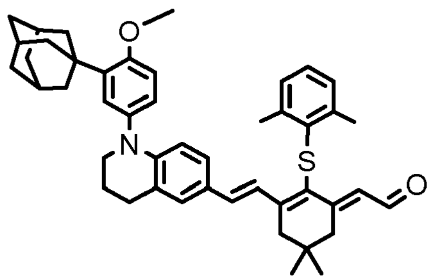

$^1$H-NMR (400 MHz, $CDCl_3$) δ 9.99 (d, *J*= 7.9 Hz, 1H, CH), 7.65 (d, *J* = 16.0 Hz, 1H, *CH),* 7.08 (d, *J* = 2.6 Hz, 2H, *Ar-H),* 7.05 - 6.96 (m, 4H, *Ar-H),* 6.93 (dd, *J* = 8.7, 2.3 Hz, 1H, *Ar-H),* 6.88 (d, *J*= 8.6 Hz, 1H, *Ar-H),* 6.74 (d, *J*= 16.0 Hz, 1H, CH), 6.56 (d, *J* = 7.9 Hz, 1H, *CH),* 6.38 (d, *J* = 8.6 Hz, 1H, *Ar-H),* 3.85 (s, 3H, *$OCH_3$*), 3.60 (t, *J* = 5.6 Hz, 2H, *$CH_2$*), 2.86 (t, *J* = 6.3 Hz, 2H, *$CH_2$*), 2.67 (s, 2H, *$CH_2$*), 2.50 (s, 2H, *$CH_2$*), 2.42 (s, 6H, *$CH_3$*), 2.07 (bs, 9H, *CH* + *$CH_2$*), 2.05 (s, 2H, *$CH_2$*), 1.76 (bs, 6H, *$CH_2$*), 1.05 (s, 6H, *$CH_3$).*

**8.4 Synthesis of 2-(4-((1E,3E)-3-(3-((E)-2-(1-(3-(1-adamantyl)-4-methoxyphenyl)-1,2,3,4-tetrahydroquinolin-6-yl) vinyl)-2-((2,6-dimethylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-7)**

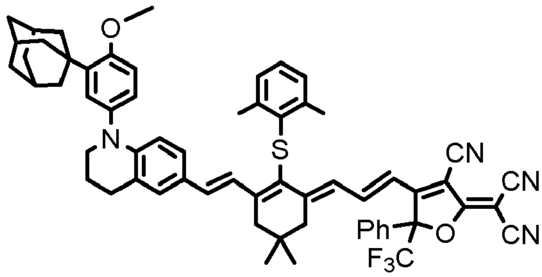

$^1$H-NMR (400 MHz, $CDCl_3$) δ 8.00 (t, *J* = 13.2 Hz, 1H, *CH*), 7.63 (d, *J* = 15.9 Hz, 1H, *CH*), 7.57 - 7.48 (m, 3H, *Ar-H*), 7.44 (d, *J* = 7.8 Hz, 2H, *Ar-H*), 7.06 (d, *J* = 2.6 Hz, 2H, *Ar-H*), 7.05 - 6.98 (m, 5H, *Ar-H* + *CH*), 6.94 (d, *J* = 6.6 Hz, 1H, *Ar-H*), 6.91 - 6.84 (m, 2H, *Ar-H* + CH), 6.35 (d, *J* = 8.6 Hz, 1H, *Ar-H*), 6.19 (d, *J* = 14.0 Hz, 1H, *CH*), 3.86 (s, 3H, *$OCH_3$*), 3.63 (t, *J* = 5.6 Hz, 2H, *$CH_2$*), 2.85 (t, *J* = 6.2 Hz, 2H, *$CH_2$*), 2.53 (s, 2H, *$CH_2$*), 2.39 (s, 6H, *$CH_3$*), 2.29 (d, *J* = 8.4 Hz, 2H, *$CH_2$*), 2.07 (bs, 11H, *CH* + *$CH_2$*), 1.76 (bs, 6H, *$CH_2$*), 1.00 (s, 3H, *$CH_3$*), 0.92 (s, 3H, *$CH_3$*).

**9. <u>Synthesis of 2-(4-((1E,3E)-3-(3-((E)-4-(1-adamantyl)-4-methoxyphenyl)(2-((tert-butyldimethylsilyl)oxy)ethyl) amino)styryl)-2-((2,6-diisopropylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-8)</u>**

**9.1 4-((3-(1-adamantyl)-4-methoxyphenyl)(2-((tert-butyldimethylsilyl)oxy)ethyl) amino)benzonitrile (N-8)**

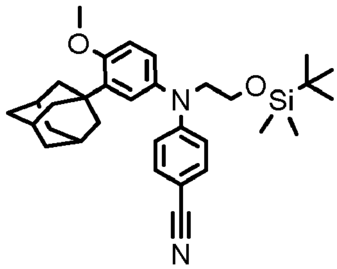

In an evacuated flask under argon, 2 g (6.37 mmol) of 1-(5-bromo-2-methoxyphenyl)adamantane, 1.6 g (5.79 mmol) of 4-[2-[tert-butyl(dimethyl)silyl] oxyethylamino]benzonitrile (obtained following the reported protocol in WO2014078802A1), and dry toluene (25 mL) were added. The solution was purged with argon for 15 min, followed by the addition of sodium tert-butoxide (0.61 g, 6.37 mmol), palladium(II) acetate (0.097 g, 0.434 mmol) and tri-tert-butylphosphine (0.21 mL, 0.87 mmol) under argon. The reaction mixture was heated to 111°C for 3 days. After cooling to room temperature, the reaction mixture was diluted with dichloromethane, and the solids were removed by filtration. The filtrate was purified by chromatography (hexane: dichloromethane, 1:1) obtaining the product (N-8) as a white powder in 40% yield (1.2 g, 2.32 mmol).

$^1$H-NMR (400 MHz, $CDCl_3$) δ 7.35 (d, *J* = 9.1 Hz, 2H, *Ar-H),* 7.02 - 6.97 (m, 2H, *Ar-H*), 6.88 (d, *J* = 8.4 Hz, 1H, *Ar-H),* 6.64 (d, *J* = 9.1 Hz, 2H, *Ar-H),* 3.86 (s, 3H, *$OCH_3$*), 3.80 (s, 4H, *$CH_2$*), 2.05 (bs, 9H, *$CH_2$* + *CH*), 1.76 (bs, 6H, *$CH_2$*), 0.86 (s, 9H, *$CH_3$*), 0.02 (s, 6H, *$CH_3$*).

**9.2 4-((3-(1-adamantyl)-4-methoxyphenyl)(2-((tert-butyldimethylsilyl)oxy)ethyl) amino)benzaldehyde (R-8)**

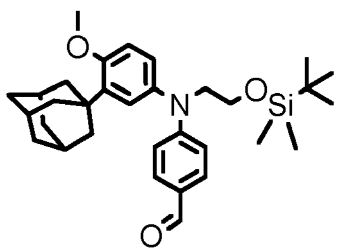

A solution of (N-8) (2 g, 3.87 mmol) in 12 mL of dry toluene under an argon atmosphere was cooled down to -78°C and diisobutylaluminum hydride (1.2 M in toluene, 3.61 mL, 4.33 mmol) was added dropwise. After stirring for 1.5 h at -78°C, the reaction mixture was warmed up to 0°C and stirred further 2 h. To hydrolyze, wet silica gel (2 g with 2 mL water) in diethyl ether (10 mL) was added and stirred for 2 h. The product was poured into water, extracted with ethyl acetate, and the solvent was evaporated under reduced pressure. The crude product was purified by column chromatography (dichloromethane:hexane, 5:1) to get (R-8) as a yellow solid in 75% yield (1.51 g, 2.9 mmol).

$^1$H-NMR (400 MHz, $CDCl_3$) δ 9.71 (s, 1H, *CH*), 7.63 (d, *J* = 9.0 Hz, 2H, *Ar-H*), 7.07 - 6.99 (m, 2H, *Ar-H*), 6.90 (d, *J* = 8.4 Hz, 1H, *Ar-H*), 6.70 (d, *J* = 9.0 Hz, 2H, *Ar-H*), 3.87 (s, 3H, *$OCH_3$*), 3.86 - 3.82 (m, 4H, *$CH_2$*), 2.06 (bs, 9H, *$CH_2$* + *CH*), 1.76 (bs, 6H, *$CH_2$*), 0.86 (s, 9H, *$CH_3$*), 0.03 (s, 6H, *$CH_3$*).

**9.3 3-((E)-4-((3-(1-adamantyl)-4-methoxyphenyl)(2-((tert-butyldimethylsilyl)oxy) ethyl)amino)styryl)-2-((2,6-diisopropylphenyl)thio)-5,5-dimethylcyclohex-2-en-1-one (K-8)**

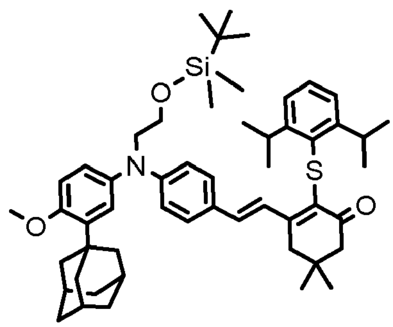

Piperidine (0.19 mL, 1.92 mmol) and 1 M lithium ethylate in ethanol (0.67 mL, 0.67 mmol) were added to the solution of (R-8) (1 g, 1.92 mmol) and (B-4) (0.7 g, 2.12 mmol) in 9.5 mL dry ethanol under argon. The reaction mixture was heated to 70°C for 3 days. After cooling to room temperature, the solvent was evaporated, and the crude product was purified by column chromatography (hexane:ethyl acetate 10:1) obtaining (K-8) as an orange solid in 28% yield (0.45 g, 0.54 mmol).

$^1$H-NMR (400 MHz, $CDCl_3$) δ 7.80 (d, *J* = 16.1 Hz, 1H, CH), 7.30 (s, 1H, *Ar-H*), 7.25 (d, *J* = 8.3 Hz, 1H, *Ar-H*), 7.14 (d, *J* = 7.6 Hz, 2H, *Ar-H*), 7.08 - 7.02 (m, 2H, *Ar-H*), 6.98 (d, *J* = 16.1 Hz, 1H, *CH*), 6.89 (d, *J* = 8.6 Hz, 1H, *Ar-H*), 6.70 (d, *J* = 9.0 Hz, 2H, *Ar-H*), 3.93 (q, *J* = 6.8 Hz, 2H, *CH*), 3.87 (s, 3H, $OCH_3$), 3.84 (d, *J* = 6.1 Hz, 4H, $CH_2$), 2.60 (s, 2H, $CH_2$), 2.30 (s, 2H, $CH_2$), 2.08 (bs, 9H, $CH_2$ + *CH)*, 1.78 (bs, 6H, $CH_2$), 1.23 (d, *J* = 6.9 Hz, 12H, $CH_3$), 1.08 (s, 6H, $CH_3$), 0.89 (s, 9H, $CH_3$), 0.05 (s, 6H, $CH_3$).

**9.4 (E)-2-(3-((E)-4-((3-(1-adamantyl)-4-methoxyphenyl)(2-((tert-butyldimethylsilyl)oxy)ethyl)amino)styryl)-2-((2,6-diisopropylphenyl)thio)-5,5-dimethylcyclohex-2-en-1-ylidene)acetonitrile (C-8)**

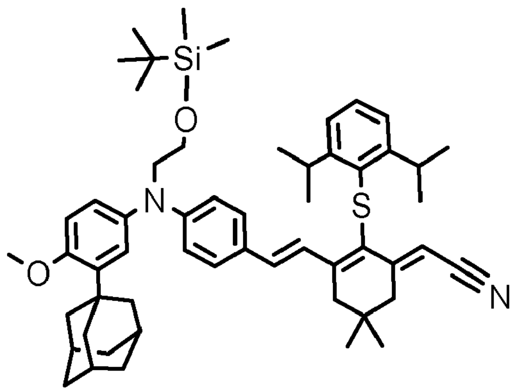

$^1$H-NMR (400 MHz, $CDCl_3$) δ 7.67 (d, *J* = 16.1 Hz, 1H, *CH*), 7.28 - 7.24 (m, 1H, *Ar-H),* 7.20 (d, *J* = 8.9 Hz, 2H, *Ar-H),* 7.16 (d, *J* = 7.6 Hz, 2H, *Ar-H),* 7.08 - 6.99 (m, 2H, *Ar-H*), 6.88 (d, *J* = 8.6 Hz, 1H, *Ar-H*), 6.83 (d, *J* = 16.0 Hz, 1H, CH), 6.68 (d, *J* = 8.9 Hz, 2H, *Ar-H*), 5.68 (s, 1H, *CH*), 3.87 (s, 3H, $OCH_3$), 3.84 (s, 4H, $CH_2$), 3.69 (q, *J* = 6.8 Hz, 2H, *CH*), 2.49 (d, *J* = 6.3 Hz, 4H, $CH_2$), 2.08 (bs, 9H, $CH_2$ + *CH*), 1.78 (bs, 6H, $CH_2$), 1.20 (d, *J* = 6.9 Hz, 12H, $CH_3$), 1.03 (s, 6H, $CH_3$), 0.89 (s, 9H, $CH_3$), 0.05 (s, 6H, $CH_3$).

**9.5 (E)-2-(3-((E)-4-((3-(1-adamantyl)-4-methoxyphenyl)(2-((tert-butyldimethylsilyl)oxy)ethyl)amino)styryl)-2-((2,6-diisopropylphenyl)thio)-5,5-dimethyl-cyclohex-2-en-1-ylidene)acetaldehyde (A-8)**

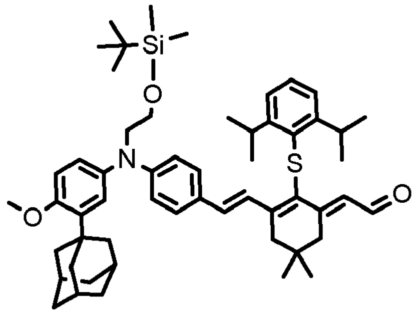

$^1$H-NMR (400 MHz, $CDCl_3$) δ 9.97 (d, *J* = 7.9 Hz, 1H, CH), 7.76 (d, *J* = 16.0 Hz, 1H, *CH*), 7.24 - 7.16 (m, 3H, *Ar-H*), 7.11 (m, 2H, *Ar-H*), 7.06 - 6.98 (m, 2H, *Ar-H*), 6.88 (m, 1H, *Ar-H*), 6.81 (d, *J* = 16.0 Hz, 1H, *CH*), 6.67 (d, *J* = 9.0 Hz, 2H, *Ar-H*), 6.51 (d, *J* = 7.9 Hz, 1H, *CH*), 3.85 (s, 3H, $OCH_3$), 3.82 (s, 4H, $CH_2$), 3.75 (h, *J* = 6.7 Hz, 2H, *CH*), 2.62 (s, 2H, $CH_2$), 2.49 (s, 2H, $CH_2$), 2.06 (bs, 9H, $CH_2$ + *CH*), 1.76 (bs, 6H, $CH_2$), 1.20 (d, *J* = 6.9 Hz, 12H, $CH_3$), 1.03 (s, 6H, $CH_3$), 0.88 (s, 9H, $CH_3$), 0.03 (s, 6H, $CH_3$).

**9.6 2-(4-((1E,3E)-3-(3-((E)-4-((3-(1-adamantyl)-4-methoxyphenyl)(2-((tert-butyl-dimethylsilyl)oxy)ethyl)amino)styryl)-2-((2,6-diisopropylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-8)**

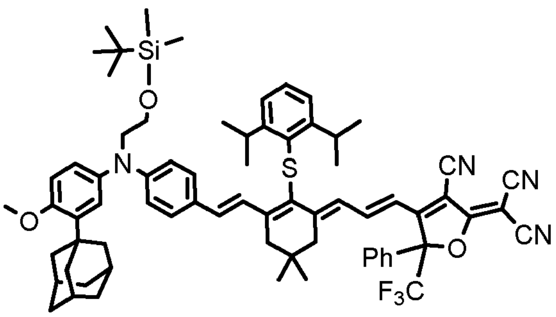

$^1$H-NMR (400 MHz, $CDCl_3$) δ 8.06 - 7.95 (m, 1H, CH), 7.88 (d, *J* = 15.8 Hz, 1H, *CH*), 7.52 (dq, *J* = 14.5, 6.9 Hz, 3H, *Ar-H*), 7.41 (d, *J* = 7.8 Hz, 2H, *Ar-H*), 7.25 - 7.17 (m, 3H, *Ar-H*), 7.09 (d, *J* = 7.6 Hz, 2H, *Ar-H*), 7.06 - 6.99 (m, 2H, *Ar-H*), 6.96 (d, *J* = 15.8 Hz, 1H, *CH*), 6.85 (m, 2H, *Ar-H* + *CH*), 6.66 (d, *J* = 8.9 Hz, 2H, *Ar-H*), 6.13 (d, *J* = 14.6 Hz, 1H, *CH*), 3.84 (m, 7H, $OCH_3$ + $CH_2$), 3.65 (q, *J* = 6.7 Hz, 2H, *CH*), 2.53 (s, 2H, $CH_2$), 2.25 (s, 2H, $CH_2$), 2.05 (bs, 9H, $CH_2$ + *CH*), 1.75 (bs, 6H, $CH_2$), 1.15 (s, 12H, $CH_3$), 0.99 (s, 3H, $CH_3$), 0.91 (s, 3H, $CH_3$), 0.86 (s, 9H, $CH_3$), 0.02 (s, 6H, $CH_3$).

**10. Synthesis of 2-(4-((1E,3E)-3-(3-((E)-4-((3-(1-adamantyl)-4-methoxyphenyl)(2-((tert-butyldiphenylsilyl)oxy)ethyl)amino)styryl)-2-((2,6-diisopropylphenyl) thio)-5,5-dimethylcyclohex-2-en-1-ylidene)prop-1-en-1-vl)-3-cyano-5-phenyl-5-(trifluoromethyl)furan-2(5H)-ylidene)malononitrile (I-9)**

**10.1 3-((E)-4-((3-(1-adamantyl)-4-methoxyphenyl)(2-hydroxyethyl)amino)styryl)-2-((2,6-diisopropylphenyl) thio)-5,5-dimethylcyclohex-2-en-1-one (D-9)**

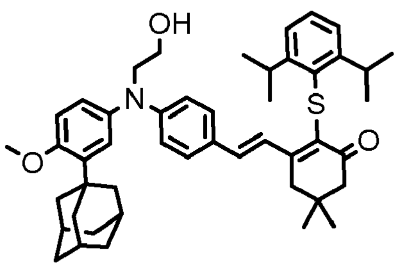

To a solution of (K-8) (0.37 g, 0.44 mmol) in 5.3 mL tetrahydrofuran was added tetra-n-butyl ammonium fluoride (1M in THF, 0.67 mL, 0.67 mmol) at 0°C and stirred at room temperature for 2 h. After concentration of the reaction mixture under reduced pressure, washed with brine, and extracted with ethylacetate. The residue was purified by column chromatography (dichloromethane:ethyl acetate, 9:1) to obtain (D-9) as an orange solid in 88% yield (0.28 g, 0.39 mmol).

$^1$H-NMR (400 MHz, $CDCl_3$) δ 7.81 (d, *J* = 16.1 Hz, 1H, *CH*), 7.30 (d, *J* = 8.9 Hz, 2H, *Ar-H*), 7.23 (d, *J* = 8.1 Hz, 1H, *Ar-H*), 7.12 (d, *J* = 7.6 Hz, 2H, *Ar-H*), 7.09 - 7.01 (m, 2H, *Ar-H*), 6.97 (d, *J* = 16.0 Hz, 1H, CH), 6.89 (d, *J* = 8.6 Hz, 1H, *Ar-H*), 6.70 (d, *J* = 8.9 Hz, 2H, *Ar-H*), 3.94 - 3.82 (m, 9H, $OCH_3$ + $CH_2$ + *CH*), 2.59 (s, 2H, $CH_2$), 2.27 (s, 2H, $CH_2$), 2.06 (bs, 9H, $CH_2$ + *CH*), 1.76 (bs, 6H, $CH_2$), 1.21 (d, *J* = 6.9 Hz, 12H, $CH_3$), 1.06 (s, 6H, $CH_3$).

**10.2 3-((E)-4-((3-(1-adamantyl)-4-methoxyphenyl)(2-((tert-butyldiphenylsilyl)oxy) ethyl)amino)styryl)-2-((2,6-diisopropylphenyl)thio)-5,5-dimethylcyclohex-2-en-1-one (K-9)**

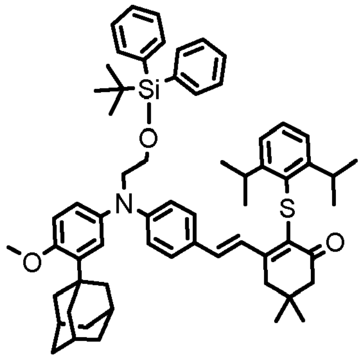

To a flask containing imidazole (0.066 g, 0.97 mmol) and dry dimethylformamide (2 mL) under an argon atmosphere, tert-butyl(chloro)diphenylsilane (0.125 mL, 0.48 mmol) was added dropwise. After 10 min of stirring, (D-9) (0.28 g, 0.39 mmol) was added, and the reaction was stirred overnight at room temperature. The reaction mixture was diluted with ethyl acetate and diethyl ether, washed with cold water, and brine, dried over sodium sulfate, and purified *via* column chromatography (hexane:ethyl acetate, 5:1) to get (K-9) as an orange solid in 83% yield (0.31 g, 0.32 mmol).

$^1$H-NMR (400 MHz, $CDCl_3$) δ 7.80 (d, *J* = 16.1 Hz, 1H, *CH*), 7.64 (dd, *J* = 8.1, 1.4 Hz, 4H, *Ar-H*), 7.46 - 7.39 (m, 2H, *Ar-H*), 7.39 - 7.33 (m, 4H, *Ar-H*), 7.24 (d, *J* = 8.3 Hz, 1H, *Ar-H*), 7.20 (d, *J* = 8.8 Hz, 2H, *Ar-H*), 7.11 (d, *J* = 7.5 Hz, 2H, *Ar-H*), 7.01 - 6.92 (m, 3H, *Ar-H* + *CH*), 6.83 (d, *J* = 8.6 Hz, 1H, *Ar-H*), 6.50 (d, *J* = 9.0 Hz, 2H, *Ar-H*), 3.95 - 3.82 (m, 9H, $OCH_3$ + $CH_2$ + *CH*), 2.58 (s, 2H, $CH_2$), 2.27 (s, 2H, $CH_2$), 2.03 (bs, 9H, $CH_2$ + *CH*), 1.75 (bs, 6H, $CH_2$), 1.22 (d, *J* = 6.9 Hz, 12H, $CH_3$), 1.06 (d, *J* = 7.4 Hz, 6H, $CH_3$), 1.04 (s, 9H, $CH_3$).

**10.3 (E)-2-(3-((E)-4-((3-(1-adamantyl)-4-methoxyphenyl)(2-((tert-butyldiphenylsilyl) oxy)ethyl)amino)styryl)-2-((2,6-diisopropylphenyl)thio)-5,5-dimethylcyclohex-2-en-1-ylidene)acetonitrile (C-9)**

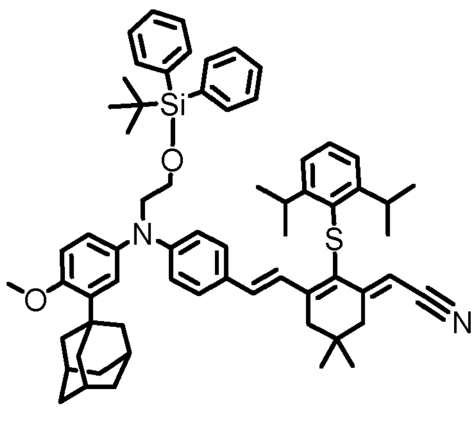

$^1$H-NMR (400 MHz, $CDCl_3$) δ 7.71 (d, *J* = 16.0 Hz, 1H, CH), 7.64 (d, *J* = 7.5 Hz, 4H, *Ar-H*), 7.43 (t, *J* = 7.3 Hz, 2H, *Ar-*

*H*), 7.36 (t, *J* = 7.4 Hz, 4H, *Ar-H*), 7.24 (d, overlapped with $CDCl_3$, 1H, *Ar-H*), 7.14 (d, *J* = 8.0 Hz, 4H, *Ar-H*), 7.02 - 6.92 (m, 2H, *Ar-H*), 6.86 - 6.76 (m, 2H, *Ar-H* + *CH*), 6.50 (d, *J* = 8.8 Hz, 2H, *Ar-H*), 5.62 (s, 1H, *CH*), 3.85 (s, 7H, $OCH_3$ + $CH_2$), 3.75 - 3.61 (m, 2H, *CH*), 2.48 (bs, 4H, $CH_2$), 2.03 (bs, 9H, $CH_2$ + *CH*), 1.76 (bs, 6H, $CH_2$), 1.19 (d, *J* = 6.8 Hz, 12H, $CH_3$), 1.05 (s, 15H, $CH_3$).

**10.4 (E)-2-(3-((E)-4-((3-(1-adamantyl)-4-methoxyphenyl)(2-((tert-butyldiphenylsilyl) oxy)ethyl)amino)styryl)-2-((2,6-diisopropylphenyl)thio)-5,5-dimethylcyclohex-2-en-1-ylidene)acetaldehyde (A-9)**

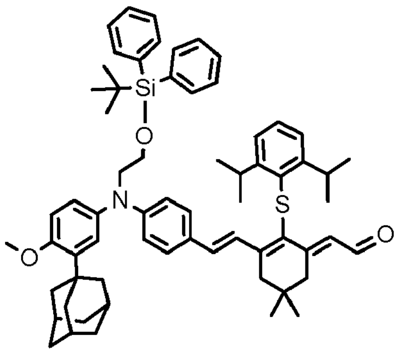

$^1$H-NMR (400 MHz, $CDCl_3$) δ 9.96 (d, *J* = 7.9, 1H, *CH*), 7.78 (d, *J* = 16.1 Hz, 1H, *CH*), 7.62 (m, 4H, *Ar-H*), 7.46 - 7.39 (m, 2H, *Ar-H*), 7.37 - 7.31 (m, 4H, *Ar-H*), 7.23 - 7.17 (m, 2H, *Ar-H*), 7.16 - 7.12 (m, 1H, *Ar-H*), 7.12 - 7.07 (m, 2H, *Ar-H*), 7.00 - 6.91 (m, 2H, *Ar-H*), 6.86 - 6.76 (m, 2H, *Ar-H* + *CH),* 6.51 - 6.43 (m, 2H, *Ar-H*), 6.43 - 6.33 (m, 1H, *CH*), 3.84 (d, *J* = 2.1 Hz, 7H, $OCH_3$ + $CH_2$), 3.73 (h, *J* = 6.8 Hz, 2H, *CH*), 2.61 (bs, 2H, $CH_2$), 2.49 (bs, 2H, $CH_2$), 2.02 (bs, 9H, $CH_2$ + *CH*), 1.74 (bs, 6H, $CH_2$), 1.20 (d, 6.8 Hz, 12H, $CH_3$), 1.04 (bs, 15H, $CH_3$).

**10.5 2-(4-((1E,3E)-3-(3-((E)-4-((3-(1-adamantyl)-4-methoxyphenyl)(2-((tert-butyldiphenylsilyl)oxy)ethyl)amino) styryl)-2-((2,6-diisopropylphenyl)thio)-5,5-dimethylcyclohex-2-en-1 -ylidene)prop-1 -en-1 -yl)-3-cyano-5-phenyl-5-(trifluoromethyl)furan-2(5H)-ylidene)malononitrile (I-9)**

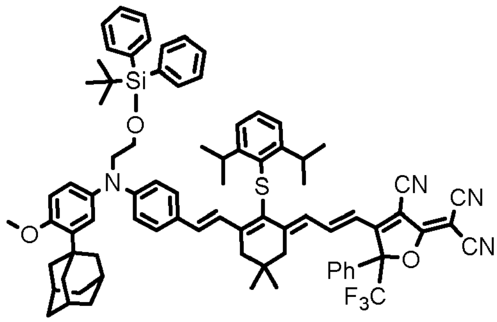

$^1$H-NMR (400 MHz, $CDCl_3$) δ 8.00 (t, *J* = 13.3 Hz, 1H), 7.91 (d, *J* = 15.9 Hz, 1H), 7.62 (d, *J* = 6.5 Hz, 4H), 7.57 - 7.46 (m, 3H, *Ar-H*), 7.41 (d, *J* = 7.4 Hz, 4H, *Ar-H*), 7.35 (t, *J* = 7.3 Hz, 4H, *Ar-H*), 7.19 (d, *J* = 8.6 Hz, 3H, *Ar-H*), 7.08 (d, *J* = 7.8 Hz, 2H), 6.99 - 6.91 (m, 3H, *Ar-H* + *CH*), 6.84 - 6.74 (m, 2H, *Ar-H* + *CH*), 6.49 (d, *J* = 9.0 Hz, 2H, *Ar-H*), 6.11 (d, *J* = 15.0 Hz, 1H, *CH*), 3.84 (s, 7H, $OCH_3$ + $CH_2$), 3.70 - 3.60 (m, 2H, *CH*), 2.53 (s, 2H, $CH_2$), 2.24 (s, 2H, $CH_2$), 2.01 (bs, 9H, $CH_2$ + *CH*), 1.74 (bs, 6H, $CH_2$), 1.14 (s, 12H, $CH_3$), 1.02 (s, 9H, $CH_3$), 0.98 (s, 3H, $CH_3$), 0.91 (s, 3H, $CH_3$).

**11. <u>Synthesis of 2-(4-((1E,3E)-3-(3-((E)-4-((3-(1-adamantyl)-4-methoxyphenyl)(2-((tert-butyldiphenylsilyl)oxy) ethyl)amino)styryl)-2-((2,6-dimethylphenyl)thio)-5,5-dimethylcyclohex-2-en-1-ylidene)prop-1-en-1-yl)-3-cyano-5-phenyl-5-(trifluoromethyl)furan-2(5H)-ylidene)malononitrile (I-10)</u>**

**11.1 4-((2-((tert-butyldiphenylsilyl)oxy)ethyl)amino)benzonitrile (P-10)**

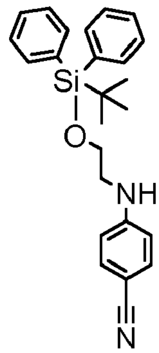

In an evacuated flask containing 4-(2-hydroxyethylamino)benzonitrile (4.9 g, 30.2 mmol) and 4-(dimethylamino) pyridine (37 mg, 0.3 mmol), was added dichloromethane (100 mL), tert-butyl(chloro)diphenylsilane (8.5 mL, 33.2 mmol), and triethylamine (8.7 mL, 62.5 mmol), and the resulting reaction mixture was stirred at room temperature for 16 h. The reaction mixture was diluted with water and extracted with dichloromethane. The organic layer was separated and washed with water, brine solution, dried over sodium sulfate and concentrated. The crude product was passed through a column of silica gel (hexane:ethyl acetate, 5:1) to obtain a white solid in 61% yield (7.4 g, 18.5 mmol).

$^1$H-NMR (400 MHz, $CDCl_3$) δ 7.67 - 7.62 (m, 4H, *Ar-H*), 7.48 - 7.43 (m, 2H, *Ar-H*), 7.38 (m, 6H, *Ar-H*), 6.47 (d, *J* = 8.9 Hz, 2H, *Ar-H*), 4.52 (t, *J* = 5.8 Hz, 1H, *NH*), 3.86 (t, *J* = 5.4 Hz, 2H, $CH_2$), 3.28 (q, *J* = 5.6 Hz, 2H, $CH_2$), 1.07 (s, 9H, $CH_3$).

**11.2 4-((3-(1-adamantyl)-4-methoxyphenyl)(2-((tert-butyldiphenylsilyl)oxy)ethyl) amino)benzonitrile (N-10)**

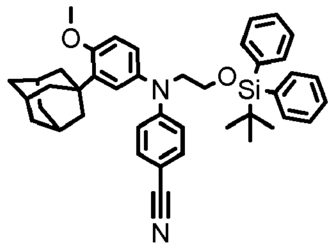

In an evacuated flask under argon, 6.44 g (20 mmol) of 1-(5-bromo-2-methoxyphenyl)adamantane, 7.3 g (18.2 mmol) of (P-10), and dry toluene (45 mL) were added. The solution was purged with argon for 15 min, followed by the addition of sodium tert-butoxide (1.93 g, 20 mmol), palladium(II) acetate (0.3 g, 1.37 mmol) and tri-tert-butylphosphine (0.66 mL, 2.73 mmol) under argon. The reaction mixture was heated to 111°C for 3 days. After cooling to room temperature, the reaction mixture was diluted with dichloromethane, and the solids were removed by filtration. The filtrate was purified by chromatography (hexane: dichloromethane, 1:1) obtaining the product as a white powder in 69% yield (8.1 g, 12.64 mmol).

$^1$H-NMR (400 MHz, $CDCl_3$) δ 7.63 (dd, *J* = 8.1, 1.4 Hz, 4H, *Ar-H*), 7.47 - 7.41 (m, 2H, *Ar-H*), 7.37 (t, *J* = 7.1 Hz, 4H, *Ar-H*), 7.24 ($CdCl_3$ overlapped, 2H, *Ar-H*), 6.95 - 6.88 (m, 2H, *Ar-H*), 6.83 (d, *J* = 8.6 Hz, 1H, *Ar-H*), 6.39 (d, *J* = 9.1 Hz, 2H, *Ar-H*), 3.85 (s, 3H, $OCH_3$), 3.83 (d, *J* = 4.9 Hz, 2H, $CH_2$), 3.78 (t, *J* = 6.1 Hz, 2H, $CH_2$), 2.02 (bs, 9H, $CH_2$ + *CH*), 1.75 (bs, 6H, $CH_2$), 1.03 (s, 9H, $CH_3$).

**11.3 4-((3-(1-adamantyl)-4-methoxyphenyl)(2-((tert-butyldiphenylsilyl)oxy)ethyl) amino)benzaldehyde (R-10)**

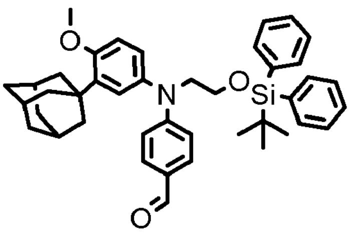

A solution of (N-10) (8.1 g, 12.64 mmol) in 40 mL of dry toluene under an argon atmosphere was cooled down to -78°C and diisobutylaluminum hydride (1.2 M in toluene, 11.8 mL, 14.15 mmol) was added dropwise. After stirring for 1.5 h at -78°C, the reaction mixture was warmed up to 0°C and stirred further 2 h. To hydrolyze, wet silica gel (8 g with 8 mL water) in diethyl ether (40 mL) was added and stirred for 2 h. The product was poured into water, extracted with ethyl acetate, and the solvent was evaporated under reduced pressure. The crude product was purified by column chromatography (dichloromethane:hexane, 5:1) to get (R-10) as a yellow solid in 84% yield (6.85 g, 10.6 mmol).

$^1$H-NMR (400 MHz, $CDCl_3$) δ 9.69 (s, 1H, *CH*), 7.64 (dd, *J* = 8.1, 1.4 Hz, 4H, *Ar-H*), 7.54 (d, *J* = 9.0 Hz, 2H, *Ar-H*), 7.49 - 7.42 (m, 2H, *Ar-H*), 7.40 - 7.33 (m, 4H, *Ar-H*), 6.98 - 6.91 (m, 2H, *Ar-H*), 6.85 (d, *J* = 8.5 Hz, 1H, *Ar-H*), 6.48 (d, *J* = 9.0 Hz, 2H, *Ar-H*), 3.89 - 3.82 (m, 7H, $OCH_3$ + $CH_2$), 2.04 (bs, 9H, $CH_2$ + *CH*), 1.75 (bs, 6H, $CH_2$), 1.04 (s, 9H, $CH_3$).

**11.4 3-((E)-4-((3-(1-adamantyl)-4-methoxyphenyl)(2-((tert-butyldiphenylsilyl)oxy) ethyl)amino)styryl)-2-((2,6-dimethylphenyl)thio)-5,5-dimethylcyclohex-2-en-1-one (K-10)**

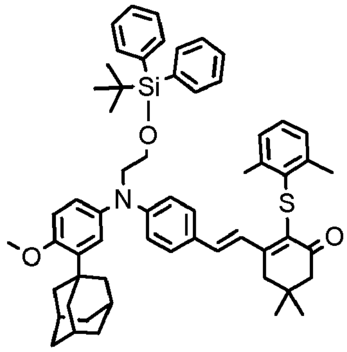

Piperidine (0.15 mL, 1.55 mmol) and 1 M lithium ethylate in ethanol (0.54 mL, 0.54 mmol) were added to the solution of (R-10) (1 g, 1.55 mmol) and (B-5) (0.47 g, 1.71 mmol) in 8 mL dry ethanol under argon. The reaction mixture was heated to 70°C for 3 days. After cooling to room temperature, the solvent was evaporated, and the crude product was purified by column chromatography (hexane:ethyl acetate 20:1 to 10:1) obtaining (K-10) as an orange solid in 20% yield (0.28 g, 0.31 mmol).

$^1$H-NMR (400 MHz, $CDCl_3$) δ 7.79 (d, *J* = 16.0 Hz, 1H, CH), 7.66 (d, *J* = 7.4 Hz, 4H, *Ar-H*), 7.45 (t, *J* = 7.3 Hz, 2H, *Ar-H*), 7.38 (t, *J* = 6.1 Hz, 4H, *Ar-H*), 7.22 (d, *J* = 8.6 Hz, 2H, *Ar-H*), 7.01 - 7.04 (m, 4H, *Ar-H*), 6.99 - 6.91 (m, 2H, *Ar-H* + *CH*), 6.88 - 6.82 (m, 1H, *Ar-H*), 6.51 (d, *J* = 8.0 Hz, 2H, *Ar-H*), 3.86 (s, 7H, $CH_2$ + $CH_3$), 2.64 (d, *J* = 8.4 Hz, 2H, $CH_2$), 2.52 (s, 6H, $CH_3$), 2.32 (s, 2H, $CH_2$), 2.05 (s, 9H, $CH_2$ + *CH*), 1.77 (s, 6H, $CH_2$), 1.08 (s, 6H, $CH_3$), 1.06 (s, 9H, $CH_3$).

**11.5 (E)-2-(3-((E)-4-((3-(1-adamantyl)-4-methoxyphenyl)(2-((tert-butyldiphenylsilyl) oxy)ethyl)amino)styryl)-2-((2,6-dimethylphenyl)thio)-5,5-dimethylcyclohex-2-en-1-ylidene)acetonitrile (C-10)**

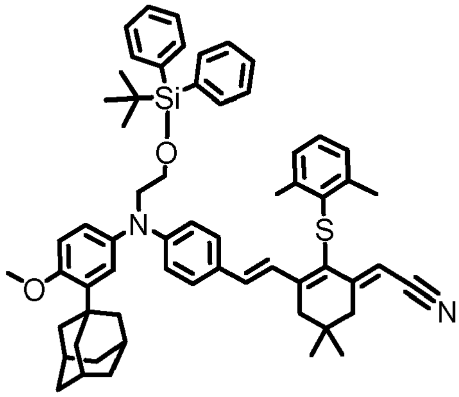

$^1$H-NMR (400 MHz, $CDCl_3$) δ 7.74 - 7.70 (m, 1H, *CH),* 7.66 (dd, *J* = 8.1, 1.6 Hz, 4H, *Ar-H*), 7.48 - 7.42 (m, 2H, *Ar-H*), 7.38 (t, *J* = 7.1 Hz, 4H, *Ar-H*), 7.17 (d, *J* = 8.9 Hz, 2H, *Ar-H*), 7.05 - 7.00 (m, 4H, *Ar-H*), 6.97 (dd, *J* = 8.6, 2.6 Hz, 1H, *Ar-H*), 6.85 (d, *J* = 8.6 Hz, 1H, *Ar-H*), 6.80 (d, *J* = 15.9 Hz, 1H, *CH*), 6.53 (d, *J* = 9.0 Hz, 2H, *Ar-H*), 5.64 (s, 1H, *CH*), 3.87 (s, 7H, $OCH_3$ + $CH_2$), 2.53 (d, *J* = 16.8 Hz, 4H, $CH_2$), 2.41 (s, 6H, $CH_3$), 2.05 (bs, 9H, $CH_2$ + *CH*), 1.77 (bs, 6H, $CH_2$), 1.07 (s, 15H, $CH_3$).

**11.6 (E)-2-(3-((E)-4-((3-(1-adamantyl)-4-methoxyphenyl)(2-((tert-butyldiphenylsilyl) oxy)ethyl)amino)styryl)-2-((2,6-dimethylphenyl)thio)-5,5-dimethylcyclohex-2-en-1-ylidene)acetaldehyde (A-10)**

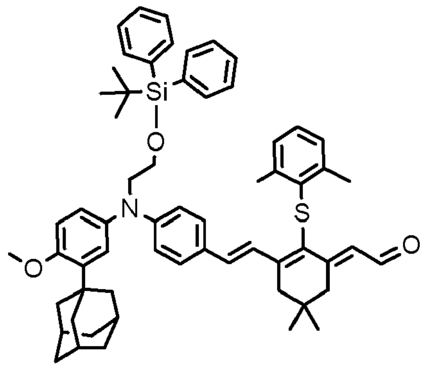

$^1$H-NMR (400 MHz, $CDCl_3$) δ 9.98 (d, *J* = 7.9 Hz, 1H, CH), 7.71 (d, *J* = 16.1 Hz, 1H, *CH*), 7.63 (dd, *J* = 8.0, 1.5 Hz, 4H, *Ar-H*), 7.46 - 7.39 (m, 2H, *Ar-H*), 7.35 (m, 4H, *Ar-H*), 7.13 (d, *J* = 9.0 Hz, 2H, *Ar-H*), 6.98 (m, 4H, *Ar-H*), 6.93 (dd, *J* = 8.6, 2.6 Hz, 1H, *Ar-H*), 6.82 (d, *J* = 8.6 Hz, 1H, *Ar-H*), 6.76 (d, *J* = 16.3 Hz, 1H, *CH*), 6.53 - 6.47 (m, 3H, *CH* + *Ar-H*), 3.84 (d, *J* = 3.5 Hz, 7H, $OCH_3$ + $CH_2$), 2.65 (s, 2H, $CH_2$), 2.51 (s, 2H, $CH_2$), 2.41 (s, 6H, $CH_3$), 2.02 (bs, 9H, $CH_2$ + *CH),* 1.74 (bs, 6H, $CH_2$), 1.05 (s, 6H, $CH_3$), 1.03 (s, 9H, $CH_3$).

**11.7 2-(4-((1E,3E)-3-(3-((E)-4-((3-(1-adamantyl)-4-methoxyphenyl)(2-((tert-butyl-diphenylsilyl)oxy)ethyl)amino)styryl)-2-((2,6-dimethylphenyl)thio)-5,5-dimethylcyclohex-2-en-1 -ylidene)prop-1 -en-1 -yl)-3-cyano-5-phenyl-5-(trifluoromethyl)furan-2(5H)-ylidene)malononitrile (I-10)**

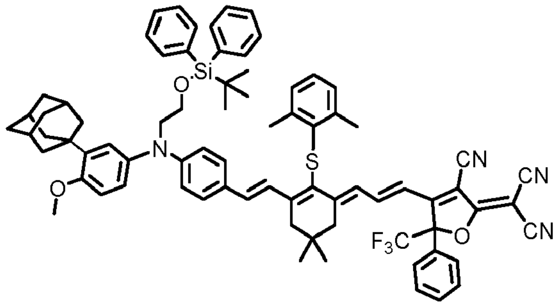

$^1$H-NMR (400 MHz, $CDCl_3$) δ 7.98 (t, *J* = 12.9 Hz, 1H, CH), 7.70 (d, *J* = 15.8 Hz, 1H, *CH),* 7.63 (d, *J* = 6.8 Hz, 4H, *Ar-H*), 7.53 (m, 3H, *Ar-H*), 7.48 - 7.40 (m, 4H, *Ar-H*), 7.35 (t, *J* = 7.4 Hz, 4H, *Ar-H*), 7.14 (d, *J* = 8.9 Hz, 2H, *Ar-H*), 7.03 - 6.91 (m, 6H, *CH + Ar-H*), 6.88 (d, *J* = 15.9 Hz, 1H, *CH*), 6.83 (d, *J* = 8.6 Hz, 1H, *Ar-H*), 6.49 (d, *J* = 8.9 Hz, 2H, *Ar-H*), 6.18 (d, *J* = 14.6 Hz, 1H, *CH*), 3.85 (d, *J* = 3.8 Hz, 7H, $OCH_3$ + $CH_2$), 2.54 (s, 2H, $CH_2$), 2.38 (s, 6H, $CH_3$), 2.28 (d, *J* = 7.8 Hz, 2H, $CH_2$), 2.02 (bs, 9H, $CH_2$ + *CH*), 1.75 (bs, 6H, $CH_2$), 1.03 (s, 9H, $CH_3$), 1.01 (s, 3H, $CH_3$), 0.92 (s, 3H, $CH_3$).

## 12. General procedures

**Table 1:** Reaction details for the synthesis of (C-1) to (C-10)

| Intermediate | Lithium diisopropylamide (2M solution in tetrahydrofuran) / tetrahydrofuran (mmol / mL) | Acetonitrile / tetrahydrofuran (mmol / mL) | (K-X) / tetrahydrofuran (mmol / mL) | Glacial acetic acid (mL) | Yield (mmol, %) |
|---|---|---|---|---|---|
| (C-1) | 4.3 / 3 | 10.5 / 2.5 | 1.48 / 5 | 2.5 | 1.03, 70 |
| (C-2) | 0.88 / 0.6 | 2.11 / 0.45 | 0.3 / 1 | 0.5 | 0.18, 70 |
| (C-3) | 2.97 / 2 | 7.16 / 1.5 | 1.02 / 3.5 | 1.6 | 0.56, 55 |
| (C-4) | 2.47 / 1.8 | 5.96 / 1.5 | 0.85 / 3 | 1.5 | 0.46, 55 |
| (C-5) | 2.37 / 1.7 | 5.72 / 1.5 | 0.82 / 2.7 | 1.4 | 0.52, 63 |
| (C-6) | 3.6 / 2.5 | 8.82 / 2 | 1.26 / 4 | 2.0 | 0.81, 65 |
| (C-7) | 3.97 / 2.7 | 9.58 / 2 | 1.37 / 4 | 2.2 | 0.69, 50 |
| (C-8) | 1.04 / 0.7 | 2.52 / 0.5 | 0.36 / 1.1 | 0.6 | 0.18, 50 |
| (C-9) | 0.94 / 0.65 | 2.27 / 0.5 | 0.32 /1 | 0.55 | 0.12, 38 |
| (C-10) | 2.74 / 2 | 6.6 / 1.5 | 0.94 / 3 | 1.5 | 0.46, 49 |

General procedure: A solution of lithium diisopropylamide in tetrahydrofuran was cooled to -78°C. Dry acetonitrile in tetrahydrofuran was added dropwise to the cooled solution. The mixture was stirred at -78°C for 10 min followed by the addition of (K-X) dissolved in tetrahydrofuran. After 5 min, the reaction was warmed up to 0°C and quenched with water after 20 min. The organic solvents were evaporated under reduced pressure. The residue was extracted with ethyl acetate, washed with brine, deionized water, and dried over sodium sulfate. After roto evaporation, glacial acetic acid was added to the yellow oil, and the solution was stirred at 75°C for 4 h. After bringing the solution to room temperature, dichloromethane was added, and the solution was neutralized with a saturated aqueous solution of sodium bicarbonate. The organic phase was collected, and the residual solvent evaporated under reduced pressure. The crude product was purified by column chromatography (hexane:ethyl acetate 5:1) obtaining respective (C-X) as an orange solid.

**Table 2:** Reaction details for the synthesis of (A-1) to (A-10)

| Intermediate | (C-X) (mmol) | Diisobutyl-aluminum hydride (1.2 M solution in toluene) (mmol) | Toluene (mL) | Wet silica gel / diethyl ether (g / mL) | Yield (mmol, %) |
|---|---|---|---|---|---|
| (A-1) | 1.02 | 1.33 | 8 | 1 / 10 | 0.55, 55 |
| (A-2) | 0.18 | 0.24 | 2 | 0.2 / 2 | 0.098, 54 |
| (A-3) | 0.48 | 0.63 | 4 | 0.4 / 4 | 0.31, 65 |
| (A-4) | 0.53 | 0.68 | 5 | 0.5 / 5 | 0.27, 52 |
| (A-5) | 0.52 | 0.63 | 5 | 0.5 / 5 | 0.3, 60 |
| (A-6) | 1.56 | 2.34 | 12 | 1.5 / 15 | 0.87, 56 |
| (A-7) | 0.69 | 0.89 | 6 | 0.6 / 6 | 0.37, 54 |
| (A-8) | 0.17 | 0.228 | 1.5 | 0.15/1.5 | 0.064, 37 |
| (A-9) | 0.11 | 0.146 | 1 | 0.1 / 1 | 0.04, 36 |
| (A-10) | 0.45 | 0.59 | 4 | 0.4 / 4 | 0.15, 33 |

General procedure: A solution of (C-X) in dry toluene under an argon atmosphere was cooled down to -78°C and diisobutylaluminum hydride was added dropwise. After stirring for 1.5 h at -78°C, the reaction mixture was warmed up to 0°C for 10 min followed by the addition of wet silica gel in diethyl ether, and the reaction mixture was kept at 0°C for 1.5 h. The product was poured into water, extracted with ethyl acetate, and the solvent was evaporated under reduced pressure. The crude product was purified by column chromatography (hexane:ethyl acetate, 6:1) to get (A-X) as a red solid.

**Table 3:** Reaction details for the synthesis of (I-1) to (I-10)

| Compound | (A-X) (mmol) | Acceptor (mmol) | Ethanol (mL) | Dichloromethane (mL) | Yield (mmol, %) | ESI-MS (m/z) calculated, found | $\lambda_{max}$ in dichloromethane (nm) |
|---|---|---|---|---|---|---|---|
| (I-1) | 0.55 | 0.61 | 13 | 3.5 | 0.42, 74 | 1335.617, 1335.619 | 787 |
| (I-2) | 0.44 | 0.48 | 10 | 2.5 | 0.34, 77 | 1319.644, 1319.637 | 809 |
| (I-3) | 0.34 | 0.38 | 5 | 1.5 | 0.1, 30 | 1250.520, 1250.521 | 785 |
| (I-4) | 0.25 | 0.28 | 5 | 1.3 | 0.1, 40 | 1321.606, 1321.601 | 787 |
| (I-5) | 0.28 | 0.31 | 6 | 1.5 | 0.17, 60 | 1265.543, 1265.54 | 788 |
| (I-6) | 0.86 | 1.12 | 20 | 5 | 0.65, 76 | 1036.493, 1036.492 | 829 |
| (I-7) | 0.37 | 0.47 | 8.5 | 2 | 0.117, 32 | 980.431, 980.429 | 829 |
| (I-8) | 0.061 | 0.067 | 1.4 | 0.4 | 0.012, 21 | 1154.575, 1154.580 | 788 |
| (I-9) | 0.04 | 0.045 | 1 | 0.25 | 0.015, 38 | 1278.606, 1278.610 | 788 |

(continued)

| Compound | (A-X) (mmol) | Acceptor (mmol) | Ethanol (mL) | Dichloromethane (mL) | Yield (mmol, %) | ESI-MS (m/z) calculated, found | $\lambda_{max}$ in dichloromethane (nm) |
|---|---|---|---|---|---|---|---|
| (I-10) | 0.15 | 0.166 | 3.5 | 1 | 0.081, 54 | 1222.543, 1222.538 | 788 |

General procedure: A mixture of (A-X) and 2-(3-cyano-4-methyl-5-phenyl-5-(trifluoromethyl)furan-2(5H)-ylidene)malononitrile (acceptor) (M. He et al., "Synthesis of Chromophores with Extremely High Electro-optic Activity. 1. Thiophene-Bridge-Based Chromophores," Chemistry of materials, 14, 2002; G. Melikian et al., Synthesis of Substituted Dicyanomethylendihydrofurans,"Synthetic communications, 25, 1995) were dissolved in ethanol and dichloromethane, and heated to 65°C for 16 h. After cooling down, the solvents were removed under reduced pressure, and the crude product was purified by column chromatography (hexane:ethyl acetate, 5:1 to 3:1) obtaining (I-X) as a dark green solid.

All compounds of formulae (I-1) to (I-10) according to the invention exhibited a thermal decomposition temperature above 200°C (5% weight loss).

## 13. Device tests

The performance of the compounds of formulae (I-1) to (I-10) according to the invention was tested in Silicon-Organic Hybrid (SOH) electro-optic modulators. Such devices utilize electro-optic materials to incorporate a Pockels-Effect into nanophotonic silicon slot waveguides (C. Kieninger et al., "Silicon-organic hybrid (SOH) Mach-Zehnder modulators for 100 GBd PAM4 signalling with sub-1 dB phase-shifter loss", Optics Express 2020, 28(17), pp. 24693-24707, https://doi.org/10.1364/OE.390315). The working principles and schematics of the SOH modulators used in the present tests of the compounds according to the invention are described in detail in chapter 2 (pages 24694 - 24697) of C. Kieninger et al., Optics Express 2020, 28(17) (https://doi.org/10.1364/OE.390315), which is incorporated herein by reference. The tested compounds were applied to the slot modulators via needle dispensing. A thin needle is filled with the respective compound formulation (cf. **Table 4** below) and brought close to the modulator surface, so that a meniscus between needle and modulator surface is formed. By moving the needle over the modulator surface, a thin line of the formulation can be applied. The films are then dried on a hotplate under vacuum, during which the solvent evaporates.

Utilizing the measurement procedure described in chapter 3 (page 24697) in C. Kieninger et al., Optics Express 2020, 28(17), pp. 24693-24707 (https://doi.org/10.1364/OE.390315), all tested compounds of formulae (I-1) to (I-10) according to the invention exhibit a high modulation efficiency resulting in a half-wave-voltage-length-product ($U_\pi L$) < 1 Vmm (cf. **Table 4** below). For compounds of formulae (I-1) to (I-6) according to the invention, a half-wave-voltage-length-product ($U_\pi L$) < 0.5 Vmm was determined in the C-band, comparable to commercial state-of-the-art materials like JRD1 (C. Kieninger et al., Optics Express 2020, 28(17), https://doi.org/10.1364/OE.390315; cf. **Scheme** 2 above). Moreover, compounds of formulae (I-5), (I-9) and (I-10) according to the invention exhibit a half-wave-voltage-length-product ($U_\pi L$) < 0.5 Vmm in the O-band, which significantly outperforms current state-of-the-art materials by a factor of 10 (H. Salo et al., "O-Band Silicon-Organic Hybrid EO Modulator," in proc. ICSJ 2021, doi: 10.1109/ICSJ52620.2021.9648900).

Compound of formula (I-7) according to the invention exhibits a $U_\pi L$ < 1 Vmm in the C-band, while compounds of formulae (I-8) to (I-10) according to the invention exhibit a $U_\pi L$ < 0.7 Vmm. A 1:1 mixture of compounds of formulae (I-1) and (I-5) according to the invention also exhibits a $U_\pi L$ < 0.7 Vmm (cf. **Table 4** below).

Additionally, mixtures of various compounds of formula (I) according to the invention with different host materials were tested. A mixture of compound of formula (I-6) with the host materials polycarbonate and APEC (50:25:25 solid weight ratio, 3 wt.% in TCE before drying; "APEC" = poly(bisphenol A carbonate-co-4,4'-(3,3,5-trimethylcyclohexylidene) diphenol carbonate) ("Apec® 1895")) resulted in a $U_\pi L$ < 0.5 Vmm and low optical losses (< 2.5 dB/mm) in the C-band. Utilizing compound of formula (I-7), a 50:25:25 solid mixture (weight ratio) with polycarbonate and APEC (3 wt.% in TCE before drying) resulted in a $U_\pi L$ < 1 Vmm and low optical losses (< 2.5 dB/mm) in the C-band. The same results were achieved with a 50:50 mixture (solid weight ratio) of the compound of formula (I-7) and APEC (3 wt.% in TCE before drying). A mixture of the compound of formula (I-9) with polycarbonate and APEC (50:25:25 solid weight ratio, 3 wt.% in TCE before drying) resulted in a $U_\pi L$ < 0.7 Vmm and low optical losses (< 3 dB/mm) in the C-band. In another experiment, the compound of formula (I-9) was mixed with APEC alone (50:50 solid weight ratio, 3 wt.% in ethyl phenyl ether before drying), which resulted in a $U_\pi L$ < 0.7 Vmm and low optical losses (< 2.5 dB/mm) in the C-band. The mixture of compound of formula (I-10) with polycarbonate and APEC (50:25:25 solid weight ratio, 3 wt.% in TCE before drying) resulted in a $U_\pi L$ < 0.7 Vmm and low optical losses (< 3 dB/mm) in the C-band. Mixtures of compound of formula (I-10) with APEC (50:50 solid weight ratio, 3 wt.% in ethyl phenyl ether before drying, and 50:50 solid weight ratio, 5 wt.% in mesitylene before drying) resulted in

a $U_{\pi}L$ < 0.7 Vmm and low optical losses (< 2.5 dB/mm) in the C-band.

All investigated samples exhibit low optical loss, irrespective of the utilized solvents, highlighting the versatility of the compounds according to the present invention.

Table **4:** Performance parameters of compounds of formulae (I-1) to (I-10) according to the invention and of comparative compound JRD1

| **Compound** | **Solution (in weight percent)** | **Host material (solid weight ratios)** | **Optical loss in the C-band (dB/mm)** | **Optical loss in the O-band (dB/mm)** | **Record $U_{\pi}L$ in C-band (Vmm)** | **Record $U_{\pi}L$ in O-band (Vmm)** |
|---|---|---|---|---|---|---|
| (I-1) | **3 % in TCE*** ** | **none** | **1.7** | | **< 0.5** | |
| (I-2) | 3 % in TCE | none | 2.1 | | < 0.5 | |
| (I-3) | 3 % in TCE | none | < 2.5 | | < 0.5 | |
| (I-4) | 3 % in TCE | none | < 2.5 | | < 0.5 | |
| (I-5) | 3 % in TCE | none | < 2.5 | <5 | < 0.5 | < 0.5 |
| (I-6) | 3 % in TCE | 50 : 25 : 25<br>(I-6) : polycar-bonate : APEC | < 2.5 | | < 0.5 | |
| (I-7) | 3 % in TCE | 50 : 25 : 25<br>(I-7) : polycar-bonate : APEC | < 2.5 | | < 1 | |
| (I-7) | 3 % in TCE | 50 : 50<br>(I-7) : APEC | < 2.5 | | < 1 | |
| (I-8) | 3 % in TCE | none | < 2.5 | | < 0.7 | |
| (I-8) | 3 % in ethyl phenyl ether | none | < 2.5 | | < 0.7 | |
| (I-9) | 3 % in TCE | none | < 3 | | < 0.7 | |
| (I-9) | 3 % in TCE | 50 : 25 : 25<br>(I-9) : polycar-bonate : APEC | < 3 | | < 0.7 | |
| (I-9) | 3 % in ethyl phenyl ether | none | < 2.5 | < 5 | < 0.7 | < 0.5 |
| | | | | | | |
| (I-9) | 3 % in ethyl phenyl ether | 50 : 50<br>(I-9) : APEC | < 2.5 | | < 0.7 | |
| (I-10) | 3 % in TCE | none | < 3 | | < 0.7 | |
| (I-10) | 3 % in TCE | 50 : 25 : 25<br>(I-10) : polycar-bonate : APEC | < 3 | | < 0.7 | |
| (I-10) | 3 % in ethyl phenyl ether | none | < 2.5 | < 3.5 | < 0.7 | < 0.5 |
| (I-10) | 3 % in ethyl phenyl ether | 50 : 50<br>(I-10) : APEC | < 2.5 | | < 0.7 | |
| (I-10) | 5 % in mesitylene, mixed | none | < 2.5 | | < 0.7 | |

(continued)

| Compound | Solution (in weight percent) | Host material (solid weight ratios) | Optical loss in the C-band (dB/mm) | Optical loss in the O-band (dB/mm) | Record $U_\pi L$ in C-band (Vmm) | Record $U_\pi L$ in O-band (Vmm) |
|---|---|---|---|---|---|---|
| (I-10) | 5 % in mesitylene | 50 : 50 (I-10) : APEC | < 2.5 | | < 0.7 | |
| (I-1) : (I-5) (1 : 1) | 3 % in TCE | | < 2.5 | | < 0.7 | |
| JRD1 | 3 % in TCE | | 2.8* | | 0.32** | |
| * C. Kieninger et al., "Silicon-organic hybrid (SOH) Mach-Zehnder modulators for 100 GBd PAM4 signaling with sub-1 dB phase-shifter loss", Optics Express 2020, 28(17), pp. 24693-24707<br>** C. Kieninger et al., "Ultra-high electro-optic activity demonstrated in a silicon-organic hybrid modulator" Optica, 5, 2018<br>*** TCE = 1,1,2-Trichlorethane | | | | | | |

## 14. Light stability tests

Light stability of nonlinear optical dyes is a major prerequisite for the operational stability of light modulating devices based on these materials. In Y. Tominari et al., Japanese Journal of Applied Physics 2021, 60, 101002 (https://doi.org/10.35848/1347-4065/ac235a), excited singlet oxygen - which is produced by energy transfer from the excited nonlinear optical dyes - is described as the main source of photodegradation. For commercial applicability of nonlinear optical dyes, a prolonged stability in the presence of oxygen is highly desirable. Main reaction pathways leading to degradation of the dyes by singlet oxygen are [2+2] cycloadditions and ene reactions (cf. C. M. C. Andrés, Reactivity and Applications of Singlet Oxygen Molecule (2023), DOI: 10.5772/intechopen.112024). Within the studies underlying the present invention, it was surprisingly found that the compounds of formula (I) according to the invention display improved light stability. It was further found that the specific structures of the compounds of formula (I) are able to sterically hinder the known reactions of unsaturated carbon bonds with singlet oxygen (cf. further below).

Light stability tests were performed with the compounds of formulae (I-1), (I-2), (I-3) and (I-4) according to the invention as well as with comparative compound JRD1 (which has been synthesized according to the procedure described in W. Jin et al., Journal of Materials Chemistry C 4, 3119-3124 (2016), DOI: 10.1039/C6TC00358C). The absorption profile of all compounds under investigation exhibits a significant absorption in the range of ca. 650-900 nm (full width at half maximum ≈ 510-530 meV). **Figure 1** shows a schematic of the utilized thin-film lifetime measurement setup (EO = electro-optic; PD = photo diode). Thin films of the respective neat compounds were spin-cast under ambient conditions (22 °C, 46 % relative humidity) on freshly cleaned glass substrates from solution (3 wt. % in TCE) and dried on a hotplate for 1 hour at 75 °C. Utilizing the same dye concentration and process parameters for each dye solution, films with equal layer thicknesses of 200 nm were prepared. The films were subsequently illuminated by a 785 nm semiconductor-laser (FPL785S-250, Thorlabs) with an output intensity of 20 mW through the glass substrate. The chosen wavelength of 785 nm excites the main absorption of all tested compounds and the intensity of the beam after the film was measured with a photo diode (S120C, Thorlabs). The laser beam was focused via a lens resulting in an intensity of 6 $W/cm^2$ in the illuminated thin films. The measurements were performed at room temperature und ambient conditions. To avoid bleaching effects from the room illumination, the thin films were masked during the measurement. During the measurements, bleaching of the films caused by the illumination was observed and resulted in a rise in the transmission of the laser intensity. The experiments were run for 2 hours for each sample and the transmission was recorded every 5 minutes. The observed changes in transmission over time indicate the photostability of the respective material. The results of the tests are depicted in **Figure 2.** As shown in **Figure 2,** all of the compounds of formulae (I-1) to (I-4) according to the invention show a drastically reduced degradation over time compared to the comparative compound JRD1 (the degradation factor indicated in **Figure 2** refers to the measured power at the photo diode, normalized to the initial value). The compound of formula (I-4) exhibits the slowest degradation of all tested nonlinear optical dyes. The compounds of formulae (I-2), (I-3) and (I-1) exhibit just a slightly faster degradation than compound of formula (I-4).

These results demonstrate that the compounds of formula (I) according to the present invention surprisingly and advantageously are particularly resistant against light degradation by singlet oxygen or free radicals.

15. Density functional theory (DFT) calculations

To further investigate the role of the steric hindrance of the substituents bound to E in the light stability displayed by the compounds of formula (I), the molecular geometries of the compounds of formulae (I-3), (I-4) and (I-5) according to the invention were calculated and the steric shielding of the polyene chain was compared with the one of comparative dyes JRD1 (cf. **Scheme 2;** bearing no substituent on the cyclohexene bridge) and CE-1, which bears an unsubstituted phenyl group on the cyclohexene bridge. For the sake of reducing computing time, the substituents on the donor nitrogen (cf. $R^3$ and $R^4$ in the compounds of formula (I)) were changed to simple ethyl groups as indicated by the suffix "mod". The chemical structures of the modified compounds used in the calculations are shown below:

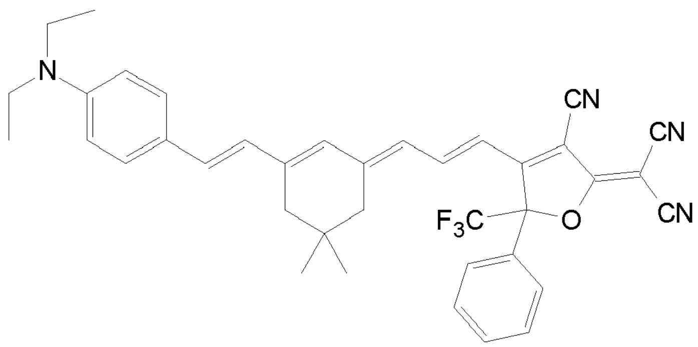

**Scheme 4:** Structure of JRD1mod

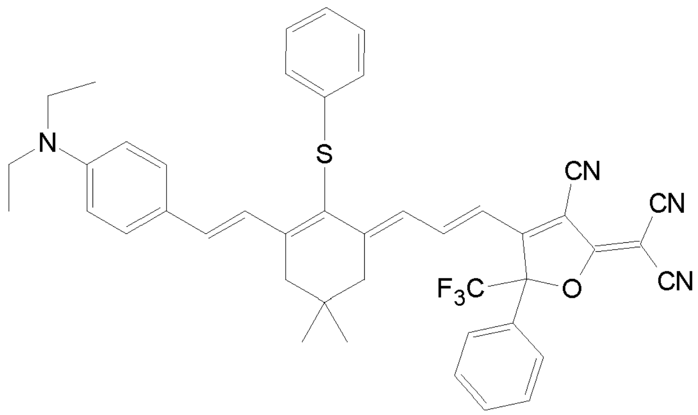

**Scheme 5:** Structure of CE-1mod

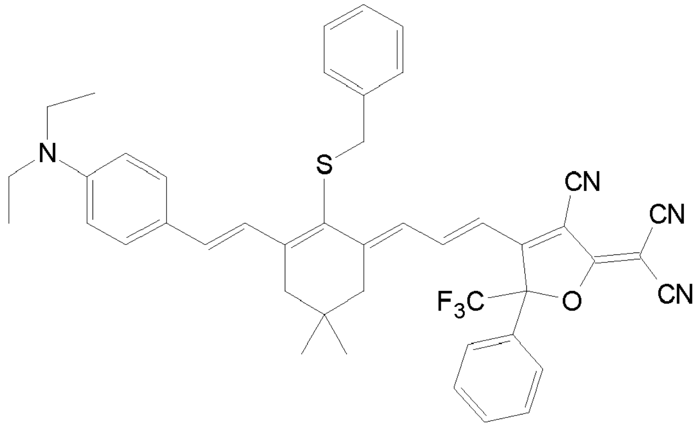

**Scheme 6:** Structure of (I-3)mod

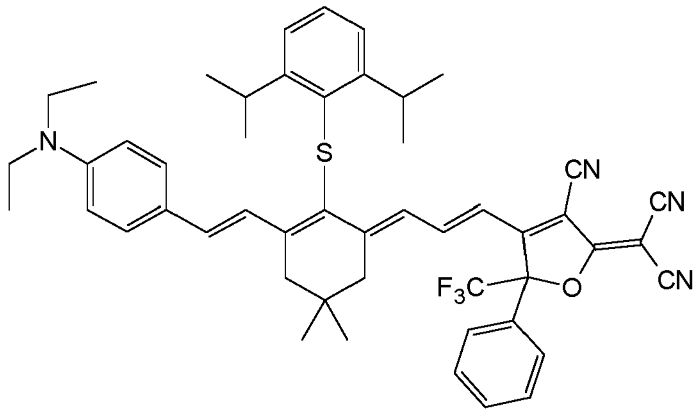

**Scheme 7:** Structure of (I-4)mod

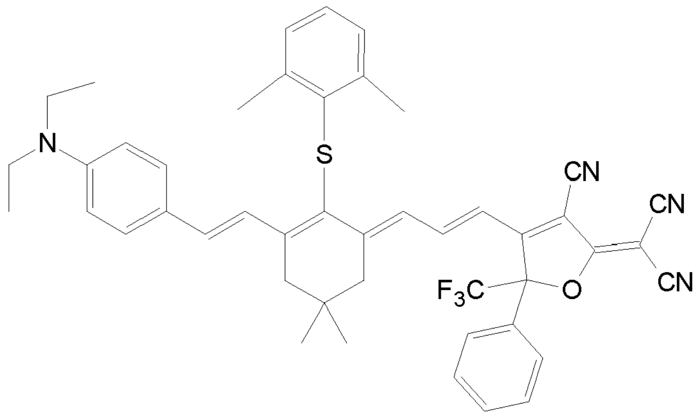

**Scheme 8:** Structure of (I-5)mod

DFT calculations were performed by Turbomole® using the B3-LYP functional and the 6-31G* basis set (TURBOMOLE V7.3 2018, a development of University of Karlsruhe and Forschungszentrum Karlsruhe GmbH, 1989-2007, TURBOMOLE GmbH, since 2007; available on http://www.turbomole.com). For each of the analysed compounds, a representative configuration was selected as shown in **Figure 3a** for JRD1mod.

As a result of the freely rotational bonds to the atom corresponding to E in the compounds of formula (I), various conformers are possible for the analysed compounds. Within the framework of this analysis, a representative configuration

was selected, respectively, where the substituent (bound to E in the compounds of formula (I)), if present, protects the "larger" oxygen accessible surface as calculated for JRD1mod (cf. below); thus, it is the side of the compounds that is more difficult to protect. The coverage of the polyene chain was investigated by calculation of the oxygen accessible surface (program Jmol: an open-source Java viewer for chemical structures in 3D, http://www.jmol.org/; probe radius 1.4Å) of the five inner carbon atoms of the polyene chain between the donor and the acceptor moieties. Said carbon atoms are depicted as dark grey balls in **Figures 3a** to **7** (cf. e.g. **Figure 3a** where they also are labelled as "$^1O_2$ reactive C atoms"). Said carbon atoms would be expected to be involved in one of the typical reactions of the chromophore with oxygen. The oxygen accessible surface is an equivalent for the accessibility of singlet oxygen towards the analysed compounds.

**Table 5:** Calculated oxygen accessible surface areas

| Compound | Accessible Surface Area [$Å^2$] |
|---|---|
| JRD1mod | 17.32, 9.54 |
| CE-1mod | 4.40, 2.19, 1.37 |
| (I-3)mod | 5.22, 2.06 |
| (I-4)mod | 4.44, 1.37 |
| (I-5)mod | 4.20, 1.63 |

In the case of JRD1mod, all carbon atoms of the polyene chain are freely accessible from both sides resulting in two large oxygen accessible surface areas of 17.3 and 9.54 $Å^2$ (cf. **Figure 3b).** In the presence of a 2,6-dialkyl-substituted phenyl/benzyl substituent and also of a benzyl substituent without any alkyl substituents in 2 and/or 6 position, the accessible surface of the polyene chain is significantly reduced compared to JRD1mod. For compounds (I-3)mod, (I-4) mod and (I-5)mod, for example, the side to which the substituent points in the selected representative conformation, is completely blocked (cf. **Table 5** and **Figures 4** to **6).** In case of the comparative example CE-1mod, an additional oxygen accessible surface area of at least 1.37 $Å^2$ is identified at the top of the molecule pointing to the limited steric hindrance against oxygen or radicals if no 2,6-dialkyl-substituents are present on the phenyl group (cf. **Figure 7)** and hence a reduced oxygen stability compared to the compounds of formula (I) according to the invention is to be expected.

In **Figures 3a** to **7,** all atoms are carbon atoms unless labelled otherwise and all hydrogen atoms are omitted for clarity. The main reactive carbon atoms are represented by dark grey balls at 25% of their van-der-Waals radii. Oxygen accessible surface areas are represented as dark grey surfaces.

Figures

**Figure 1:** Schematic of the utilized thin-film lifetime measurement setup

**Figure 2:** Photo-lifetime measurements of compounds (I-1), (I-2), (I-3), and (I-4) according to the invention and of comparative compound JRD1.

**Figure 3a:** Representative configuration for JRD1mod

**Figure 3b:** Oxygen accessible surface areas of JRD1mod

**Figure 4:** Oxygen accessible surface areas of (I-3)mod

**Figure 5:** Oxygen accessible surface areas of (I-4)mod; carbon atoms of the isopropyl groups $R^1$ and $R^2$ are represented as balls at 50% of their van-der-Waals radii

**Figure 6:** Oxygen accessible surface areas of (I-5)mod; carbon atoms of the methyl groups $R^1$ and $R^2$ are represented as balls at 50% of their van-der-Waals radii

**Figure 7:** Oxygen accessible surface areas of CE-1mod

**Claims**

1. Compound of formula (I)

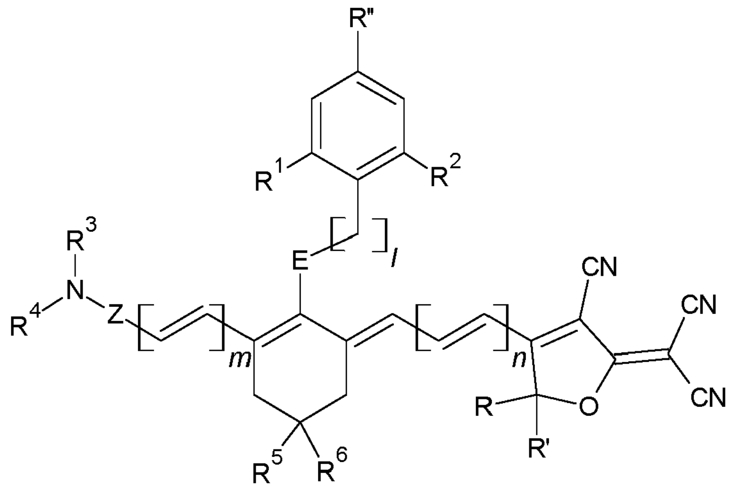

(I),

wherein

R is selected from the group consisting of phenyl, biphenyl, 4-cyanophenyl and 4-(tert-butyl)cyclohexyl"
R' is $CF_3$ or $CH_3$, and additionally, if R is 4-(tert-butyl)cyclohexyl), then R' can be phenyl,
R" is selected from the group consisting of H and linear C1-C4 alkyl residues,
$R^1$ and $R^2$ are independently selected from the group consisting of linear, cyclic and branched C1-C10 alkyl residues, and additionally, if l = 1, then one or both of $R^1$ and $R^2$ can be H,
$R^3$ and $R^4$ are independently selected from the group consisting of

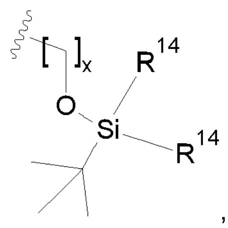

,

wherein x is 2 to 6 and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

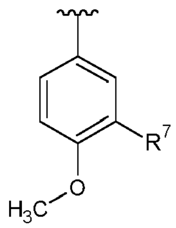

,

and

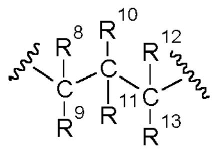

forming a 6-membered ring structure by also being connected to a carbon atom of Z that is vicinal to the carbon atom that is part of the N-Z-bond,
wherein $R^7$ is selected from the group consisting of linear, cyclic and branched C5-C10 alkyl residues,
$R^8$ to $R^{13}$ are independently selected from the group consisting of H and linear and branched C1-C4 alkyl residues,
$R^5$ and $R^6$ are independently selected from the group consisting of H, methyl, and tert-butyl, or both of $R^5$ and $R^6$ are part of a fluorene moiety,
l is 0 or 1,
m is 0, 1, or 2,
n is 0, 1, or 2,
$m + n \leq 3$,
E represents one or more heteroatom(s),
Z is selected from the group consisting of substituted or non-substituted phenyl, thienyl, and bithienyl, and
optionally wherein one or more of the hydrogens of the compound of formula (I) is/are replaced by deuterium.

**2.** Compound of formula (I) according to claim 1, wherein the compound of formula (I) is a compound of formula (Ia)

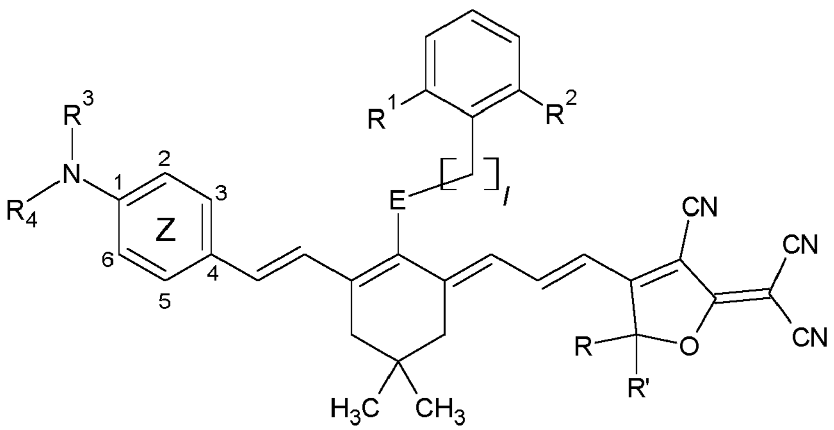

(Ia)

wherein

R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
$R^1$ and $R^2$ are independently selected from the group consisting of linear, cyclic and branched C1-C10 alkyl residues, and additionally, if l = 1, then one or both of $R^1$ and $R^2$ can be H,
$R^3$ and $R^4$ are independently selected from the group consisting of

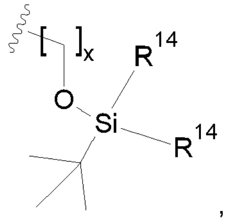

,

wherein x is 2 to 6 and $R^{14}$ is independently selected from the group consisting of C1-C12 linear and branched

alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

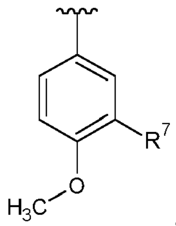
,

and

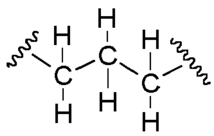

forming a 6-membered ring structure by also being connected to position 2 or 6 of phenyl ring Z,
wherein $R^7$ is selected from the group consisting of linear, cyclic and branched C5-C10 alkyl residues,
I is 0 or1, and
E represents one or more heteroatom(s), and
optionally one or both of the positions 3 and 5 of phenyl ring Z can be substituted with residues independently selected from the group consisting of C1-C8 linear and branched alkyl, C1-C12 linear and branched alkoxy, an arylalkoxy residue, a trialkylsilyloxyalkoxy residue, an aryldialkylsilyloxyalkoxy residue, and an alkyldiarylsilyloxyalkoxy residue.

**3.** Compound of formula (I) according to claim 1 or 2, wherein

R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
R’ and $R^2$ both are isopropyl,
I is 1,
E is S, and
$R^3$ and $R^4$ both are

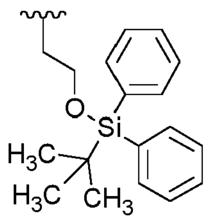
,

or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
R’ and $R^2$ both are isopropyl,
I is 1,
E is O, and
$R^3$ and $R^4$ both are

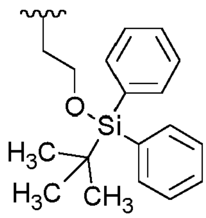
,

or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
R’ and $R^2$ both are H,
I is 1,
E is S, and
$R^3$ and $R^4$ both are

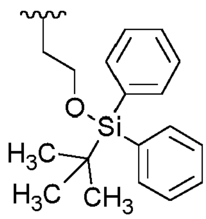
,

or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
R’ and $R^2$ both are isopropyl,
I is 0,
E is S, and
$R^3$ and $R^4$ both are

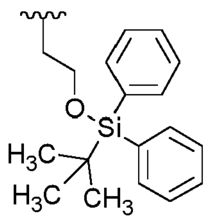
,

or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
$R^1$ and $R^2$ both are methyl,
I is 0,
E is S, and
$R^3$ and $R^4$ both are

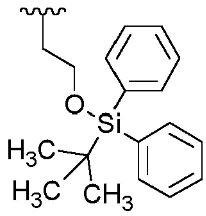

,

or wherein

R is selected from the group consisting of phenyl, biphenyl, 4-cyanophenyl and 4-(tert-butyl)cyclohexyl,
R' is $CF_3$ or $CH_3$, and additionally, if R is 4-(tert-butyl)cyclohexyl), then R' can be phenyl,
R" is H,
$R^1$ and $R^2$ both are isopropyl,
l is 0,
E is S,
$R^3$ is

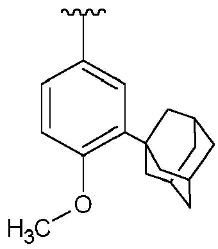

,

and
$R^4$ is

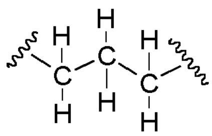

forming a 6-membered ring structure by also being connected to a carbon atom of Z that is vicinal to the carbon atom that is part of the N-Z-bond,

or wherein

R is selected from the group consisting of phenyl, biphenyl, 4-cyanophenyl and 4-(tert-butyl)cyclohexyl,
R' is $CF_3$ or $CH_3$, and additionally, if R is 4-(tert-butyl)cyclohexyl), then R' can be phenyl,
R" is H,
$R^1$ and $R^2$ both are methyl,
l is 0,
E is S,
$R^3$ is

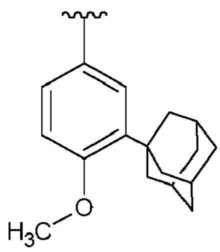

,

and
$R^4$ is

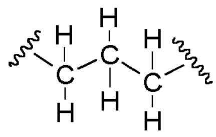

forming a 6-membered ring structure by also being connected to a carbon atom of Z that is vicinal to the carbon atom that is part of the N-Z-bond,
or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
$R^1$ and $R^2$ both are isopropyl,
I is 0,
E is S,
$R^3$ is

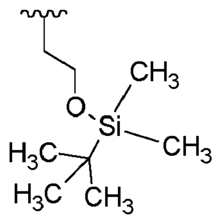

,

and
$R^4$ is

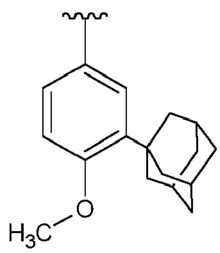

or wherein
R is selected from the group consisting of phenyl, biphenyl, 4-cyanophenyl and 4-(tert-butyl)cyclohexyl,
R’ is $CF_3$ or $CH_3$, and additionally, if R is 4-(tert-butyl)cyclohexyl), then R’ can be phenyl,
R" is H,
$R^1$ and $R^2$ both are isopropyl,
I is 0,
E is S,
$R^3$ is

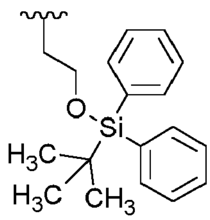

,

and
$R^4$ is

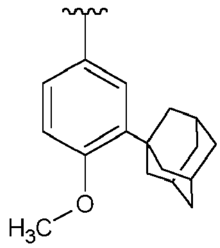

or wherein
R is selected from the group consisting of phenyl, biphenyl, 4-cyanophenyl and 4-(tert-butyl)cyclohexyl,
R' is $CF_3$ or $CH_3$, and additionally, if R is 4-(tert-butyl)cyclohexyl), then R' can be phenyl,
R" is H,
$R^1$ and $R^2$ both are methyl,
l is 0,
E is S,
$R^3$ is

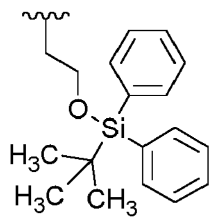

,

and
$R^4$ is

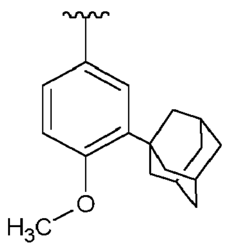

.

**4.** Compound of formula (I) according to any of the preceding claims, wherein the compound of formula (I) is a compound selected from the group consisting of

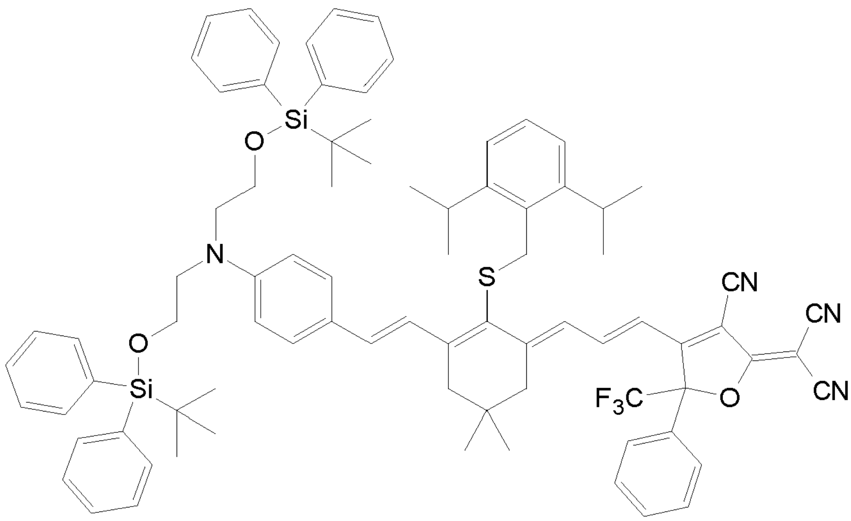

(I-1)

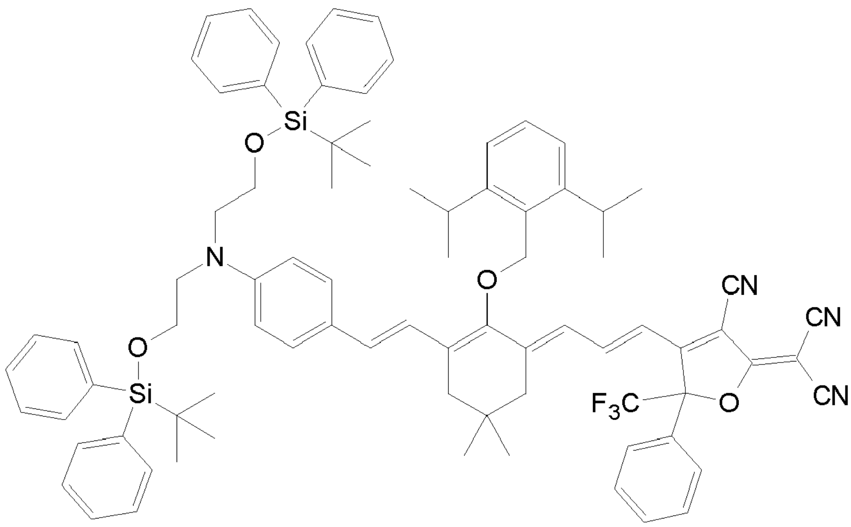

(I-2)

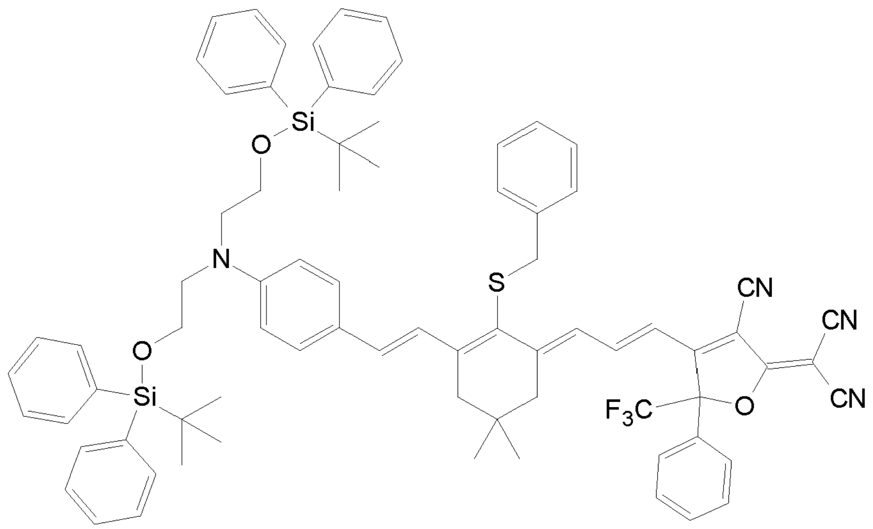

(I-3)

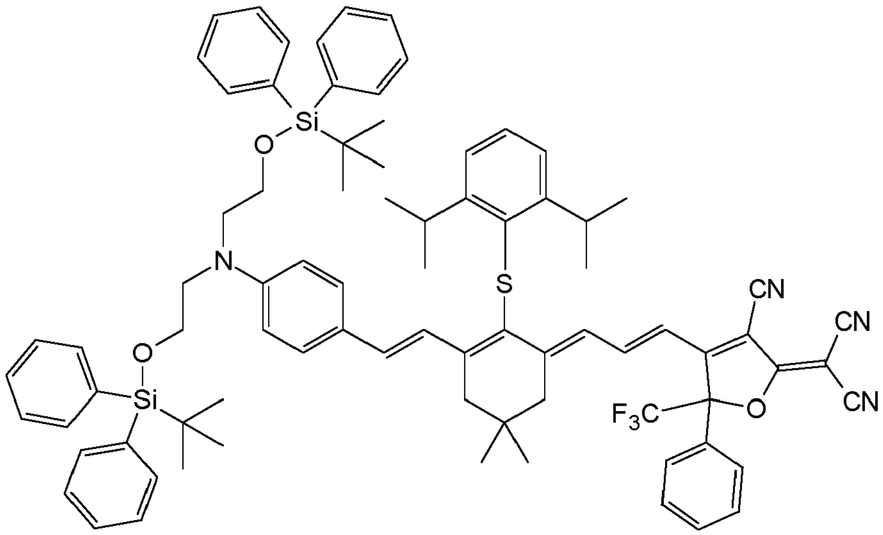

(I-4)

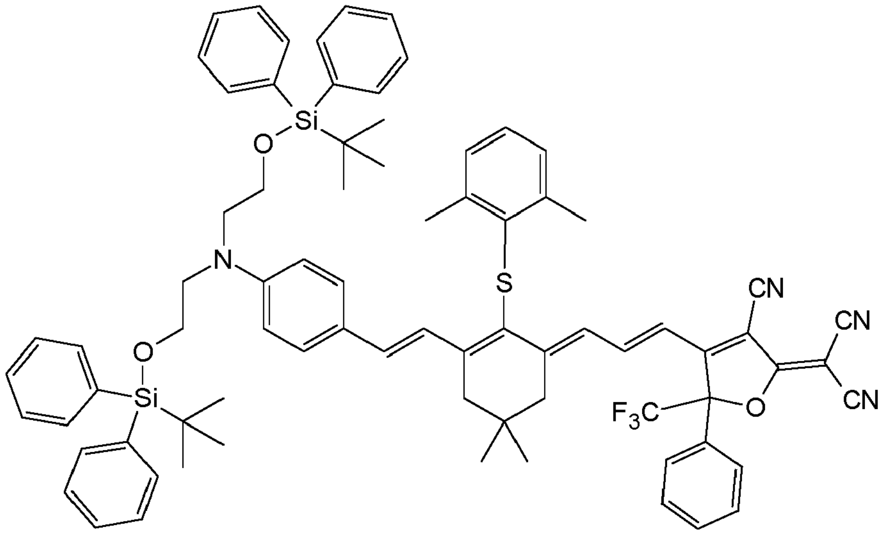

(I-5)

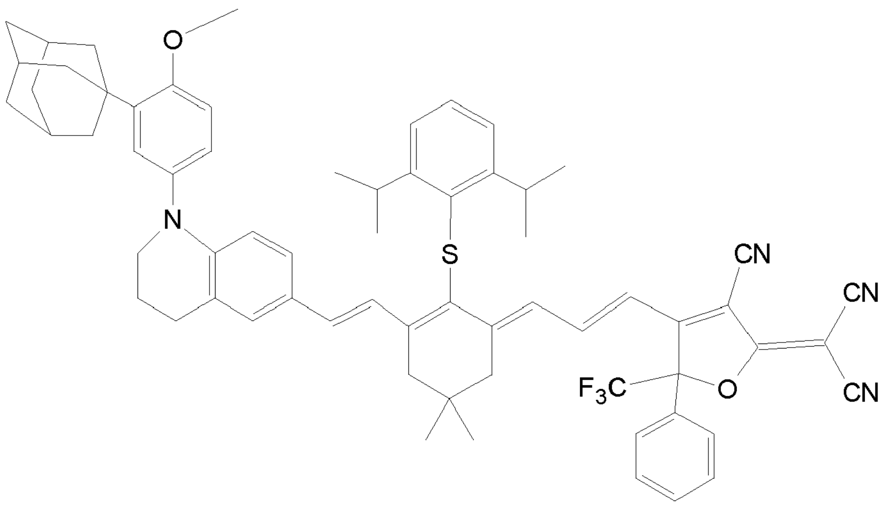

(I-6)

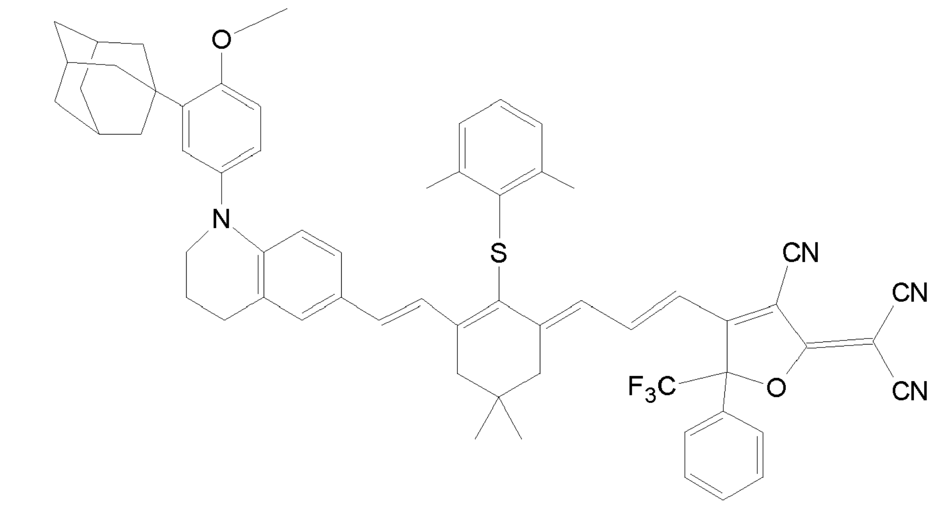

(I-7)

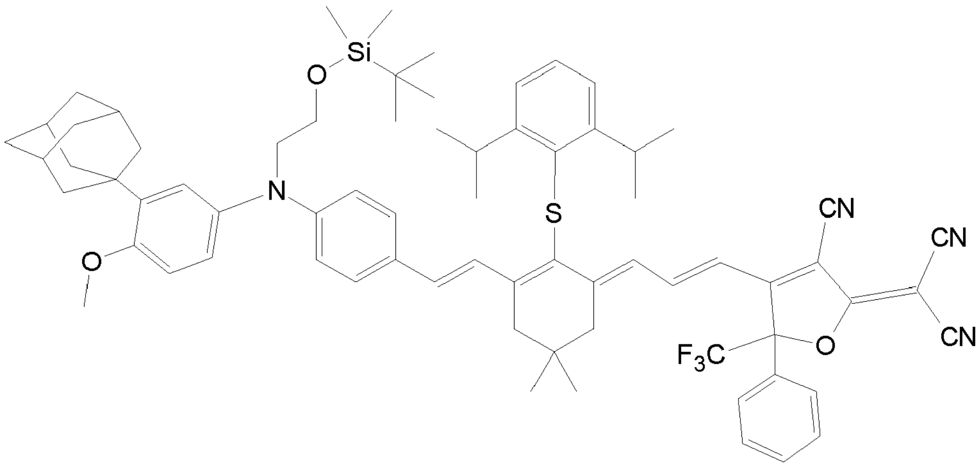

(I-8)

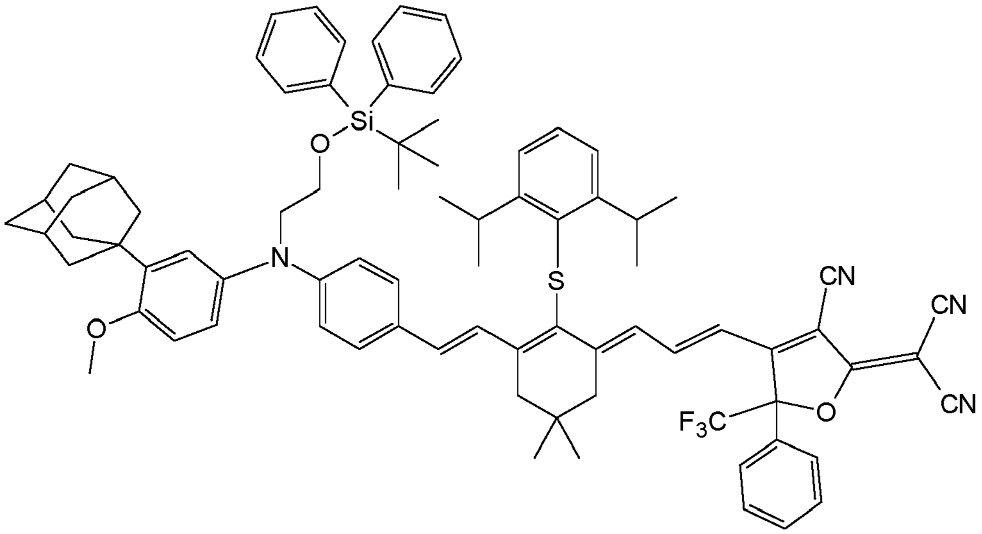

(I-9)

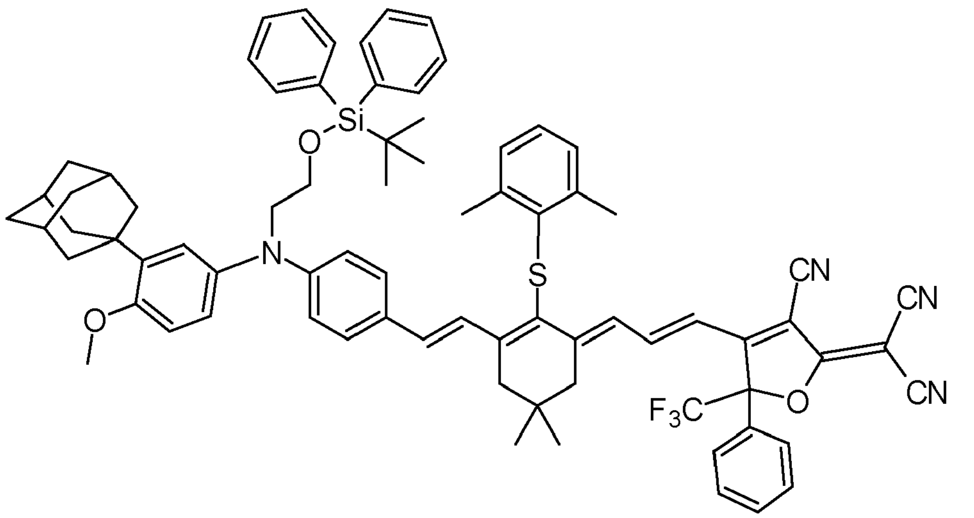

(I-10).

**5.** Compound of formula (I) according to any of the claims 1 or 2, wherein $R^7$, if present, is adamantyl or 4-*tert*-butylcyclohexyl, preferably is

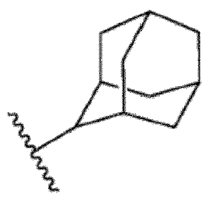

or

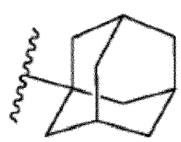

,

most preferably is

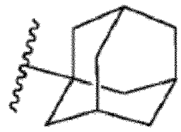

**6.** Compound of formula (I) according to any of the claims 1, 2, or 5, wherein E is selected from the group consisting of O, S, SO, and $SO_2$, preferably wherein E is S or O, most preferably wherein E is S.

**7.** Mixture comprising or consisting of

one, two, three, four, five or more compound(s) of formula (I) as defined in any of the claims 1 to 6
and optionally
one or more host material(s), preferably polymer(s).

**8.** Mixture according to claim 7, wherein the host material(s), preferably polymer(s), is/are selected from the group consisting of

amorphous polymers and copolymers,
poly(ester)s, polyethylene terephthalate), polyethylene naphthalate), poly(butylen terephthalate), poly(butylene naphthalate), poly(carbonate)s, preferably poly(bisphenol A carbonate), amorphous poly(carbonate)s, preferably poly(bisphenol A carbonate-co-4,4'-(3,3,5-trimethylcyclohexylidene) diphenol carbonate), poly(1,4-cyclohexylidene cyclohexane-1,4-dicarboxylate), poly(diethylene glycol bis(allyl carbonate),
poly(styrene)s, poly(methylstyrene)s, styrene copolymers, butadiene styrene copolymers, acrylonitrile butadiene styrene copolymers, styrene acrylonitrile copolymers, poly(acrylamide)s, poly(acrylonitrile)s,
polyolefines, cycloolefin polymers, cycloolefin copolymers, polyethylene, polymethylpentene, polypropylene, poly(vinylcyclohexane),
poly(acrylate)s, preferably poly(methacrylate)s, poly(methylmethacrylate), poly(dicyclopentanyl methacrylate), poly(adamantyl methacrylate), poly(norbornyl methacrylate), poly(4-tert-butyl-cyclohexyl methacrylate), and copolymers of methylmethacrylates,
poly(amide)s, poly(imide)s, poly(etherimide)s, poly(urethane)s,
poly(sulfone)s, poly(ethersulfone)s, poly(aryl sulfone)s,
poly(vinyl chloride),
poly(siloxane)s, preferably poly(dimethyl siloxane), fluoropolymers,
poly(ethylene-vinylacetate),
cellulose esters, cellulose acetate, cellulose acetate butyrate,
epoxides, and ultraviolet curable resins.

**9.** Compound selected from the group consisting of

(i) compounds of formula (II)

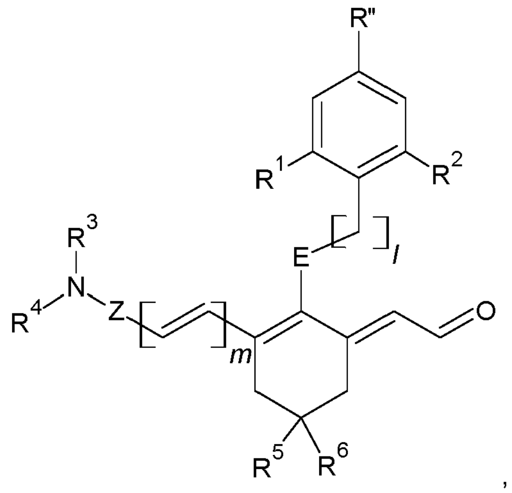

(II),

wherein

R" is selected from the group consisting of H and linear C1-C4 alkyl residues, preferably R" is H or a methyl residue, more preferably R" is H,
$R^1$ and $R^2$ are independently selected from the group consisting of linear, cyclic and branched C1-C10 alkyl residues, and additionally, if l = 1, then one or both of $R^1$ and $R^2$ can be H,
$R^3$ and $R^4$ are independently selected from the group consisting of

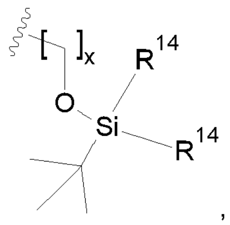

wherein x is 2 to 6 and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

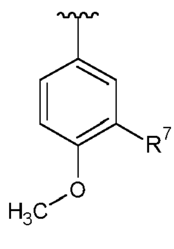

and

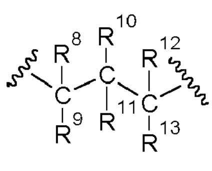

forming a 6-membered ring structure by also being connected to a carbon atom of Z that is vicinal to the

carbon atom that is part of the N-Z-bond,
wherein $R^7$ is selected from the group consisting of linear, cyclic and branched C5-C10 alkyl residues,
$R^8$ to $R^{13}$ are independently selected from the group consisting of H and linear and branched C1-C4 alkyl residues, preferably are independently selected from the group consisting of H and methyl,
$R^5$ and $R^6$ are independently selected from the group consisting of H, methyl, and *tert*-butyl, or both of $R^5$ and $R^6$ are part of a fluorene moiety,
l is 0 or 1,
m is 0, 1, or 2,
E represents one or more heteroatom(s), and
Z is selected from the group consisting of substituted or non-substituted phenyl, thienyl, and bithienyl,

(ii) compounds of formula (III)

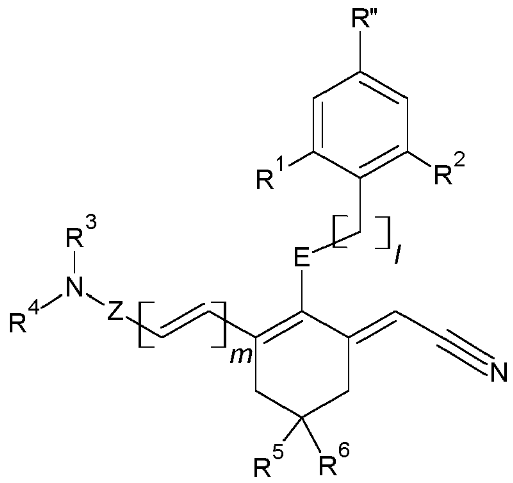

,

(III),

wherein

R'' is selected from the group consisting of H and linear C1-C4 alkyl residues, preferably R'' is H or a methyl residue, more preferably R'' is H,
$R^1$ and $R^2$ are independently selected from the group consisting of linear, cyclic and branched C1-C10 alkyl residues, and additionally, if l = 1, then one or both of $R^1$ and $R^2$ can be H,
$R^3$ and $R^4$ are independently selected from the group consisting of

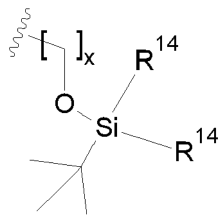

,

wherein x is 2 to 6 and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

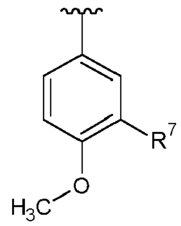

,

and

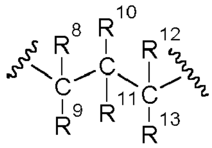

forming a 6-membered ring structure by also being connected to a carbon atom of Z that is vicinal to the carbon atom that is part of the N-Z-bond,
wherein $R^7$ is selected from the group consisting of linear, cyclic and branched C5-C10 alkyl residues,
$R^8$ to $R^{13}$ are independently selected from the group consisting of H and linear and branched C1-C4 alkyl residues, preferably are independently selected from the group consisting of H and methyl,
$R^5$ and $R^6$ are independently selected from the group consisting of H, methyl, and *tert*-butyl, or both of $R^5$ and $R^6$ are part of a fluorene moiety,
l is 0 or 1,
m is 0, 1, or 2,
E represents one or more heteroatom(s), and
Z is selected from the group consisting of substituted or non-substituted phenyl, thienyl, and bithienyl,

(iii) compounds of formula (IV)

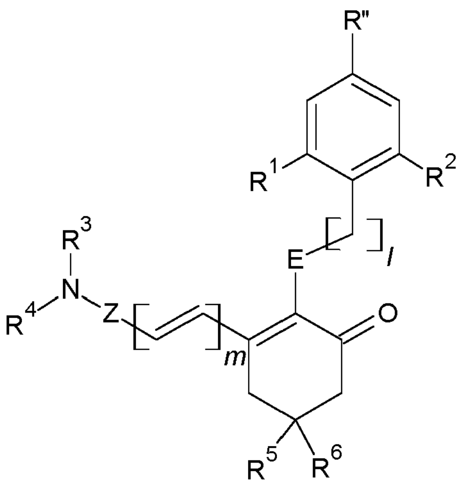

,

(IV),

wherein

R" is selected from the group consisting of H and linear C1-C4 alkyl residues, preferably R" is H or a methyl residue, more preferably R" is H,
$R^1$ and $R^2$ are independently selected from the group consisting of linear, cyclic and branched C1-C10 alkyl residues, and additionally, if l = 1, then one or both of $R^1$ and $R^2$ can be H,

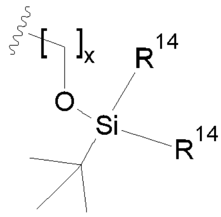

,

wherein x is 2 to 6 and $R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

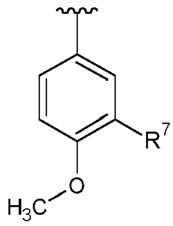

,

and

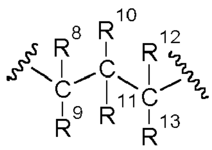

forming a 6-membered ring structure by also being connected to a carbon atom of Z that is vicinal to the carbon atom that is part of the N-Z-bond,
wherein $R^7$ is selected from the group consisting of linear, cyclic and branched C5-C10 alkyl residues,
$R^8$ to $R^{13}$ are independently selected from the group consisting of H and linear and branched C1-C4 alkyl residues, preferably are independently selected from the group consisting of H and methyl,
$R^5$ and $R^6$ are independently selected from the group consisting of H, methyl, and *tert*-butyl, or both of $R^5$ and $R^6$ are part of a fluorene moiety,
l is 0 or 1,
m is 0, 1, or 2,
E represents one or more heteroatom(s), and
Z is selected from the group consisting of substituted or non-substituted phenyl, thienyl, and bithienyl,

(iv) compounds of formula (V)

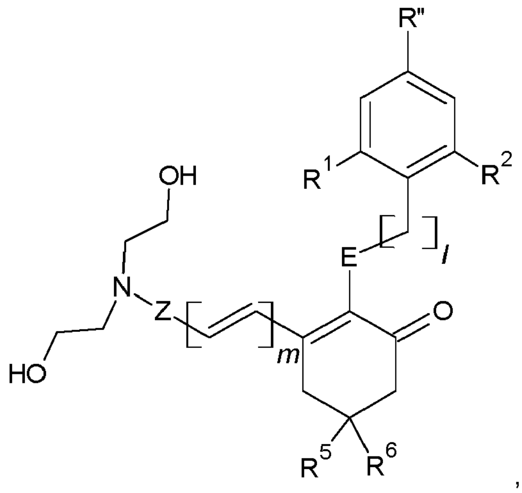

(V),

wherein

R" is selected from the group consisting of H and linear C1-C4 alkyl residues, preferably R" is H or a methyl residue, more preferably R" is H,
$R^1$ and $R^2$ are independently selected from the group consisting of linear, cyclic and branched C1-C10 alkyl residues, and additionally, if l = 1, then one or both of $R^1$ and $R^2$ can be H,
$R^5$ and $R^6$ are independently selected from the group consisting of H, methyl, and *tert*-butyl, or both of $R^5$ and $R^6$ are part of a fluorene moiety,
l is 0 or 1,
m is 0, 1, or 2,
E represents one or more heteroatom(s), and
Z is selected from the group consisting of substituted or non-substituted phenyl, thienyl, and bithienyl,

(v) compounds of formula (VI)

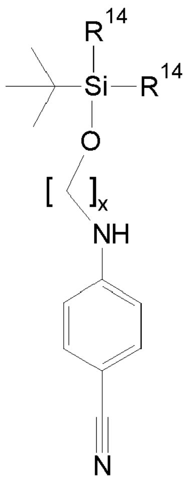

(VI),

wherein

x is 2 to 6 and

$R^{14}$ is independently selected from the group consisting of C2-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,

(vi) compounds of formula (VII)

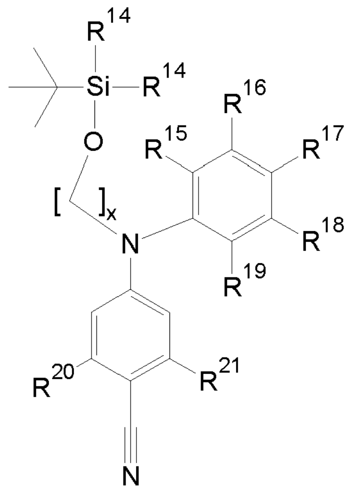

(VII),

wherein

x is 2 to 6,
$R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,
at least one of $R^{15}$ to $R^{19}$ is independently selected from the group consisting of C1-C12 linear and branched alkyl, substituted or non-substituted cycloalkyl, and C1-C12 linear, branched, and substituted or non-substituted cyclic alkoxy residues, while the remaining ones of $R^{15}$ to $R^{19}$ are H, and
$R^{20}$ and $R^{21}$ are independently selected from the group consisting of H, C1-C8 linear and branched alkyl, C1-C12 linear and branched alkoxy, an arylalkoxy residue, a trialkylsilyloxyalkoxy residue, an aryldialkylsilyloxyalkoxy group, and an alkyldiarylsilyloxyalkoxy residue,

(vii) compounds of formula (VIII)

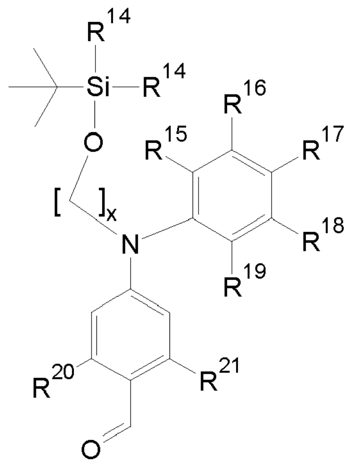

(VIII),

wherein

x is 2 to 6,
$R^{14}$ is independently selected from the group consisting of C1-C12 linear and branched alkyl, substituted or non-substituted cycloalkyl, phenyl, phenyl substituted with 1, 2 or 3 C1-C12 linear or branched alkyl, and phenyl substituted with 1, 2 or 3 substituted or non-substituted cycloalkyl residues,
at least one of $R^{15}$ to $R^{19}$ is independently selected from the group consisting of C1-C12 linear and branched alkyl, substituted or non-substituted cycloalkyl, and C1-C12 linear, branched, and substituted or non-substituted cyclic alkoxy residues, while the remaining ones of $R^{15}$ to $R^{19}$ are H, and
$R^{20}$ and $R^{21}$ are independently selected from the group consisting of H, C1-C8 linear and branched alkyl, C1-C12 linear and branched alkoxy, an arylalkoxy residue, a trialkylsilyloxyalkoxy residue, an aryldialkylsilyloxyalkoxy residue, and an alkyldiarylsilyloxyalkoxy residue,

**10.** Compound selected from the group consisting of

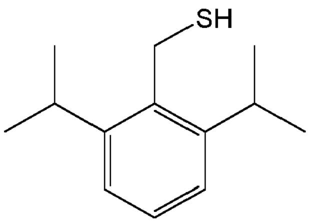

(S-1)

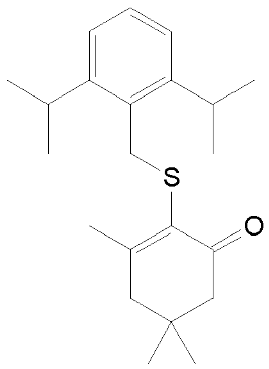

(B-1)

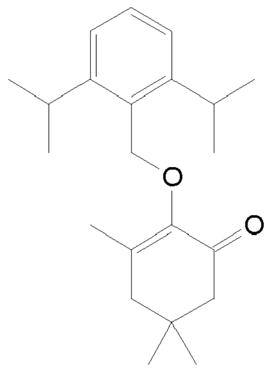

(B-2)

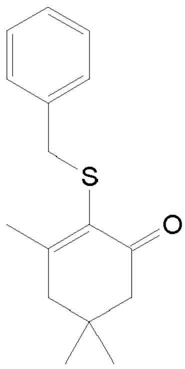

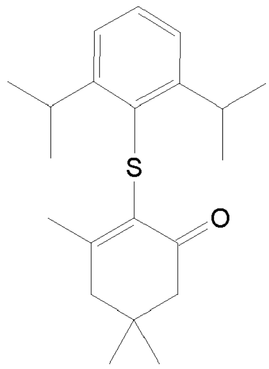

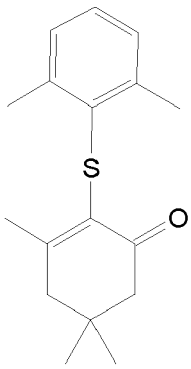

(B-3) (B-4) (B-5)

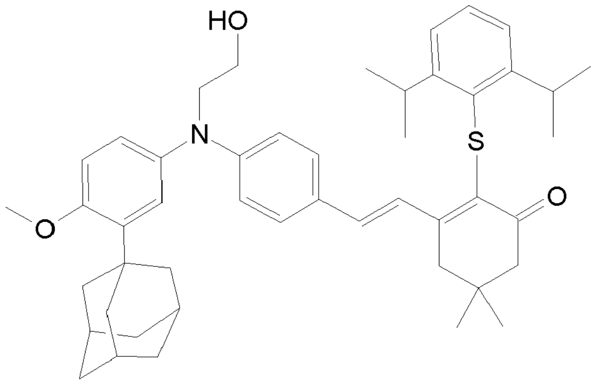

(D-9).

**11.** Electro-optic film comprising or consisting of one or more compound(s) of formula (I) as defined in any of the claims 1 to 6 or a mixture as defined in claim 7 or 8, preferably wherein the one or more compound(s) of formula (I) is/are dispersed and poled within a/the host material, preferably polymer, matrix.

**12.** Electro-optic modulator-device comprising one or more compound(s) of formula (I) as defined in any of the claims 1 to 6 or a mixture as defined in claim 7 or 8,

preferably comprising

- a substrate comprising or consisting of a waveguiding structure and an electrode structure, and
- a film comprising or consisting of one or more compound(s) of formula (I) as defined in any of the claims 1 to 6 or a mixture as defined in claim 7 or 8,

wherein said waveguiding structure is at least partially in direct contact with said film and optionally wherein said electrode structure is at least partially in direct contact with said film,
and wherein an electric field is induced into said one or more compound(s) of formula (I) comprised in said film *via* said electrode structure to manipulate the refractive index of said one or more compound(s) of formula (I).

**13.** Device according to claim 12, wherein said electrode structure is at least partially in direct contact with said waveguiding structure and wherein said waveguiding structure comprises at least two rails separated by a slot, respectively, which are at least partially in direct contact with said film comprising or consisting of one or more compound(s) of formula (I) as defined in any of the claims 1 to 6 or a mixture as defined in claim 7 or 8,
preferably wherein the device exhibits a half-wave voltage length product of less than 1 Vmm and/or an optical loss of less than 3 dB/mm when operated at a wavelength of 1550 nm.

**14.** Method for manufacturing an electro-optic modulator-device, preferably as defined in claim 12 or 13, comprising or consisting of the following steps:

a) Providing one or more compound(s) of formula (I) as defined in any of the claims 1 to 6 or a mixture as defined in claim 7 or 8 and depositing it/them onto a substrate,
b) heating of the compound(s) of formula (I) deposited onto the substrate as obtained in step a) to a temperature which is equal to or higher than the glass transition temperature of the compound(s) of formula (I),
c) applying an aligning force, preferably an electric field, to the heated compound(s) of formula (I) deposited onto the substrate obtained in step b), wherein at least a part of the dipole vectors of the compound(s) of formula (I) deposited onto the substrate align with the applied aligning force,
d) cooling of the at least partially poled compound(s) of formula (I) deposited onto the substrate obtained in step c), while applying an aligning force as defined in step c), to a temperature below the glass transition temperature of the compound(s) of formula (I) deposited onto the substrate, wherein at least a part of the dipole vectors of the compound(s) of formula (I) deposited onto the substrate stay in the aligned orientation obtained in step c).

**15.** Use of a compound of formula (I) as defined in any of the claims 1 to 6 or of a mixture as defined in claim 7 or 8 or of an electro-optic film as defined in claim 11 or of an electro-optic modulator-device as defined in claim 12 or 13 or as manufactured according to claim 14 in a field selected from the group consisting of nonlinear optics, Mach-Zehnder modulators, silicon organic hybrid electro-optic modulators, materials for devices or arrangements for the control of the intensity, color, phase, polarization or direction of light arriving from an independent light source, preferably switching, gating, or modulating, photonic communication networks, optical data transmission, preferably in 6G applications, phased array radars, satellite and fiber telecommunications, cable television (CATV), optical gyroscopes for application in aerial and missile guidance, electronic counter measure (ECM) systems, backplane interconnects for high-speed computation, ultra-quick analog-to-digital conversion, land mine detection, radio frequency photonics, programmable photonics, cryo-communications, quantum computing, spatial light modulation, and all-optical (light-switching-light) signal processing.

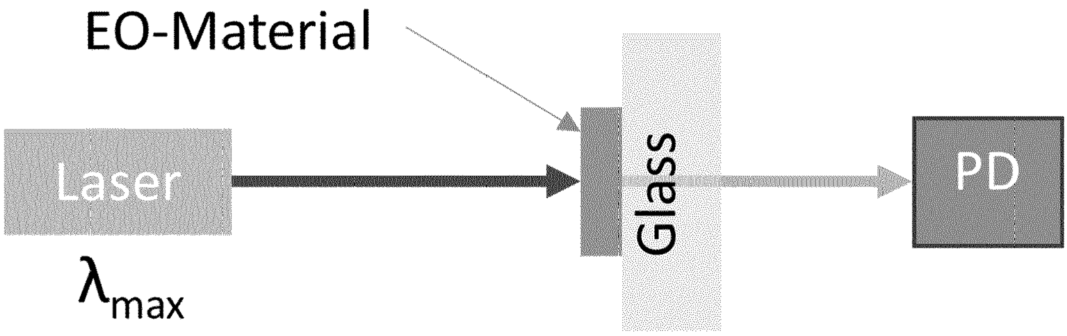


Figure 1

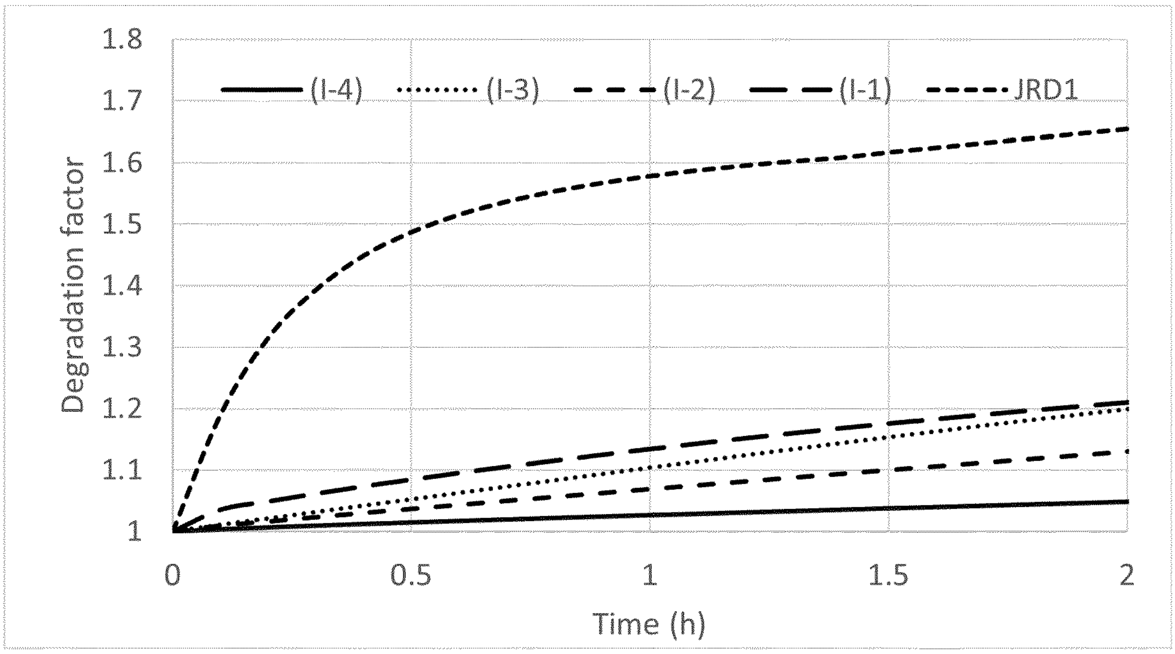


Figure 2

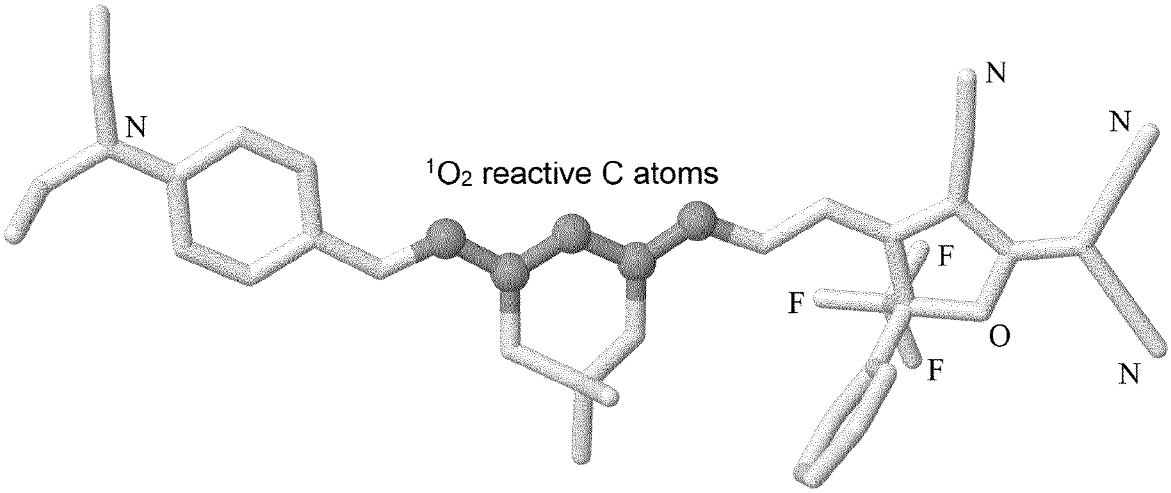


Figure 3a

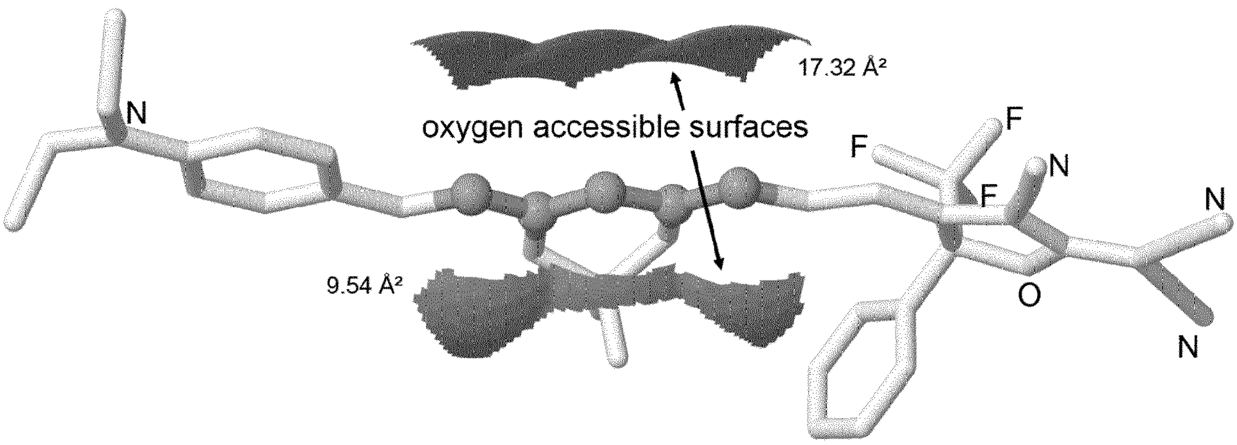


Figure 3b

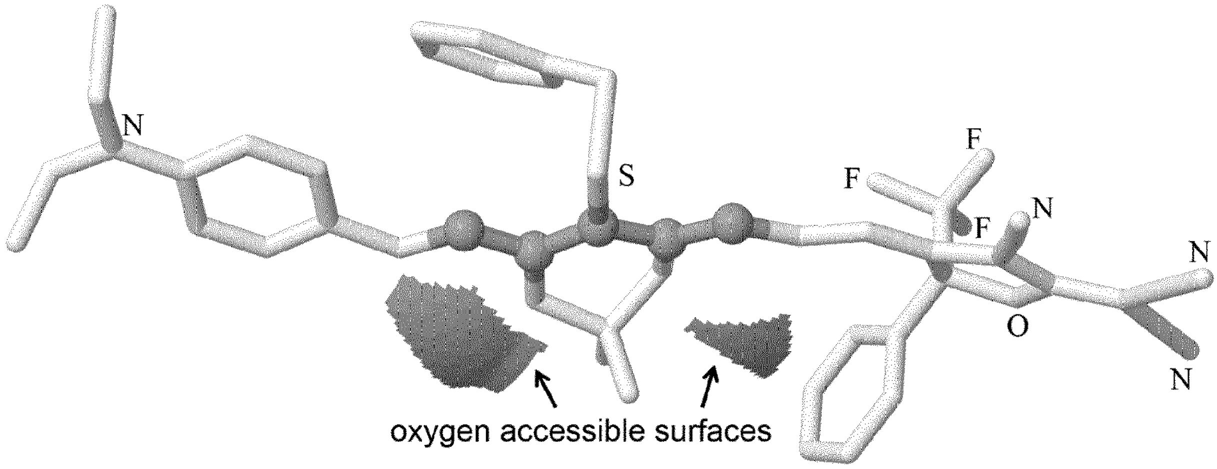


Figure 4

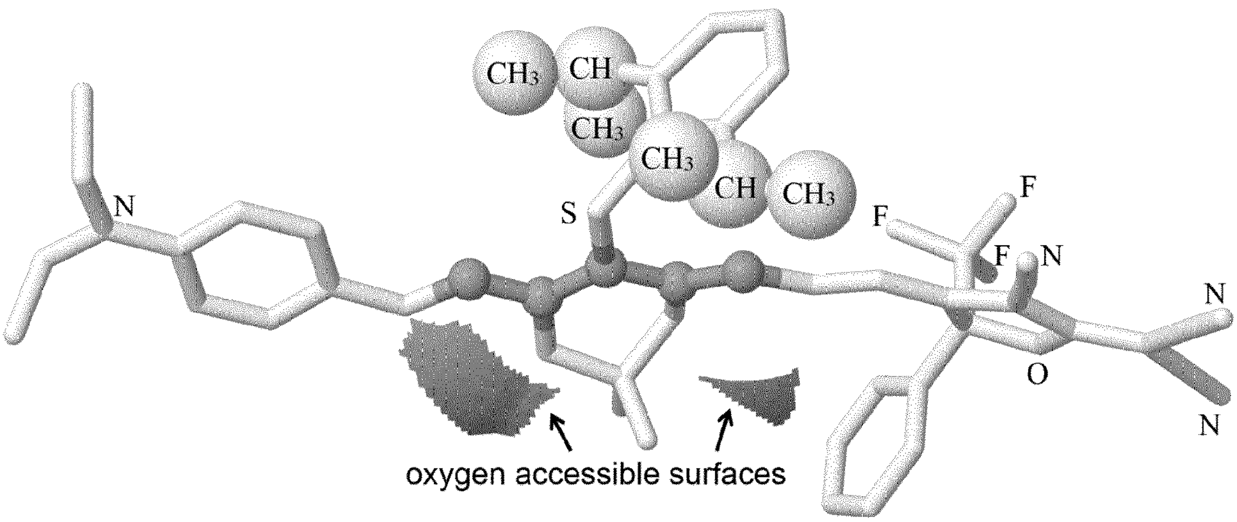


Figure 5

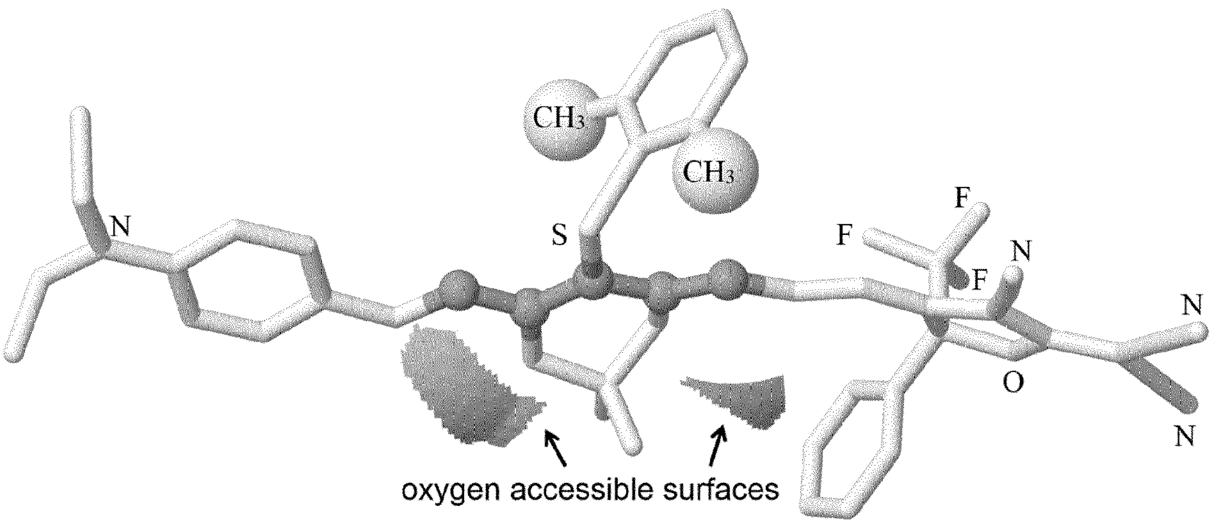


Figure 6

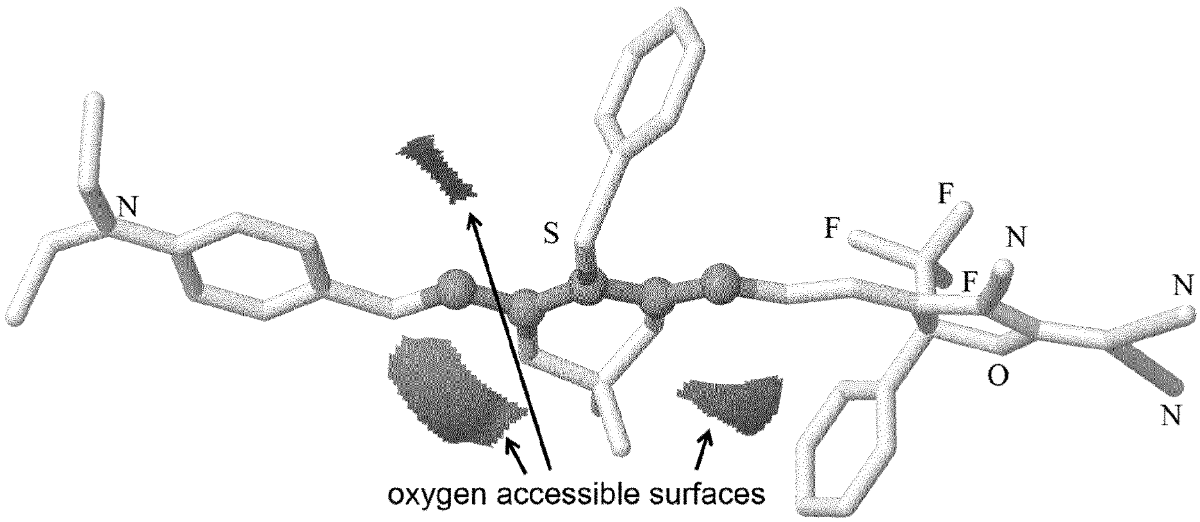


Figure 7

Europäisches Patentamt
European Patent Office
Office européen des brevets

# EUROPEAN SEARCH REPORT

Application Number
EP 24 18 2481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/405504 A1 (PECINOVSKY CORY [US] ET AL) 30 December 2021 (2021-12-30)<br>* page 1, paragraph 7 *<br>* page 4, paragraph 32 - page 5 *<br>* page 6, paragraph 37 *<br>* page 17; claims 1, 11, 13-14 *<br>----- | 1-15 | INV.<br>C09B23/01<br>C09B23/10<br>G02F1/361 |
| A | WANG MENGKE ET AL: "Perspectives of thin-film lithium niobate and electro-optic polymers for high-performance electro-optic modulation",<br>JOURNAL OF MATERIALS CHEMISTRY C,<br>vol. 11, no. 33,<br>24 August 2023 (2023-08-24), pages 11107-11122, XP093219576,<br>GB<br>ISSN: 2050-7526, DOI: 10.1039/D3TC01132A<br>Retrieved from the Internet:<br>URL:https://pubs.rsc.org/en/content/articlepdf/2023/tc/d3tc01132a><br>* page 11110; figure 4; compound AJLZ53 *<br>----- | 1-15 | |
| A | US 2023/174852 A1 (PECINOVSKY CORY [US] ET AL) 8 June 2023 (2023-06-08)<br>* page 7, paragraph 36 *<br>----- | 1-15 | TECHNICAL FIELDS SEARCHED (IPC)<br>C09B<br>G02F |

The present search report has been drawn up for all claims

| Place of search | Date of completion of the search | Examiner |
|---|---|---|
| Munich | 11 November 2024 | Jeanjean, Fabien |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 2481

This annex lists the patent family members relating to the patent documents cited in the above-mentioned European search report. The members are as contained in the European Patent Office EDP file on
The European Patent Office is in no way liable for these particulars which are merely given for the purpose of information.

11-11-2024

| Patent document cited in search report | Publication date | Patent family member(s) | Publication date |
|---|---|---|---|
| US 2021405504 A1 | 30-12-2021 | AU 2021297348 A1 | 02-02-2023 |
| | | CA 3183470 A1 | 30-12-2021 |
| | | CN 115996920 A | 21-04-2023 |
| | | EP 4172155 A1 | 03-05-2023 |
| | | JP 2023531775 A | 25-07-2023 |
| | | US 2021405504 A1 | 30-12-2021 |
| | | US 2024045306 A1 | 08-02-2024 |
| | | US 2024045307 A1 | 08-02-2024 |
| | | US 2024369907 A1 | 07-11-2024 |
| | | WO 2021263164 A1 | 30-12-2021 |
| US 2023174852 A1 | 08-06-2023 | AU 2022401987 A1 | 13-06-2024 |
| | | CA 3239316 A1 | 08-06-2023 |
| | | CN 118613758 A | 06-09-2024 |
| | | EP 4441560 A1 | 09-10-2024 |
| | | KR 20240118130 A | 02-08-2024 |
| | | US 2023174852 A1 | 08-06-2023 |
| | | WO 2023102066 A1 | 08-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6067186 A, L. Dalton
- US 7084283 B
- US 20210405504 A1
- US 7902322 B2
- US 6616865 B1
- US 2023212399 A1
- WO 2014078802 A1


### Non-patent literature cited in the description


- **L. DALTON et al.** *Chemistry of Materials*, 1995, vol. 7 (6), 1060
- *J. Mater. Chem.*, 2012, vol. 22, 16390
- **J.E. SIEWERT**. Phosphinecatalysed reductive coupling of dihalophosphanes. *Dalton Transactions*, 2021, vol. 50
- **S. HANDA et al.** HandaPhos: A General Ligand Enabling Sustainable ppm Levels of Palladium-Catalyzed Cross-Couplings in Water at Room Temperature. *Angewandte Chemie International Edition*, 2016, vol. 55
- **S. GUANG et al.** Synthesis and properties of long conjugated organic optical limiting materials with different $\pi$-electron conjugation bridge structure. *Dyes and pigments*, 2007, vol. 73
- **E. HARTMANN** ; **S.E. DENMARK**. Structural, Mechanistic, Spectroscopic, and Preparative Studies on the Lewis Base Catalyzed, Enantioselective Sulfenofunctionalization of Alkenes. *Helvetica chimica acta*, 2017, vol. 100
- **M. HE et al.** Synthesis of Chromophores with Extremely High Electro-optic Activity. 1. Thiophene-Bridge-Based Chromophores. *Chemistry of materials*, 2002, vol. 14
- **G. MELIKIAN et al.** Synthesis of Substituted Dicyanomethylendihydrofurans. *Synthetic communications*, 1995, vol. 25
- **C. KIENINGER et al.** Silicon-organic hybrid (SOH) Mach-Zehnder modulators for 100 GBd PAM4 signalling with sub-1 dB phase-shifter loss. *Optics Express*, 2020, vol. 28 (17), 24693-24707, https://doi.org/10.1364/OE.390315
- **C. KIENINGER et al.** Optics Express. 2020, vol. 28, 24694-24697
- **C. KIENINGER et al.** Optics Express. 2020, vol. 28, 24697, 24693-24707
- **C. KIENINGER et al.** *Optics Express*, 2020, vol. 28 (17), https://doi.org/10.1364/OE.390315
- **H. SALO et al.** O-Band Silicon-Organic Hybrid EO Modulator. *proc. ICSJ*, 2021
- **C. KIENINGER et al.** Silicon-organic hybrid (SOH) Mach-Zehnder modulators for 100 GBd PAM4 signaling with sub-1 dB phase-shifter loss. *Optics Express*, 2020, vol. 28 (17), 24693-24707
- **C. KIENINGER et al.** Ultra-high electro-optic activity demonstrated in a silicon-organic hybrid modulator. *Optica*, 2018, vol. 5
- **Y. TOMINARI et al.** *Japanese Journal of Applied Physics*, 2021, vol. 60, 101002, https://doi.org/10.35848/1347-4065/ac235a
- **C. M. C. ANDRÉS**. *Reactivity and Applications of Singlet Oxygen Molecule*, 2023
- **W. JIN et al.** *Journal of Materials Chemistry C*, 2016, vol. 4, 3119-3124